(19) Europäisches Patentamt
European Patent Office
Office européen des brevets

(11) **EP 4 004 770 B1**

(12) **EUROPEAN PATENT SPECIFICATION**

(45) Date of publication and mention
of the grant of the patent:
**08.01.2025  Bulletin 2025/02**

(21) Application number: **20848238.0**

(22) Date of filing: **13.05.2020**

(51) International Patent Classification (IPC):
**G06F 17/10** (2006.01)          **B60W 30/09** (2012.01)
**B60W 30/095** (2012.01)        **B60W 60/00** (2020.01)

(52) Cooperative Patent Classification (CPC):
**B60W 60/0015; B60W 30/09; B60W 30/0956;
B60W 60/0011; B60W 60/0017; B60W 60/00272;
B60W 60/00274;** B60W 2530/10; B60W 2552/53;
B60W 2554/4029; B60W 2554/4045;
B60W 2554/4049; B60W 2556/50; B60W 2754/20;
B60W 2754/30

(86) International application number:
**PCT/US2020/032608**

(87) International publication number:
**WO 2021/021269 (04.02.2021 Gazette 2021/05)**

(54) **CONTINGENCY PLANNING AND SAFETY ASSURANCE**

KONTINGENZPLANUNG UND SICHERHEITSGEWÄHRLEISTUNG

PLANIFICATION DE MESURES D'URGENCE ET ASSURANCE DE SÉCURITÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **31.07.2019  US 201916528204**

(43) Date of publication of application:
**01.06.2022  Bulletin 2022/22**

(73) Proprietors:
• **Nissan North America, Inc.
Franklin, TN 37067 (US)**
• **Renault s.a.s
92100 Boulogne Billancourt (FR)**

(72) Inventors:
• **OSTAFEW, Christopher
Farmington Hills, Michigan 48331 (US)**

• **CYPHER-PLISSART, Therese
Farmington Hills, Michigan 48331 (US)**
• **TAM, Qizhan
Farmington Hills, Michigan 48331 (US)**
• **KOBASHI, Atsuhide
Farmington Hills, Michigan 48331 (US)**
• **PEDERSEN, Liam
Farmington Hills, Michigan 48331 (US)**

(74) Representative: **Osha BWB
2, rue de la Paix
75002 Paris (FR)**

(56) References cited:
**EP-A1- 3 091 370          EP-A1- 3 611 069
WO-A1-2018/225575      DE-A1- 102010 038 970
US-A1- 2009 254 235     US-A1- 2010 026 555
US-A1- 2010 235 033     US-A1- 2017 336 795
US-A1- 2018 151 075     US-A1- 2018 154 723
US-A1- 2018 286 248     US-B1- 9 440 647**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

This invention relates to autonomous vehicles, including methods, apparatuses, systems, and non-transitory computer-readable media for trajectory planning for autonomous vehicles.

BACKGROUND

Increasing autonomous vehicle usage creates the potential for more efficient movement of passengers and cargo through a transportation network. Moreover, the use of autonomous vehicles can result in improved vehicle safety and more effective communication between vehicles. However, it is critical that autonomous vehicles can detect static objects and/or predict the trajectories of other nearby dynamic objects to plan a trajectory such that autonomous vehicles can safely traverse the transportation network and avoid such objects. Patent documents US 20170336795A1 and WO 2018225575A1 disclose vehicle control devices. EP-A-3 091 370 discloses a driving control method and apparatus adding virtual obstacles and considering hypothetical events.

SUMMARY

A method and a system for contingency planning for an autonomous vehicle, according to the invention, are defined by the appended independent claims. Specific embodiments are defined by the dependent claims.
Disclosed herein are aspects, features, elements, and implementations for contingency planning and safety assurance.
An aspect of the disclosed implementations is a method for contingency planning for an autonomous vehicle (AV). The method, which is outside the subject-matter of the claims, includes determining a nominal trajectory for the AV; detecting a hazard object that does not intrude into a path of the AV at a time of the detecting the hazard object; determining a hazard zone for the hazard object; determining a time of arrival of the AV at the hazard zone; determining a contingency trajectory for the AV; controlling the AV according to the contingency trajectory; and, in response to the hazard object intruding into the path of the AV, controlling the AV to perform a maneuver to avoid the hazard object. The contingency trajectory includes at least one of a lateral contingency or a longitudinal contingency. The contingency trajectory is determined using the time of arrival of the AV at the hazard zone.
A method for contingency planning for an autonomous vehicle (AV) according to the claimed invention includes determining a trajectory and a desired speed plan for the AV; identifying a likelihood of an object at an obscured location along the trajectory; identifying a farthest visible location along the trajectory, wherein the farthest visible location is a location along the trajectory such that the AV would be capable of detecting the object at said location; determining an appropriate maximum deceleration to be used in the case the object is detected at the obscured location; determining a target deceleration for the AV, wherein operating the AV according to the target deceleration guarantees that if the object were detected at the obscured location, the AV would be capable of stopping in time using the appropriate maximum deceleration; and in response to determining that the object is at the obscure location, operating the AV according to an appropriate deceleration of the AV that is less than or equal to the appropriate maximum deceleration. The appropriate maximum deceleration can be set based on a passenger preference, based on the maneuverability capabilities of the AV, based on a motion model of the AV, other factors, or a combination thereof.
An aspect of the disclosed implementations is a system for contingency planning for an autonomous vehicle (AV). The system, which is outside the subject-matter of the claims, includes a memory and a processor, the memory including instructions executable by the processor to detect a hazard object that does not intrude into a path of the AV at a time of the detecting the hazard object; determine a hazard zone for the hazard object; determine a time of arrival of the AV at the hazard zone; determine a contingency trajectory for the AV; control the AV according to the contingency trajectory; and in response to the hazard object intruding into the path of the AV, control the AV to perform a maneuver to avoid the hazard object. The contingency trajectory includes at least one of a lateral contingency or a longitudinal contingency.
These and other aspects of the present disclosure are disclosed in the following detailed description, the appended claims, and the accompanying figures.

BRIEF DESCRIPTION OF THE DRAWINGS

The disclosed technology is best understood from the following detailed description when read in conjunction with the accompanying drawings. It is emphasized that, according to common practice, the various features of the drawings may not be to scale. On the contrary, the dimensions of the various features may be arbitrarily expanded or reduced for clarity. Further, like reference numbers refer to like elements throughout the drawings unless otherwise noted.

FIG. 1 is a diagram of an example of a portion of a vehicle in which the aspects, features, and elements disclosed herein may be implemented.

FIG. 2 is a diagram of an example of a portion of a vehicle transportation and communication system in which the aspects, features, and elements disclosed herein may be implemented.

FIG. 3 is a diagram of situations of predictable responses according to implementations of this disclosure.

FIG. 4 is an example of components of a system for an autonomous vehicle according to implementations of this disclosure.

FIG. 5 is an example of layers of a trajectory planner for an autonomous vehicle according to implementations of this disclosure.

FIG. 6 is an illustration of examples of coarse-driveline concatenation according to implementations of this disclosure.

FIG. 7 is an example of determining a strategic speed plan according to implementations of this disclosure.

FIG. 8 is a flowchart diagram of a process for determining a drivable area and a discrete-time speed plan in accordance with an implementation of this disclosure.

FIG. 9 is an illustration of determining a drivable area and a discrete-time speed plan in accordance with implementations of this disclosure.

FIGS. 10-12 are examples of adjusting a drivable area for static objects in accordance with implementations of this disclosure.

FIG. 13 is a flowchart diagram of a process for determining static boundaries in accordance with the present disclosure.

FIGS. 14-16 are examples of determining dynamic boundaries in accordance with implementations of this disclosure.

FIG. 17 illustrates additional examples of trajectory planning in accordance with implementations of this disclosure.

FIG. 18 is a flowchart diagram of a process for object avoidance in accordance with the present disclosure.

FIG. 19 are illustrative examples of path planning according to implementations of this disclosure.

FIG. 20 is an example of a definition of a hazard zone according to implementations of this disclosure.

FIGS. 21A-21E are illustrations of examples of contingency planning according to implementations of this disclosure.

FIG. 22 is a diagram illustrating modules of a system for contingency planning according to implementation of this disclosure.

FIG. 23 is a flowchart diagram of a process for contingency planning for an autonomous vehicle (AV) according to implementations of this disclosure.

FIG. 24 is an example of a scene that includes occluded objects.

FIG. 25 is an illustration of contingency planning for potentially occluded objects according to implementations of this disclosure.

FIG. 26 is a flowchart diagram of a process for contingency planning for an autonomous vehicle (AV) according to implementations of this disclosure. Figures 24 to 26 fall within the subject-matter of the claims.

DETAILED DESCRIPTION

A vehicle, such as an autonomous vehicle or a semi-autonomous vehicle, may traverse a portion of a vehicle transportation network. The vehicle transportation network can include one or more unnavigable areas, such as a building; one or more partially navigable areas, such as a parking area (e.g., a parking lot, a parking space, etc.); one or more navigable areas, such as roads (which include lanes, medians, intersections, etc.); or a combination thereof.

The vehicle may include one or more sensors. Traversing the vehicle transportation network may include the sensors generating or capturing sensor data, such as data corresponding to an operational environment of the vehicle, or a portion thereof. For example, the sensor data may include information corresponding to one or more external objects (or simply, objects).

An external object can be a static object. A static object is one that is stationary and is not expected to move in the next few seconds. Examples of static objects include a bike with no rider, a cold vehicle, an empty vehicle, a road sign, a wall, a building, a pothole, etc.

An external object can be a stopped object. A stopped object is one that is stationary but might move at any time. Examples of stopped objects include a vehicle that is stopped at a traffic light and a vehicle on the side of the road with an occupant (e.g., a driver) therein. In some implementations, stopped objects are considered static objects.

An external object can be a dynamic (i.e., moving) object, such as a pedestrian, a remote vehicle, a motorcycle, a bicycle, etc. The dynamic object can be oncoming (toward the vehicle) or can be moving in the same direction as the vehicle. The dynamic object can be moving longitudinally or laterally with respect to the vehicle. A static object can become a dynamic object, and vice versa.

In general, traversing (e.g., driving within) the vehicle transportation network can be considered a robotic behavior. That is, predictable responses by a vehicle to certain situations (e.g., traffic or road situations) can be anticipated. For example, an observer of a traffic situation can anticipate what the response of a vehicle will be over the next few seconds. That is, for example, while the driving environment (i.e., the vehicle transportation network, the roadways) may be dynamic, the response, such as by a vehicle (i.e., driven by a human, remotely operated, etc.), to a road condition, can be predicted/anticipated.

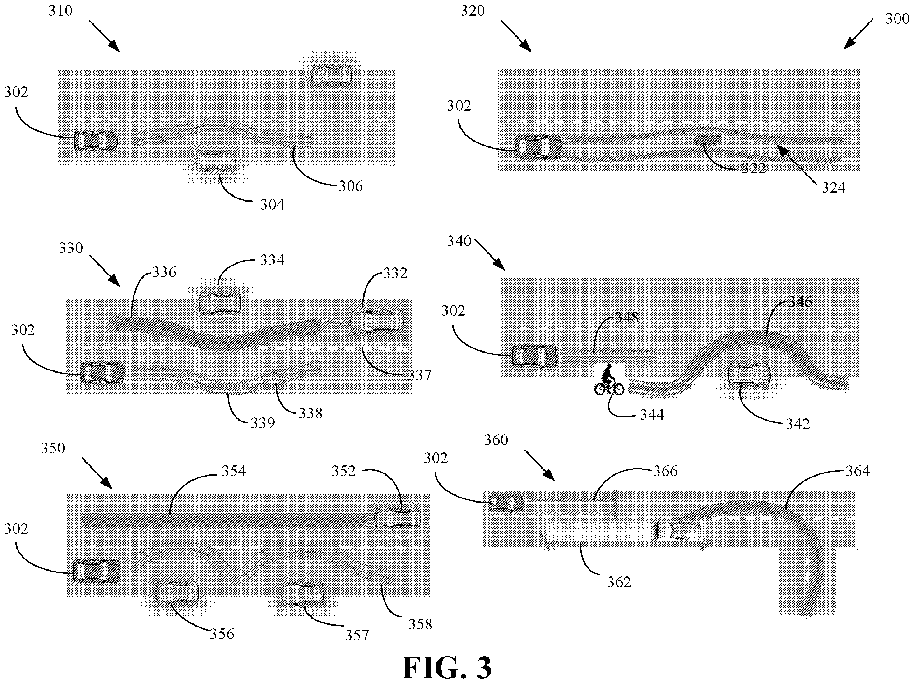

The response(s) can be predicted because traversing a vehicle transportation network is governed by rules of the road (e.g., a vehicle turning left must yield to oncoming traffic, a vehicle must drive between a lane's markings), by social conventions (e.g., at a stop sign, the driver on the right is yielded to), and physical limitations (e.g., a stationary object does not instantaneously move laterally into a vehicle's right of way). Additional examples of predictable responses are illustrated with respect to FIG. 3.

Implementations according to this disclosure determine a trajectory for an autonomous vehicle by detecting (e.g., sensing, observing, etc.) the presence of static objects and anticipating (i.e., predicting) the trajectories of other users of the vehicle transportation network (e.g., road users, dynamic objects). Implementations according to this disclosure can accurately and efficiently plan trajectories of dynamic objects (e.g., other road users) contributing to smooth control (e.g., stop, wait, accelerate, decelerate, merge, etc.) of an autonomous vehicle and socially acceptable behavior (e.g., operations) of the autonomous vehicle.

As further described below, implementations of a trajectory planner according to this disclosure can generate a smooth trajectory for an autonomous vehicle (AV), from a source location to a destination location, by, for example, receiving HD map data, teleoperation data, and other input data; stitching (e.g., fusing, connecting, etc.) the input data longitudinally to determine a speed profile for a path from the source location to the destination location (e.g., the speed profile specifying how fast the AV can be driven along different segments of the path from the source location to the destination location); and, at discrete time points (e.g., every few milliseconds), having the trajectory planner process constraints related to static and dynamic objects, which are observed based on sensor data of the AV, to generate a smooth trajectory for the AV for the next time window (e.g., a look-ahead time of 6 seconds).

As mentioned above, a smooth trajectory can be planned for an autonomous vehicle by anticipating the actions (e.g., trajectories, behaviors/intentions, etc.) of other road users. Planning trajectories that anticipate the actions of other users can be fundamental to ensuring the safety of the autonomous vehicle and the other road users. A common solution to ensuring the safety of the autonomous vehicle and/or the other users is to have the AV act (both proactively and reactively) in response to all perceived and predicted conflicts.

As trajectory planning depends on (e.g., is based on) sensor data. However, observation and/or prediction uncertainty may be associated with the sensor data and/or the processing of the sensor data. Observation or prediction uncertainty can arise due to the sensor data themselves, classification uncertainty, hypotheses (intention) uncertainty, actual indecision, occlusions, other reasons for the uncertainty, or a combination thereof. For example, with respect to the sensor data themselves, the sensor data can be affected by weather conditions, accuracy of the sensors, and/or faults in the sensors; with respect to classification uncertainty, a world object may be classified as a car, a bike, a pedestrian, etc., when in fact it is some other class of object; with respect to intentions estimation, it may not be known whether a road user is turning left or going straight; with respect to actual indecision, a road user can actually change its mind unexpectedly; with respect to occlusions, the sensors of the AV may not be able to detect objects that are behind other objects. As such, the planned trajectory may be based on false positives, noise in the sensor data, and other uncertainties.

Responding to all sensor data can lead to either unnatural (e.g., uncomfortable, jarring, etc.) driving behavior or paralysis (e.g., an inability of the algorithms of the AV to resolve and/or react to perceived and/or predicted conflicts). It has been discovered that trajectory planning that reacts to (e.g., adjusts for, etc.) every possible perceived (erroneously or otherwise) world object and/or intention of the world object, can lead to unpleasant drives for occupants of the AV.

To mitigate issues associated with perceived hazards, perceived world objects, and/or anticipate intentions of the perceived world objects, implementations accordingly to this disclosure can use contingency planning to robustly handle uncertainty. Contingency planning can guarantee the safety of an AV while simultaneously maintaining the comfort of an occupant of the AV. Contingency planning allows a planning system (such as a trajectory planning system) of an AV to partially defer action with respect to uncertain observations or predictions. In an example, how much of an action can be deferred can be based on the likelihood of said observations or predictions and/or the emergency maneuver capabilities of the AV.

To illustrate the contingency planning, a non-limiting example is now provided. Assume that based on sensor inputs, a parked vehicle is identified ahead of the AV and along the trajectory of the AV. The AV (i.e., a module therein) identifies that the door of the parked vehicle could open. The trajectory planner of the AV can calculate a contingency trajectory such that the AV need not necessarily move over right away to avoid the door being opened in the future; rather, the contingency trajectory can be such that the AV moves over just enough so that, if the door did open, an emergency maneuver could still be performed in time to guarantee that the AV can avoid a collision with the door.

As further described below, contingency planning can rely on lateral (e.g., steering), longitudinal (e.g., speed) contingencies, or a combination thereof. Said another way, a contingency plan can include a lateral contingency, a longitudinal contingency, or both. A lateral contingency means a contingency that can require a right or a left steering. A longitudinal contingency means a contingency that can require a change in the speed of an AV. In some situations, the change in the speed can be an increase in the speed. In some other situations, the change in the speed can be a decrease in the speed. While examples of reducing the speed are mainly described herein, it can be appreciated that, in some situations, the longitudinal contingency can be an increase in the speed to, for example, a speed that above the speed limit.

To illustrate, with respect to lateral contingency, for example, if there were a low possibility of a car door of a parked car opening into the path of the AV, then a contingency trajectory can be planned (and executed) to move the AV over slightly and smoothly (while maintaining the comfort of occupants of the AV) such that if the door were to open, an emergency maneuver would still be possible; with respect to longitudinal contingency, for example, if there were a chance of a pedestrian unlawfully walking into the path of the AV such that the AV would need to stop, then a contingency trajectory (e.g., a speed plan) can be planned (and executed) to slow down smoothly (while maintaining the comfort of occupants of the AV) and just enough so that, if the pedestrian were to step out into the path of the AV, an emergency maneuver would be possible.

The advantages of contingency planning can include 1) guaranteeing the safety of the AV regardless of observation and prediction uncertainty, 2) maintaining comfort of an occupant and producing socially acceptable behavior of the AV, 3) providing measured responses based on observation and/or prediction likelihood, and 4) reducing sensor requirements. For example, with respect to producing socially acceptable behavior, the AV need not slow down drastically for every possible interaction. For example, with respect to reducing sensor requirements, because an AV can adjust its responses based on measurement uncertainty, the cost of sensors in the AV can be reduced. For example, a typical AV may include more than 15 cameras, seven LiDAR units, six radar units, 2 GPS receivers, more than four graphics processing units (GPUs), and more than nine processing units. Contrastingly, an AV, which employs contingency planning as described herein so that the planning modules of the AV are more tolerant to uncertainty, may not require more than six cameras, one LiDAR unit, one radar, two GPS receivers, three GPUs, and one processing unit.

Although described herein with reference to an autonomous vehicle, the methods and apparatus described herein may be implemented in any vehicle capable of autonomous or semi-autonomous operation. Although described with reference to a vehicle transportation network, the method and apparatus described herein may include the autonomous vehicle operating in any area navigable by the vehicle.

To describe some implementations of the teachings herein in greater detail, reference is first made to the environment in which this disclosure may be implemented.

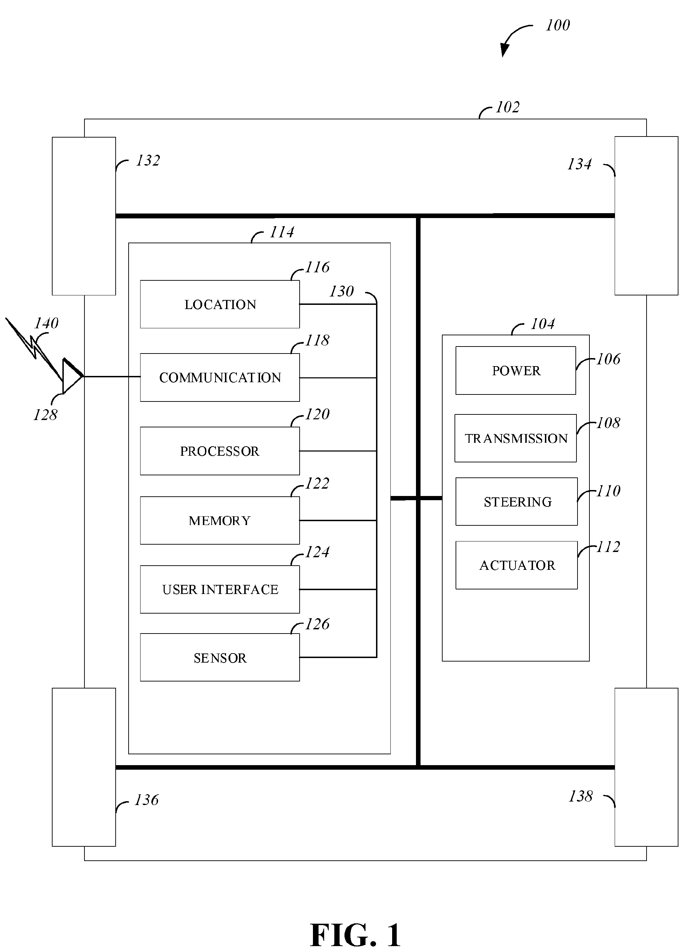

FIG. 1 is a diagram of an example of a portion of a vehicle 100 in which the aspects, features, and elements disclosed herein may be implemented. The vehicle 100 includes a chassis 102, a powertrain 104, a controller 114, wheels 132/134/136/138, and may include any other element or combination of elements of a vehicle. Although the vehicle 100 is shown as including four wheels 132/134/136/138 for simplicity, any other propulsion device or devices, such as a propeller or tread, may be used. In FIG. 1, the lines interconnecting elements, such as the powertrain 104, the controller 114, and the wheels 132/134/136/138, indicate that information, such as data or control signals; power, such as electrical power or torque; or both information and power may be communicated between the respective elements. For example, the controller 114 may receive power from the powertrain 104 and communicate with the powertrain 104, the wheels 132/134/136/138, or both, to control the vehicle 100, which can include accelerating, decelerating, steering, or otherwise controlling the vehicle 100.

The powertrain 104 includes a power source 106, a transmission 108, a steering unit 110, a vehicle actuator 112, and may include any other element or combination of elements of a powertrain, such as a suspension, a drive shaft, axles, or an exhaust system. Although shown separately, the wheels 132/134/136/138 may be included in the powertrain 104.

The power source 106 may be any device or combination of devices operative to provide energy, such as electrical energy, thermal energy, or kinetic energy. For example, the power source 106 includes an engine, such as an internal combustion engine, an electric motor, or a combination of an internal combustion engine and an electric motor, and is operative to provide kinetic energy as a motive force to one or more of the wheels 132/134/136/138. In some embodiments, the power source 106 includes a potential energy unit, such as one or more dry cell batteries, such as nickel-cadmium (NiCd), nickel-zinc (NiZn), nickel metal hydride (NiMH), lithium-ion (Li-ion); solar cells; fuel cells; or any other device capable of providing energy.

The transmission 108 receives energy, such as kinetic energy, from the power source 106 and transmits the energy to the wheels 132/134/136/138 to provide a motive force. The transmission 108 may be controlled by the controller 114, the vehicle actuator 112, or both. The steering unit 110 may be controlled by the controller 114, the vehicle actuator 112, or both and controls the wheels 132/134/136/138 to steer the vehicle. The vehicle actuator 112 may receive signals from the controller 114 and may actuate or control the power source 106, the transmission 108, the steering unit 110, or any combination thereof to operate the vehicle 100.

In the illustrated embodiment, the controller 114 includes a location unit 116, an electronic communication unit 118, a processor 120, a memory 122, a user interface 124, a sensor 126, and an electronic communication interface 128. Although shown as a single unit, any one or more elements of the controller 114 may be integrated into any number of separate physical units. For example, the user interface 124 and the processor 120 may be integrated in a first physical unit, and the memory 122 may be integrated in a second physical unit. Although not shown in FIG. 1, the controller 114 may include a power source, such as a battery. Although shown as separate elements, the location unit 116, the electronic communication unit 118, the processor 120, the memory 122, the user interface 124, the sensor 126, the electronic communication interface 128, or any combination thereof can be integrated in one or more electronic units, circuits, or chips.

In some embodiments, the processor 120 includes any device or combination of devices, now-existing or hereafter developed, capable of manipulating or processing a signal or other information, for example optical processors, quantum processors, molecular processors, or a combination thereof. For example, the processor 120 may include one or more special-purpose processors, one or more digital signal processors, one or more microprocessors, one or more controllers, one or more microcontrollers, one or more integrated circuits, one or more Application Specific Integrated Circuits, one or more Field Programmable Gate Arrays, one or more programmable logic arrays, one or more programmable logic controllers, one or more state machines, or any combination thereof. The processor 120 may be operatively coupled with the location unit 116, the memory 122, the electronic communication interface 128, the electronic communication unit 118, the user interface 124, the sensor 126, the powertrain 104, or any combination thereof. For example, the processor may be operatively coupled with the memory 122 via a communication bus 130.

The processor 120 may be configured to execute instructions. Such instructions may include instructions for remote operation, which may be used to operate the vehicle 100 from a remote location, including the operations center. The instructions for remote operation may be stored in the vehicle 100 or received from an external source, such as a traffic management center, or server computing devices, which may include cloud-based server computing devices. Remote operation was introduced in U.S. provisional patent application Ser. No. 62/633,414, filed February 21, 2018, and entitled "REMOTE OPERATION EXTENDING AN EXISTING ROUTE TO A DESTINATION."

The memory 122 may include any tangible non-transitory computer-usable or computer-readable medium capable of, for example, containing, storing, communicating, or transporting machine-readable instructions or any information associated therewith, for use by or in connection with the processor 120. The memory 122 may include, for example, one or more solid state drives, one or more memory cards, one or more removable media, one or more read-only memories (ROM), one or more random-access memories (RAM), one or more registers, one or more low power double data rate (LPDDR) memories, one or more cache memories, one or more disks (including a hard disk, a floppy disk, or an optical disk), a magnetic or optical card, or any type of non-transitory media suitable for storing electronic information, or any combination thereof.

The electronic communication interface 128 may be a wireless antenna, as shown, a wired communication port, an optical communication port, or any other wired or wireless unit capable of interfacing with a wired or wireless electronic communication medium 140.

The electronic communication unit 118 may be configured to transmit or receive signals via the wired or wireless electronic communication medium 140, such as via the electronic communication interface 128. Although not explicitly shown in FIG. 1, the electronic communication unit 118 is configured to transmit, receive, or both via any wired or wireless communication medium, such as radio frequency (RF), ultra violet (UV), visible light, fiber optic, wire line, or a combination thereof. Although FIG. 1 shows a single one of the electronic communication unit 118 and a single one of the electronic communication interface 128, any number of communication units and any number of communication interfaces may be used. In some embodiments, the electronic communication unit 118 can include a dedicated short-range communications (DSRC) unit, a wireless safety unit (WSU), IEEE 802.11p (WiFi-P), or a combination thereof.

The location unit 116 may determine geolocation information, including but not limited to longitude, latitude, elevation, direction of travel, or speed, of the vehicle 100. For example, the location unit includes a global positioning system (GPS) unit, such as a Wide Area Augmentation System (WAAS) enabled National Marine Electronics Association (NMEA) unit, a radio triangulation unit, or a combination thereof. The location unit 116 can be used to obtain information that represents, for example, a current heading of the vehicle 100, a current position of the vehicle 100 in two or three dimensions, a current angular orientation of the vehicle 100, or a combination thereof.

The user interface 124 may include any unit capable of being used as an interface by a person, including any of a virtual keypad, a physical keypad, a touchpad, a display, a touchscreen, a speaker, a microphone, a video camera, a sensor, and a printer. The user interface 124 may be operatively coupled with the processor 120, as shown, or with any other element of the controller 114. Although shown as a single unit, the user interface 124 can include one or more physical units. For example, the user interface 124 includes an audio interface for performing audio communication with a person, and a touch display for performing visual and touch-based communication with the person.

The sensor 126 may include one or more sensors, such as an array of sensors, which may be operable to provide information that may be used to control the vehicle. The sensor 126 can provide information regarding current operating characteristics of the vehicle or its surroundings. The sensor 126 includes, for example, a speed sensor, acceleration sensors, a steering angle sensor, traction-related sensors, braking-related sensors, or any sensor, or combination of sensors, that is operable to report information regarding some aspect of the current dynamic situation of the vehicle 100.

In some embodiments, the sensor 126 includes sensors that are operable to obtain information regarding the physical environment surrounding the vehicle 100. For example, one or more sensors detect road geometry and obstacles, such as fixed obstacles, vehicles, cyclists, and pedestrians. The sensor 126 can be or include one or more video cameras, laser-sensing systems, infrared-sensing systems, acoustic-sensing systems, or any other suitable type of on-vehicle environmental sensing device, or combination of devices, now known or later developed. The sensor 126 and the location unit 116 may be combined.

Although not shown separately, the vehicle 100 may include a trajectory controller. For example, the controller 114 may include a trajectory controller. The trajectory controller may be operable to obtain information describing a current state of the vehicle 100 and a route planned for the vehicle 100, and, based on this information, to determine and optimize a trajectory for the vehicle 100. In some embodiments, the trajectory controller outputs signals operable to control the vehicle 100 such that the vehicle 100 follows the trajectory that is determined by the trajectory controller. For example, the output of the trajectory controller can be an optimized trajectory that may be supplied to the powertrain 104, the wheels 132/134/136/138, or both. The optimized trajectory can be a control input, such as a set of steering angles, with each steering angle corresponding to a point in time or a position. The optimized trajectory can be one or more paths, lines, curves, or a combination thereof.

One or more of the wheels 132/134/136/138 may be a steered wheel, which is pivoted to a steering angle under control of the steering unit 110; a propelled wheel, which is torqued to propel the vehicle 100 under control of the transmission 108; or a steered and propelled wheel that steers and propels the vehicle 100.

A vehicle may include units or elements not shown in FIG. 1, such as an enclosure, a Bluetooth® module, a frequency modulated (FM) radio unit, a Near-Field Communication (NFC) module, a liquid crystal display (LCD) display unit, an organic light-emitting diode (OLED) display unit, a speaker, or any combination thereof.

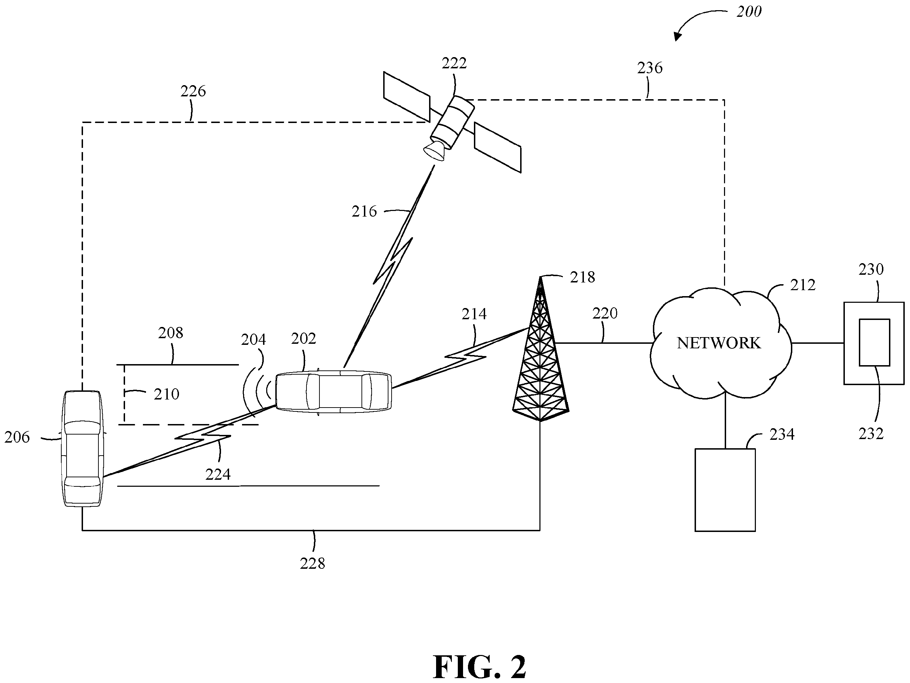

FIG. 2 is a diagram of an example of a portion of a vehicle transportation and communication system 200 in which the aspects, features, and elements disclosed herein may be implemented. The vehicle transportation and communication system 200 includes a vehicle 202, such as the vehicle 100 shown in FIG. 1, and one or more external objects, such as an external object 206, which can include any form of transportation, such as the vehicle 100 shown in FIG. 1, a pedestrian, cyclist, as well as any form of a structure, such as a building. The vehicle 202 may travel via one or more portions of a transportation network 208, and may communicate with the external object 206 via one or more of an electronic communication network 212. Although not explicitly shown in FIG. 2, a vehicle may traverse an area that is not expressly or completely included in a transportation network, such as an off-road area. In some embodiments, the transportation network 208 may include one or more of a vehicle detection sensor 210, such as an inductive loop sensor, which may be used to detect the movement of vehicles on the transportation network 208.

The electronic communication network 212 may be a multiple access system that provides for communication, such as voice communication, data communication, video communication, messaging communication, or a combination thereof, between the vehicle 202, the external object 206, and an operations center 230. For example, the vehicle 202 or the external object 206 may receive information, such as information representing the transportation network 208, from the operations center 230 via the electronic communication network 212.

The operations center 230 includes a controller apparatus 232, which includes some or all of the features of the controller 114 shown in FIG. 1. The controller apparatus 232 can monitor and coordinate the movement of vehicles, including autonomous vehicles. The controller apparatus 232 may monitor the state or condition of vehicles, such as the vehicle 202, and external objects, such as the external object 206. The controller apparatus 232 can receive vehicle data and infrastructure data including any of: vehicle velocity; vehicle location; vehicle operational state; vehicle destination; vehicle route; vehicle sensor data; external object velocity; external object location; external object operational state; external object destination; external object route; and external object sensor data.

Further, the controller apparatus 232 can establish remote control over one or more vehicles, such as the vehicle 202, or external objects, such as the external object 206. In this way, the controller apparatus 232 may teleoperate the vehicles or external objects from a remote location. The controller apparatus 232 may exchange (send or receive) state data with vehicles, external objects, or a computing device, such as the vehicle 202, the external object 206, or a server computing device 234, via a wireless communication link, such as the wireless communication link 226, or a wired communication link, such as the wired communication link 228.

The server computing device 234 may include one or more server computing devices, which may exchange (send or receive) state signal data with one or more vehicles or computing devices, including the vehicle 202, the external object 206, or the operations center 230, via the electronic communication network 212.

In some embodiments, the vehicle 202 or the external object 206 communicates via the wired communication link 228, a wireless communication link 214/216/224, or a combination of any number or types of wired or wireless communication links. For example, as shown, the vehicle 202 or the external object 206 communicates via a terrestrial wireless communication link 214, via a non-terrestrial wireless communication link 216, or via a combination thereof. In some implementations, a terrestrial wireless communication link 214 includes an Ethernet link, a serial link, a Bluetooth link, an infrared (IR) link, an ultraviolet (UV) link, or any link capable of electronic communication.

A vehicle, such as the vehicle 202, or an external object, such as the external object 206, may communicate with another vehicle, external object, or the operations center 230. For example, a host, or subject, vehicle 202 may receive one or more automated inter-vehicle messages, such as a basic safety message (BSM), from the operations center 230 via a direct communication link 224 or via an electronic communication network 212. For example, the operations center 230 may broadcast the message to host vehicles within a defined broadcast range, such as three hundred meters, or to a defined geographical area. In some embodiments, the vehicle 202 receives a message via a third party, such as a signal repeater (not shown) or another remote vehicle (not shown). In some embodiments, the vehicle 202 or the external object 206 transmits one or more automated inter-vehicle messages periodically based on a defined interval, such as one hundred milliseconds.

The vehicle 202 may communicate with the electronic communication network 212 via an access point 218. The access point 218, which may include a computing device, is configured to communicate with the vehicle 202, with the electronic communication network 212, with the operations center 230, or with a combination thereof via wired or wireless communication links 214/220. For example, an access point 218 is a base station, a base transceiver station (BTS), a Node-B, an enhanced Node-B (eNode-B), a Home Node-B (HNode-B), a wireless router, a wired router, a hub, a relay, a switch, or any similar wired or wireless device. Although shown as a single unit, an access point can include any number of interconnected elements.

The vehicle 202 may communicate with the electronic communication network 212 via a satellite 222 or other non-terrestrial communication device. The satellite 222, which may include a computing device, may be configured to communicate with the vehicle 202, with the electronic communication network 212, with the operations center 230, or with a combination thereof via one or more communication links 216/236. Although shown as a single unit, a satellite can include any number of interconnected elements.

The electronic communication network 212 may be any type of network configured to provide for voice, data, or any other type of electronic communication. For example, the electronic communication network 212 includes a local area network (LAN), a wide area network (WAN), a virtual private network (VPN), a mobile or cellular telephone network, the Internet, or any other electronic communication system. The electronic communication network 212 may use a communication protocol, such as the Transmission Control Protocol (TCP), the User Datagram Protocol (UDP), the Internet Protocol (IP), the Real-time Transport Protocol (RTP), the Hyper Text Transport Protocol (HTTP), or a combination thereof. Although shown as a single unit, an electronic communication network can include any number of interconnected elements.

In some embodiments, the vehicle 202 communicates with the operations center 230 via the electronic communication network 212, access point 218, or satellite 222. The operations center 230 may include one or more computing devices, which are able to exchange (send or receive) data from a vehicle, such as the vehicle 202; data from external objects, including the external object 206; or data from a computing device, such as the server computing device 234.

In some embodiments, the vehicle 202 identifies a portion or condition of the transportation network 208. For example, the vehicle 202 may include one or more on-vehicle sensors 204, such as the sensor 126 shown in FIG. 1, which includes a speed sensor, a wheel speed sensor, a camera, a gyroscope, an optical sensor, a laser sensor, a radar sensor, a sonic sensor, or any other sensor or device or combination thereof capable of determining or identifying a portion or condition of the transportation network 208.

The vehicle 202 may traverse one or more portions of the transportation network 208 using information communicated via the electronic communication network 212, such as information representing the transportation network 208, information identified by one or more on-vehicle sensors 204, or a combination thereof. The external object 206 may be capable of all or some of the communications and actions described above with respect to the vehicle 202.

For simplicity, FIG. 2 shows the vehicle 202 as the host vehicle, the external object 206, the transportation network 208, the electronic communication network 212, and the operations center 230. However, any number of vehicles, networks, or computing devices may be used. In some embodiments, the vehicle transportation and communication system 200 includes devices, units, or elements not shown in FIG. 2.

Although the vehicle 202 is shown communicating with the operations center 230 via the electronic communication network 212, the vehicle 202 (and the external object 206) may communicate with the operations center 230 via any number of direct or indirect communication links. For example, the vehicle 202 or the external object 206 may communicate with the operations center 230 via a direct communication link, such as a Bluetooth communication link. Although, for simplicity, FIG. 2 shows one of the transportation network 208 and one of the electronic communication network 212, any number of networks or communication devices may be used.

The external object 206 is illustrated as a second, remote vehicle in FIG. 2. An external object is not limited to another vehicle. An external object may be any infrastructure element, for example, a fence, a sign, a building, etc., that has the ability transmit data to the operations center 230. The data may be, for example, sensor data from the infrastructure element.

FIG. 3 is a diagram of situations 300 of predictable responses according to implementations of this disclosure. The situations 300 include situations 310-360 in which responses of an autonomous vehicle (AV) 302 can be predicted and a trajectory planned.

The situations 300 represent examples of predictable situations and responses of road users. The situations take place (e.g., happen, occur, etc.) at a slow time scale. That is, even if the AV 302 might be going at a high speed, e.g., 97 kilometers per hour (km/h) (60 miles per hour (MPH)), the situations 310-360 are considered to be slow scenarios because, due to the computing power (e.g., the computing power of a processor, such as the processor 120 of FIG. 1, and/or a controller, such as the controller 114 of FIG. 1) of the AV 302, predicting responses of external objects and determining a trajectory for the autonomous vehicle can be accomplished within a sub-second of elapsed time.

The AV 302 can include a world modeling module, which can track at least some detected external objects. The world modeling module can predict one or more potential hypotheses (i.e., trajectories, paths, or the like) for each tracked object of at least some of the tracked objects. The AV 302 can include a trajectory planning system (or, simply, a trajectory planner) that can be executed by a processor to generate (considering an initial state, desired actions, and at least some tracked objects with predicted trajectories) a collision-avoiding, law-abiding, comfortable response (e.g., trajectory, path, etc.).

In the situation 310, the AV 302 detects (i.e., by the tracking component) a parked car 304 (i.e., a static object) at the side of the road. The AV 302 (i.e., the trajectory planner of the AV 302) can plan a path (i.e., a trajectory), as further described below, that navigates the AV 302 around the parked car 304, as shown by a trajectory 306.

The situation 320 is another situation where the AV 302 detects another static object. The detected static object is a pothole 322. The AV 302 can plan a trajectory 324 such that the AV 302 drives over the pothole 322 in a way that none of the tires of the AV 302 drive into the pothole 322.

In the situation 330, the AV 302 detects an oncoming vehicle 332 and a parked vehicle 334 that is on the same side of the road as the oncoming vehicle 332. The oncoming vehicle 332 is moving. As such, the oncoming vehicle 332 is a dynamic object. The oncoming vehicle 332 is moving in the same (or at least substantially the same) longitudinal direction as the AV 302. As such, the oncoming vehicle 332 can be classified as a longitudinal constraint, as further described below. The oncoming vehicle 332 is moving in the direction opposite that of the AV 302. As such, the oncoming vehicle 332 can be classified as an oncoming longitudinal constraint. The parked vehicle 334 is a static object.

The AV 302 can predict (i.e., by the prediction component), with a certain degree of certainty that exceeds a threshold, that the oncoming vehicle 332 is likely to follow a trajectory 336 in order to avoid (e.g., get around) the parked vehicle 334. The trajectory 336 overlaps a centerline 337 of the road. In order to keep a safe distance from the oncoming vehicle 332, the trajectory planner of the AV 302 can plan a trajectory 338 that includes a curvature at location 339. That is, the planned trajectory of the AV 302 moves the AV 302 to the right in anticipation of the route of the oncoming vehicle 332.

In the situation 340, the tracking component of the AV 302 can detect a parked vehicle 342 (i.e., a static object) and a bicycle 344 that is moving (i.e., a dynamic object that is a longitudinal constraint). The prediction component may determine, with a certain degree of certainty, that the bicycle 344 will follow a trajectory 346 to get around the parked vehicle 342. As such, the AV 302 determines (i.e., plans, calculates, selects, generates, or otherwise determines) a trajectory 348 such that the AV 302 stops after a certain distance to allow the bicycle 344 to pass the parked vehicle 342. In another example, the AV 302 can determine more than one possible trajectory. For example, the AV 302 can determine a first trajectory as described above, a second trajectory whereby the AV 302 accelerates to pass the bicycle 344 before the bicycle 344 passes the parked car, and a third trajectory whereby the AV 302 passes around the bicycle 344 as the bicycle 344 is passing the parked vehicle 342. The trajectory planner then selects one of the determined possible trajectories.

In the situation 350, the tracking component of the AV 302 detects an oncoming vehicle 352, a first parked vehicle 356, and a second parked vehicle 357. The prediction component of the AV 302 determines that the oncoming vehicle 352 is following a trajectory 354. The AV 302 selects a trajectory 358 such that the AV 302 passes the first parked vehicle 356, waits between the first parked vehicle 356 and the second parked vehicle 357 until the oncoming vehicle 352 passes, and then proceeds to pass the second parked vehicle 357.

In the situation 360, the prediction component of the AV 302 determines that a large truck 362 is most likely turning right. The trajectory planner determines (e.g., based on a motion model of a large truck) that, since a large truck requires a large turning radius, the large truck 362 is likely to follow a trajectory 364. As the trajectory 364 interferes with the path of the AV 302, the trajectory planner of the AV 302 determines a trajectory 366 for the AV 302, such that the AV 302 is brought to a stop until the large truck 362 is out of the way.

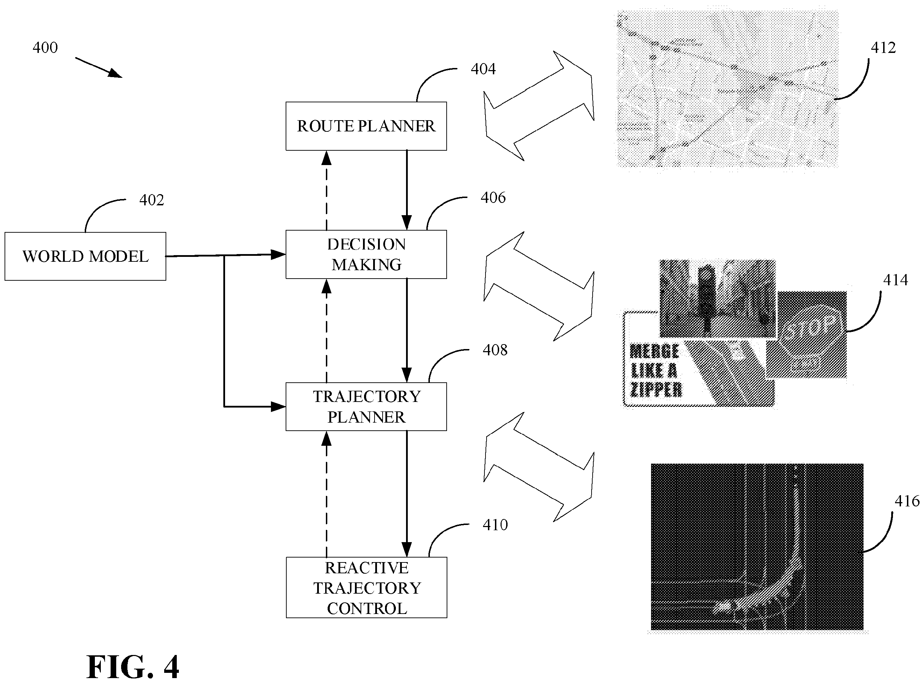

FIG. 4 is an example of components of a system 400 for an autonomous vehicle according to implementations of this disclosure. The system 400 represents a software pipeline of an autonomous vehicle, such as the vehicle 100 of FIG. 1. The system 400 includes a world model module 402, a route planning module 404, a decision making module 406, a trajectory planner 408, and a reactive trajectory control module 410. Other examples of the system 400 can include more, fewer, or other modules. In some examples, the modules can be combined; in other examples, a module can be divided into one or more other modules.

The world model module 402 receives sensor data, such as from the sensor 126 of FIG. 1, and determines (e.g., converts to, detects, etc.) objects from the sensor data. That is, for example, the world model module 402 determines the road users from the received sensor data. For example, the world model module 402 can convert a point cloud received from a light detection and ranging (LiDAR) sensor (i.e., a sensor of the sensor 126) into an object. Sensor data from several sensors can be fused together to determine (e.g., guess the identity of) the objects. Examples of objects include a bicycle, a pedestrian, a vehicle, etc.

The world model module 402 can receive sensor information that allows the world model module 402 to calculate and maintain additional information for at least some of the detected objects. For example, the world model module 402 can maintain a state for at least some of the determined objects. For example, the state for an object can include zero or more of a velocity, a pose, a geometry (such as width, height, and depth), a classification (e.g., bicycle, large truck, pedestrian, road sign, etc.), and a location. As such, the state of an object includes discrete state information (e.g., classification) and continuous state information (e.g., pose and velocity).

The world model module 402 fuses sensor information, tracks objects, maintains lists of hypotheses for at least some of the dynamic objects (e.g., an object A might be going straight, turning right, or turning left), creates and maintains predicted trajectories for each hypothesis, and maintains likelihood estimates of each hypothesis (e.g., object A is going straight with probability 90% considering the object pose/velocity and the trajectory poses/velocities). In an example, the world model module 402 uses an instance of the trajectory planner to generate the predicted trajectories for each object hypothesis for at least some of the dynamic objects. For example, an instance of the trajectory planner can be used to generate predicted trajectories for vehicles, bicycles, and pedestrians. In another example, an instance of the trajectory planner can be used to generate predicted trajectories for vehicles and bicycles, and a different method can be used to generate predicted trajectories for pedestrians.

The objects maintained by the world model module 402 can include static objects and/or dynamic objects, as described with respect to FIG. 3.

The route planning module 404 determines a road-level plan, such as illustrated with respect to a road-level plan 412. For example, given a starting location and a destination location, the route planning module 404 determines a route from the starting location to the destination location. For example, the route planning module 404 can determine the list of roads (i.e., the road-level plan) to be followed by the AV to navigate from the starting location to the destination location.

The road-level plan determined by the route planning module 404 and the objects (and corresponding state information) maintained by the world model module 402 can be used by the decision making module 406 to determine discrete-level decisions along the road-level plan. An example of decisions included in the discrete-level decisions is illustrated with respect to discrete decisions 414. An example of discrete-level decisions may include: stop at the interaction between road A and road B, move forward slowly, accelerate to a certain speed limit, merge onto the rightmost lane, etc.

The trajectory planner 408 can receive the discrete-level decisions, the objects (and corresponding state information) maintained by the world model module 402, and the predicted trajectories and likelihoods of the external objects from the world model module 402. The trajectory planner 408 can use at least some of the received information to determine a detailed-planned trajectory for the autonomous vehicle.

For example, as illustrated with respect to a detailed-planned trajectory 416, the trajectory planner 408 determines a next-few-seconds trajectory. As such, and in an example where the next few seconds are the next 6 seconds (i.e., a look-ahead time of 6 seconds), the trajectory planner 408 determines a trajectory and locations for the autonomous vehicle in the next 6 seconds. For example, the trajectory planner 408 may determine (e.g., predict, calculate, etc.) the expected locations of the autonomous vehicle at several time intervals (e.g., every one-quarter of a second, or some other time intervals). The trajectory planner 408 can determine the detailed-planned trajectory based on predictable responses of other road users, as described, for example, with respect to FIG. 3.

The reactive trajectory control module 410 can handle situations that the autonomous vehicle may encounter but are unpredictable (e.g., cannot be handled) by the trajectory planner 408. Such situations include situations where the detailed-planned trajectory of the trajectory planner 408 was based on misclassification of objects and/or unanticipated situations that rarely occur. For example, the reactive trajectory control module 410 can modify the detailed-planned trajectory in response to determining that the static object to the left of the autonomous vehicle is misclassified. For example, the object may have been classified as a large truck; however, a new classification determines that it is a static road barrier wall. In another example, the reactive trajectory control module 410 can modify the detailed-planned trajectory in response to a sudden tire blowout of the autonomous vehicle. Other examples of unanticipated situations include other vehicles swerving suddenly (e.g., due to late decision to get to highway off-ramp or tire blowout) into the lane of the AV and pedestrians or other objects emerging suddenly from behind occlusions.

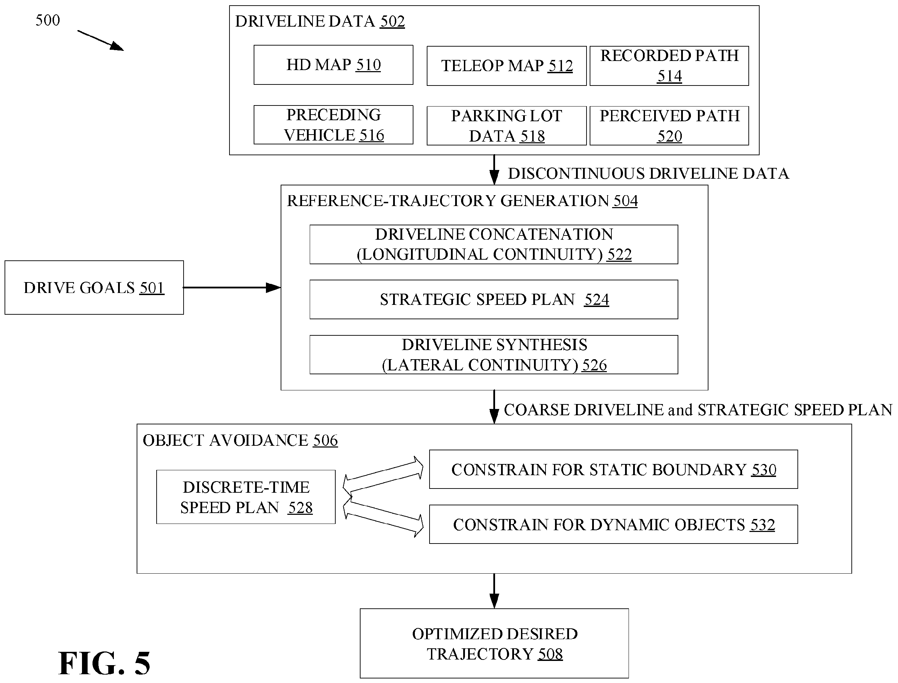

FIG. 5 is an example of layers of a trajectory planner 500 for an autonomous vehicle according to implementations of this disclosure. The trajectory planner 500 can be, or can be a part of, the trajectory planner 408 of FIG. 4. The trajectory planner 500 can receive drive goals 501. The trajectory planner 500 can receive a sequence of drive goals 501 that can represent, for example, a series of lane selections and speed limits that connect a first location to a second location. For example, a drive goal of the drive goals 501 can be "starting at location x, travel on a lane having a certain identifier (e.g., lane with an identifier that is equal to A123) while respecting speed limit y". The trajectory planner 500 can be used to generate a trajectory that accomplishes the sequence of the drive goals 501.

The trajectory planner 500 includes a driveline data layer 502, a reference-trajectory generation layer 504, an object avoidance layer 506, and a trajectory optimization layer 508. The trajectory planner 500 generates an optimized trajectory. Other examples of the trajectory planner 500 can include more, fewer, or other layers. In some examples, the layers can be combined; in other examples, a layer can be divided into one or more other layers.

The driveline data layer 502 includes the input data that can be used by the trajectory planner 500. The driveline data can be used (e.g., by the reference-trajectory generation layer 504) to determine (i.e., generate, calculate, select, or otherwise determine) a coarse driveline from a first location to a second location. The driveline can be thought of as the line in the road over which the longitudinal axis of the AV coincides as the AV moves along the road. As such, the driveline data is data that can be used to determine the driveline. The driveline is coarse, at this point, and may contain lateral discontinuities such as when directed to transition laterally between adjacent lanes. The driveline at this point is also not yet adjusted for objects encountered by the AV, as further described below.

In an example, the driveline data layer 502 can include one or more of High Definition (HD) map data 510, teleoperation map data 512, recorded paths data 514, preceding vehicle data 516, parking lot data 518, and perceived path data 520.

The HD map data 510 is data from a high-definition (i.e., high-precision) map, which can be used by an autonomous vehicle. The HD map data 510 can include accurate information regarding a vehicle transportation network to within a few centimeters. For example, the HD map data 510 can include details regarding road lanes, road dividers, traffic signals, traffic signs, speed limits, and the like.

The teleoperation map data 512 can include relatively short driveline data. For example, the teleoperation map data 512 can be driveline data that are 100 meters to 200 meters long. However, the teleoperation map data 512 is not necessarily so limited. The teleoperation map data 512 can be manually generated by a teleoperator in response to, or in anticipation of, exceptional situations that the AV is not capable of automatically handling.

The driveline may be created in real time. To illustrate creating the driveline in real time, an example is now provided. A teleoperator may be remotely observing the AV raw sensor data. For example, the teleoperator may see (such as on a remote monitor) construction-zone pylons (e.g., captured by a camera of the AV) and draw a path for the AV through a construction zone. The teleoperator may then watch a flag person giving the go-ahead to the AV, at which point the teleoperator can cause the AV to proceed along the drawn path.

To reduce processing time of manually drawing the path when an AV reaches an exceptional situation that was previously encountered, the driveline data can also be stored remotely and sent to the AV as needed.

The recorded paths data 514 can include data regarding paths previously followed by the autonomous vehicle. In an example, an operator (e.g., a driver or a remote operator) of the autonomous vehicle may have recorded a path from the street into the garage of a home.

The preceding vehicle data 516 can be data received from one or more vehicles that precede the autonomous vehicle along a generally same trajectory as the autonomous vehicle. In an example, the autonomous vehicle and a preceding vehicle can communicate via a wireless communication link, such as described with respect to FIG. 2. As such, the autonomous vehicle can receive trajectory and/or other information from the preceding vehicle via the wireless communication link. The preceding vehicle data 516 can also be perceived (e.g., followed) without an explicit communication link. For example, the AV can track the preceding vehicle and can estimate a vehicle driveline of the preceding vehicle based on the tracking results.

The parking lot data 518 includes data regarding locations of parking lots and/or parking spaces. In an example, the parking lot data 518 can be used to predict trajectories of other vehicles. For example, if a parking lot entrance is proximate to another vehicle, one of the predicted trajectories of the other vehicle may be that the other vehicle will enter the parking lot.

In some situations, map (e.g., HD map) information may not be available for portions of the vehicle transportation network. As such, the perceived path data 520 can represent drivelines where there is no previously mapped information. Instead, the AV can detect drivelines in real time using fewer, more, or other than lane markings, curbs, and road limits. In an example, road limits can be detected based on transitions from one terrain type (e.g., pavement) to other terrain types (e.g., gravel or grass). Other ways can be used to detect drivelines in real time.

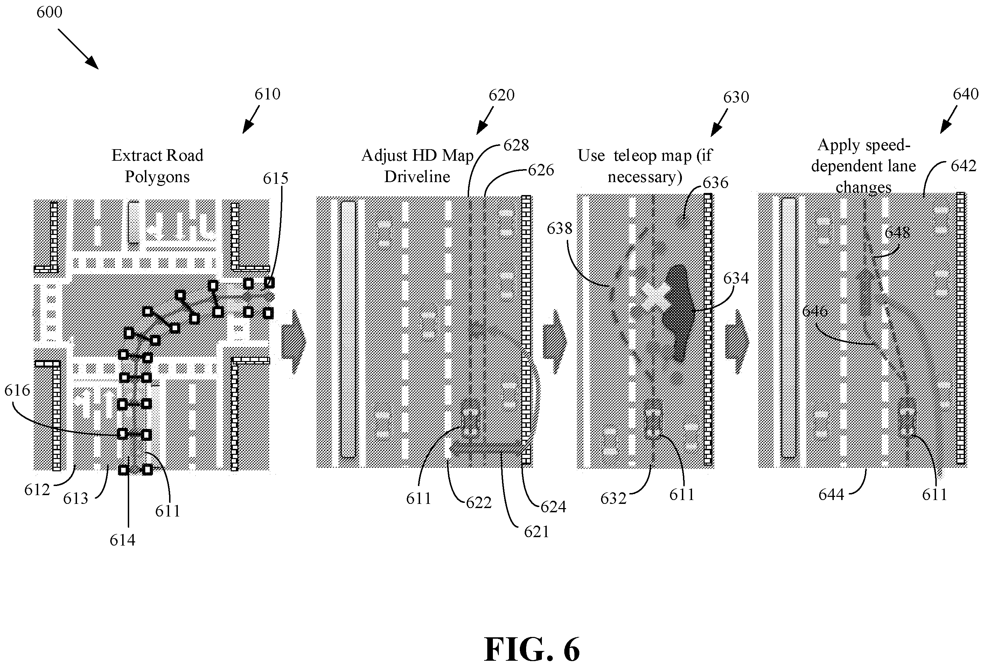

The reference-trajectory generation layer 504 can include a driveline concatenation module 522, a strategic speed plan module 524, and a driveline synthesis module 526. The reference-trajectory generation layer 504 provides the coarse driveline (i.e., reference driveline) to a discrete-time speed plan module 528. FIG. 6 illustrates an example of the operation of the reference-trajectory generation layer 504.

It is noted that the route planning module 404 can generate a lane ID sequence, which is used to travel from a first location to a second location thereby corresponding to (e.g., providing) the drive goals 501. As such, the drive goals 501 can be, for example, 100's of meters apart, depending on the length of a lane. In the case of the HD map data 510, for example, the reference-trajectory generation layer 504 can use a combination of a location (e.g., GPS location, 3D Cartesian coordinates, etc.) and a lane (e.g., the identifier of the lane) in the sequence of the drive goals 501 to generate a high resolution driveline (e.g., from the HD map 510) represented as series of poses for the AV. Each pose can be at a predetermined distance. For example, the poses can be one to two meters apart. A pose can be defined by more, fewer, or other quantities as coordinates (x, y, z), roll angle, pitch angle, and/or yaw angle.

As mentioned above, the driveline data can be used to determine (e.g., generate, calculate, etc.) a coarse driveline. The driveline concatenation module 522 splices (e.g., links, fuses, merges, connects, integrates, or otherwise splices) the input data of the driveline data layer 502 to determine the coarse driveline along the longitudinal direction (e.g., along the path of the autonomous vehicle). For example, to get from location A (e.g., work) to location D (e.g., home), to determine the coarse driveline, the driveline concatenation module 522 can use input data from the parking lot data 518 to determine a location of an exit from the work location parking lot to exit to the main road, can use data from the HD map data 510 to determine a path from the main road to the home, and can use data from the recorded paths data 514 to navigate into the garage at home.

The coarse driveline does not include speed information. However, in some examples, the coarse driveline can include speed limit information, which can be used (e.g., extracted) from the HD map data 510. The strategic speed plan module 524 determines specific speed(s) along the different portions of the coarse driveline. For example, the strategic speed plan module 524 can determine that, on a first straight section of the coarse driveline, the speed of the autonomous vehicle can be set to the speed limit of that first straight section; and on a subsequent second curved section of the coarse driveline, the speed of the autonomous vehicle is to be set to a slower speed. As such, the strategic speed plan module 524 computes a law-abiding (e.g., respecting speed limits and stop lines), comfortable (e.g., physically and emotionally), and physically realizable speed profile (e.g., speed versus distance along the driveline) for the coarse driveline considering the current state (e.g., speed and acceleration) of the AV but not considering other road users or static objects.

Once a strategic speed plan is determined by the strategic speed plan module 524, the driveline synthesis module 526 can adjust the coarse driveline laterally. Considering the strategic speed profile and the coarse driveline with lateral discontinuities, the driveline synthesis module 526 determines the start and end locations of the lane change and synthesizes a driveline connecting the two locations. The length of the lane change can be speed dependent.

The driveline synthesis module 526 can synthesize drivelines joining laterally-discontinuous locations in the coarse driveline. For example, assume that the HD map data 510 includes a first section of the coarse driveline that is on a first lane of a road but that a second section of the coarse driveline is on a second lane of the same road. As such there exists a lateral discontinuity in the coarse driveline. The driveline synthesis module 526 first determines a transition distance (or, equivalently start and end locations) over which the AV should transition from the first lane to the second lane. That is, the start position is the road position when the autonomous vehicle is to be controlled to start moving from the first lane to the second lane. The end position is the road position when the autonomous vehicle is to have completed the lane change. The lateral continuity module then generates new driveline data joining the start position in the first lane to the end position in the second lane.

The transition determined by the driveline synthesis module 526 can be speed dependent. For example, a shorter transition distance can be required for the AV to transition from the first lane to the second lane when the AV is moving at a slower speed than when the AV is moving at a higher speed. For example, in a heavy traffic situation where the autonomous vehicle is traveling at a slower speed (e.g., 24 km/h (15 MPH)), 18 meters (20 yards) may be required for the transition; however, if the autonomous vehicle is traveling at a higher speed (e.g., 105 km/h (65 MPH)), then the transition distance may be 91 meters (100 yards). As such, the driveline synthesis module 526 can determine the transition position depending on the speed of the AV.

The output of the driveline synthesis module 526 is provided to the object avoidance layer 506. The output of the driveline synthesis module 526 includes the coarse driveline and the strategic speed plan. The object avoidance layer 506 generates a medium-term, discrete-time speed plan and lateral constraints on the coarse driveline. For discrete points in time the future (or, equivalently, at discrete locations along the path of the AV), the discrete-time speed plan module 528 determines (i.e., calculates) a respective desired speed for the AV.

At the object avoidance layer 506, and as further described below, using the coarse driveline, nearby static objects, and nearby dynamic objects and their predicted trajectories, the object avoidance layer 506 determines (e.g., extracts) a drivable area where the AV can be safely operated. Right and left boundaries of each bin (described below) are determined. Given a current speed of the AV, a real-time speed plan can be generated. The real-time speed plan can be used to estimate future locations of the AV. The future locations of the AV can be evaluated against future anticipated (e.g., predicted) locations of dynamic objects. The drivable area of the AV is adjusted to remove areas of the drivable area that correspond to (e.g., overlap) locations of the dynamic objects.

At the object avoidance layer 506, the coarse driveline is evaluated and/or adjusted for objects. The objects can be objects external to and proximal to the AV. As such, the objects can be the objects described with respect to the world model module 402 of FIG. 4. As such, given a current speed of the AV, the object avoidance layer 506 generates a real-time speed plan. Using the real-time speed plan, the object avoidance layer 506 can estimate future locations of the AV at discrete future time points. The future locations can be evaluated against the locations of the objects (i.e., the objects of the world model) to provide (e.g., generate) a smooth drive for the AV. Providing a smooth drive (i.e., a smooth trajectory) can be an iterative process, as further described below.

To summarize, a coarse driveline is first generated; a speed plan is then generated from the coarse driveline; and, given the coarse driveline and the speed plan, a trajectory is optimized in view of other objects that are maintained in the world model of the AV, to provide an optimized desired trajectory. The trajectory is optimized in an adjusted drivable area. Non-drivable areas (i.e., areas where the AV cannot be safely driven because of the other objects) are removed from a default drivable area to provide the adjusted drivable area.

FIG. 6 is an illustration of examples 600 of coarse-driveline concatenation according to implementations of this disclosure. The examples 600 are examples of the operation of the reference-trajectory generation layer 504 of FIG. 5.

In a view 610, an AV 611 is in a rightmost lane 614 of a three-lane road that includes lanes 612-614. Note that the view 610 is an example of a left-hand traffic system (i.e., the traffic in the lanes 612-614 moves from the bottom towards the top of FIG. 6). A route planner, such as the route planning module 404, may have determined, based on HD map data, such as the HD map data 510 of FIG. 5, that the AV 611 is to turn right onto lane 615 of a one-lane road. The HD map may provide the centerline (not shown) for each lane.

In some situations, the driveline of the AV may not coincide with the centerline of a lane or road. For example, the lane 615 may be extra-wide to accommodate parking spaces along the left side of the lane 615. In another example, it may be found that most drivers prefer to drive slightly left of the centerline. As such, the driveline of the AV 611 is to be set to the left of the centerline of the lane 615. As such, the driveline concatenation module 522 determines the geometry of the lanes in order to determine the driveline given the lane geometry (e.g., the lane width). For example, when there is a turn in the coarse driveline, the driveline concatenation module 522 determines where the driveline is to be moved (i.e., off the lane centerline) based on the width of the lane, the turning direction (e.g., right or left), the turning angle, and/or the turning speed. That is, the driveline concatenation module 522 sets the driveline of the AV based on the HD map centerline. In an example, the driveline can be set based on the lane width.

To set the driveline of the AV, the driveline concatenation module 522 determines the geometry of lanes along the coarse driveline. In an example, the driveline concatenation module 522 determines the geometry for a certain distance (e.g., 100 meters, 200 meters, 300 meters, etc.) along the coarse driveline. To determine the geometry, the driveline concatenation module 522 can determine polygons, such as a polygon 616 along the coarse driveline, which can be used to define lane boundaries.

A view 620 illustrates determining the driveline (i.e., a coarse driveline) based on a width 621 of a lane. A right edge 624, a left edge 622, and a centerline 626 of a lane along which the AV 611 is traveling can be obtained from the HD map. The driveline concatenation module 522 determines the driveline 628 (i.e., the coarse driveline) based on the width 621. As such, the driveline 628 is shifted from the centerline 626.

A view 630 illustrates using teleoperation data, such as described with respect to the teleoperation map data 512 of FIG. 5, in order to determine a driveline. As described above, whereas the HD map data are static data, teleoperation data can provide a real-time driveline based on road conditions and/or exceptional situations. For example, a construction zone exists along a driveline 632 of the AV 611. The construction zone is bounded by obstacles, such as a pylon 636, which surround a construction project 634. As such, the driveline concatenation module 522 adjusts, as further described below, the driveline 632 to be a driveline 638 (i.e., a coarse driveline) using a real-time driveline that is provided by the teleoperation data.

A view 640 illustrates a speed-dependent lane change. The speed-dependent lane change can be implemented, as described above, by the driveline synthesis module 526 of FIG. 5. In an example, the decision making module 406 of FIG. 4 provides that the AV 611, traveling along a lane 642, is to be next in a lane 644, for example, because the lane 642 ends or because the AV 611 is to turn left. As such, the AV 611 is to move from the lane 642 to the lane 644 at some point. As the HD map may not provide lane transition information, the reference-trajectory generation layer 504 of the AV 611 determines the lane transition time. As mentioned above, the transition can be speed dependent.

In an example, the trajectory planner 500 (of which the reference-trajectory generation layer 504 is a layer) can determine that at a point X along the coarse driveline, the AV 611 will be moving at a speed Y (as determined by the strategic speed plan module 524). In a case where the AV 611 is moving at a low speed (e.g., 35 MPH), the driveline synthesis module 526 can determine that the transition can be slow. Accordingly, the path to move from the lane 642 to the lane 644 can be as shown by a path 646. On the other hand, if the AV 611 is traveling at a high speed (e.g., 65 MPH), the path to switch lanes requires a longer distance, as shown by a path 648.

The time required to follow the paths 646 and 648 can be the same. However, the distance is different. The distance required for the lane transition when the AV 611 is traveling at a first speed is longer than the distance required when the AV 611 is traveling at a second speed that is slower than the first speed.

A lane-change rate can be used to determine the speed-dependent lane change. That is, the lane-change rate can be used to create a connection between two adjacent lanes, such as the lane 642 and the lane 644 of the view 640. The lane-change rate can be defined in "meters per meter:" *How many meters does the path move laterally per meter longitudinally?* As mentioned above, the goal is to identify a lane change rate that leads to the completion of the lane change in a target amount of time: If the AV is travelling slowly (for example, during dense rush-hour traffic), the lane change rate is high and takes place over a short distance (e.g., on the order of tens of meters); if the AV is travelling quickly (e.g., at highway speeds), the lane change rate is slow and takes place over a long distance (e.g., on the order of hundreds meters).

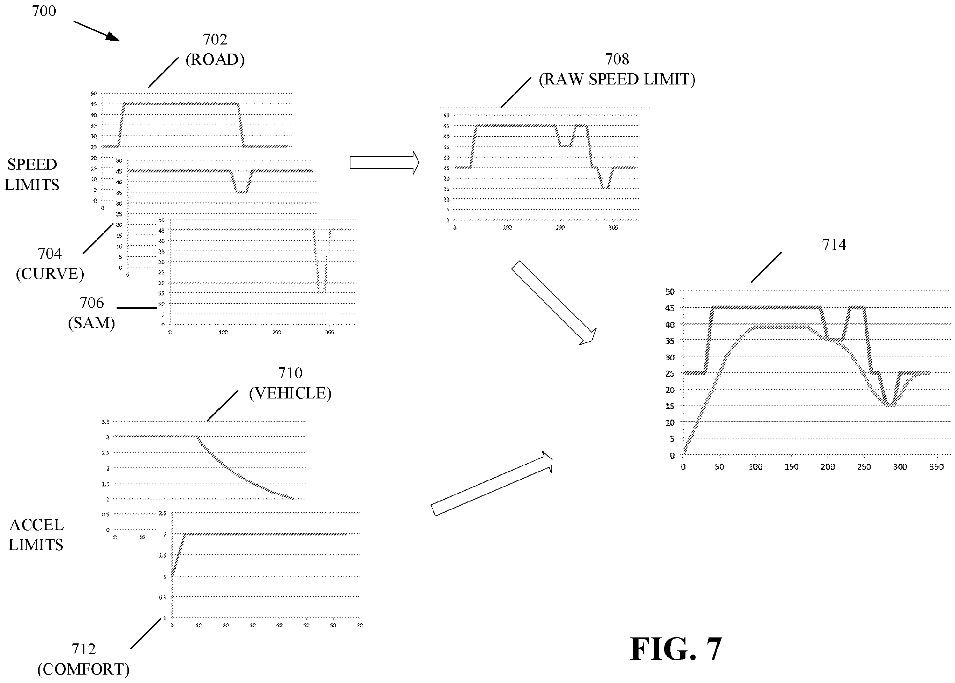

FIG. 7 is an example 700 of determining a strategic speed plan according to implementations of this disclosure. The example 700 illustrates examples of inputs that can be used by the strategic speed plan module 524 of FIG. 5 to determine a strategic speed plan 714. In some implementations, the strategic speed plan module 524 can use more, fewer, or other inputs to determine the strategic speed plan.

In the example 700, speed limits inputs and acceleration limits inputs can be used. The speed limits can include at least one of road speed limits 702, curvature speed limits 704, and seamless autonomous mobility (SAM) data 706. The acceleration limits can include vehicle acceleration limits 710 and comfort limits 712. The speed limits and/or the acceleration limits can include more, fewer, or other inputs.

The road speed limits 702 can be the road speed limits, such as those posted on speed limit signs (e.g., 20 MPH, 65 MPH, etc.). In an example, the road speed limits 702 can be obtained from an HD map. The curvature speed limits 704 can be data relating vehicle speed to a curvature of a turn, such as a turn along the coarse driveline of the AV. Alternatively, the curvature speed limits 704 can only provide road curvature information (e.g., the turning radius of a curve). The curvature speed limits 704 can be limits on the lateral acceleration of the AV. As such, the speed plan can include decreased AV speeds, consistent with the curvature speed limits 704, when the AV curves.

The SAM data 706 can be data gathered (such as in a cloud-based system) from vehicles (autonomous or otherwise). The data can enable vehicles (including AVs) to operate safely and smoothly on the road. In an example, the SAM data 706 can include vibration data collected from vehicles along a portion of a road. The vibration data can correlate vibration levels and speeds at different portions of the road. In an example, the vibration data may indicate, for a certain road location, an unacceptable level of vibration (for example, due to a speed bump at the portion of the road) when a vehicle is traveling above a certain speed. As such, to minimize the impact of the vibration, the AV is to be slowed down (below the certain speed) at the portion of the road. In an example, the SAM data 706 can be received by the AV from a central sever, such as the operations center 230, the server computing device 234, or some other network device. In an example, the SAM data 706 can be data accumulated from other vehicles within a certain time period (e.g., 1 minute, 10 minutes, 20 minutes, etc.) of the autonomous vehicle arriving at that location. In an example, the AV can pull the SAM data 706. In another example, the SAM data 706 can be pushed to the AV based on the AV reporting its location to a server that provides the SAM data 706.

The road speed limits 702, the curvature speed limits 704, and the SAM data 706 can be combined to provide raw speed limits 708. In an example, for each location of certain locations along the coarse driveline (e.g., every 5 meters, 10 meters, etc.), the minimum of the speed of the road speed limits 702 at that location, the speed of the curvature speed limits 704 at that location, and the speed of the SAM data 706 at that location is used as the speed of the raw speed limits 708 at that location.

The vehicle acceleration limits 710 can be AV acceleration limits that are due to the torque and power of the AV. The comfort limits 712 includes human comfort limits regarding acceleration, such as: *How fast do the occupants of the AV want to the AV to accelerate?*

The strategic speed plan module 524 of the reference-trajectory generation layer 504 can combine the raw speed limits 708, the vehicle acceleration limits 710, and the comfort limits 712 to provide the strategic speed plan 714, which is a smooth speed plan.

As mentioned above, at a location along the coarse driveline, the minimum of the road speed limits 702, the curvature speed limits 704, and the seamless autonomous mobility SAM data 706 can be used as the speed limit of the AV. The vehicle acceleration limits 710 and the comfort limits 712 relate acceleration to speed. As such, and in an example, the vehicle acceleration limits 710 and the comfort limits 712 can be combined by finding the minimum of the two maximum curves (comfort, speed). As such, at low speed, comfort can limit the maximum acceleration of the AV; whereas at high speed, the acceleration limits (e.g., the power) of the AV can limit the acceleration of the AV. A speed profile can be generated by solving for the fastest speed profile along the coarse driveline that satisfies the constraints on speed (speed limit at any given location along the driveline) and acceleration (acceleration limit at any given speed).

Inputs other than those described above can also be used to calculate the strategic speed plan 714. For example, one or more of road mu, minimum cruise times, neighborhood type, or other inputs can be used. Road mu relates to the road slipperiness, such as due to ice, rain, slope, etc.

A minimum cruise time relates to the minimum length of time that the speed of the AV can be set to a constant speed. For example, assume that a segment of a road is 500 meters long and that the speed limit on that segment is 45 MPH. Additionally, assume that, given a motion model of the AV, 250 meters are required for the AV to reach the speed limit of 45 MPH from a stopped position, and 250 meters are required for the AV to be stopped given a current speed of 45 MPH. If the AV were at a stopped position at the beginning of the road segment and the AV is to be stopped again at the end of the road segment, then as soon as the AV reaches the speed limit of 45 MPH, the AV would have to start decelerating. Such speed profile may not be desirable and/or natural for occupants of the AV. As such, a minimum cruise time can indicate, for example, that a speed must be maintained for the minimum cruise time (e.g., 3 seconds) before the AV can start decelerating (or accelerating). As such, a more natural speed profile can be provided.

The neighborhood type can be used to model normal human driving behaviors, which may depend on the type of neighborhood that the AV is traversing through. For example, a human driver may drive below the posted speed limit in a residential neighborhood (e.g., where kids may be observed playing on the streets) and may drive at least at the posted limit in an industrial neighborhood, even though both neighborhoods may have the same posted speed limit.

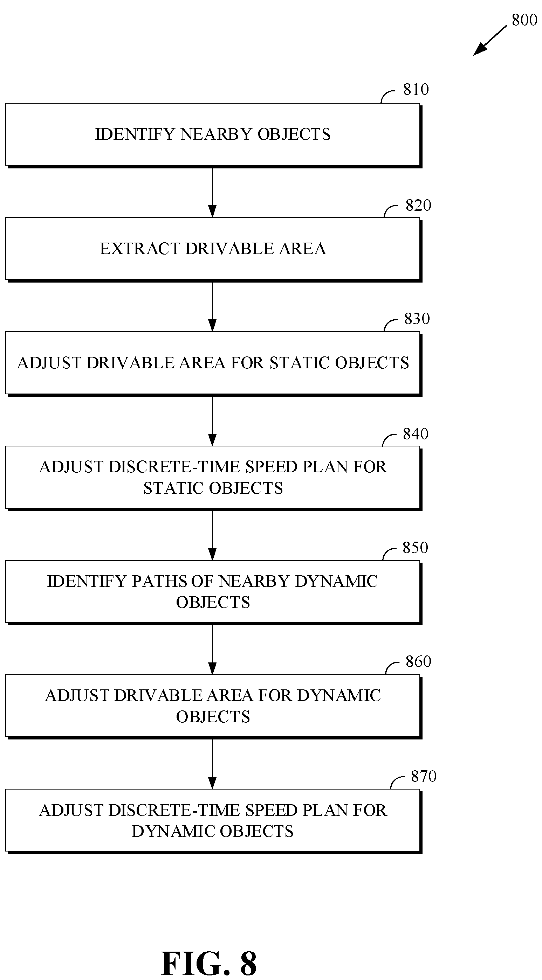

FIG. 8 is a flowchart diagram of a process 800 for determining a drivable area and a discrete-time speed plan in accordance with an implementation of this disclosure, this implementation being outside the subject-matter of the claims. Some or all aspects of the process 800 can be implemented in a vehicle, including the vehicle 100 shown in FIG. 1 and the vehicle 202 shown in FIG. 2, or in a computing apparatus, including the controller apparatus 232 shown in FIG. 2. In an implementation, some or all aspects of the process 800 can be implemented in a system combining some or all of the features described in this disclosure. For example, the process 800 can be utilized by the object avoidance layer 506 of FIG. 5.

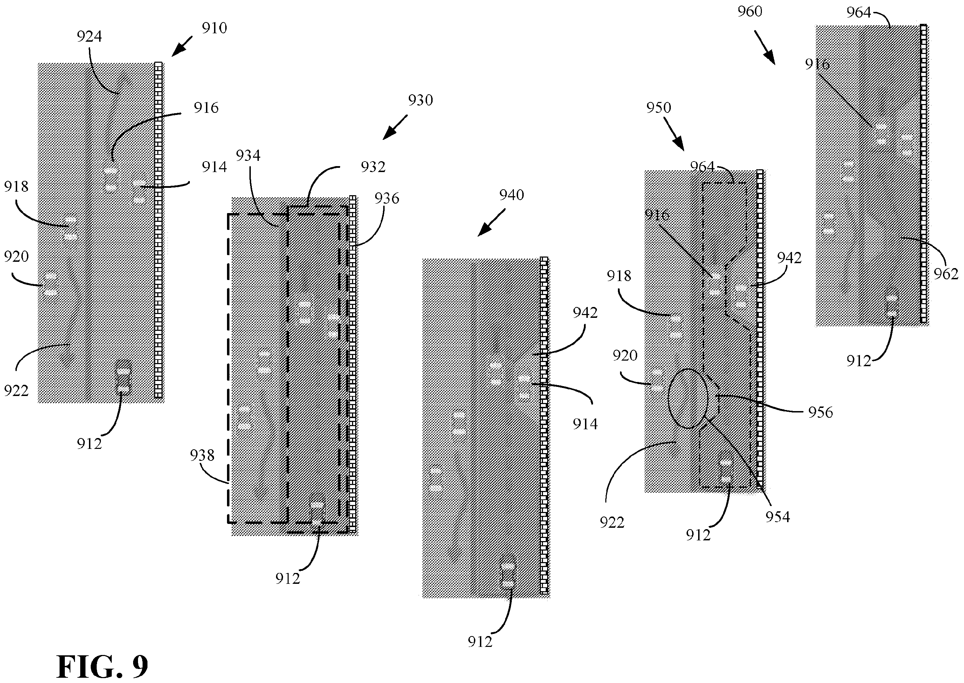

The process 800 is explained with reference to FIG. 9. FIG. 9 is an illustration of determining a drivable area and a discrete-time speed plan in accordance with implementations of this disclosure. FIG. 9 illustrates generating a drivable area (lateral constraints) and a constrained speed profile, which can be represented in discrete-time. The drivable area can be, for example, the area of a vehicle transportation network where the autonomous vehicle can be driven. Initially (e.g., at the beginning of the process 800), the drivable area may include areas where the AV cannot be predicted to be safely driven. The process 800 adjusts (e.g., cuts out of) the drivable area those areas where the AV cannot be predicted to be safely driven. The process 800 results in an adjusted drivable area.

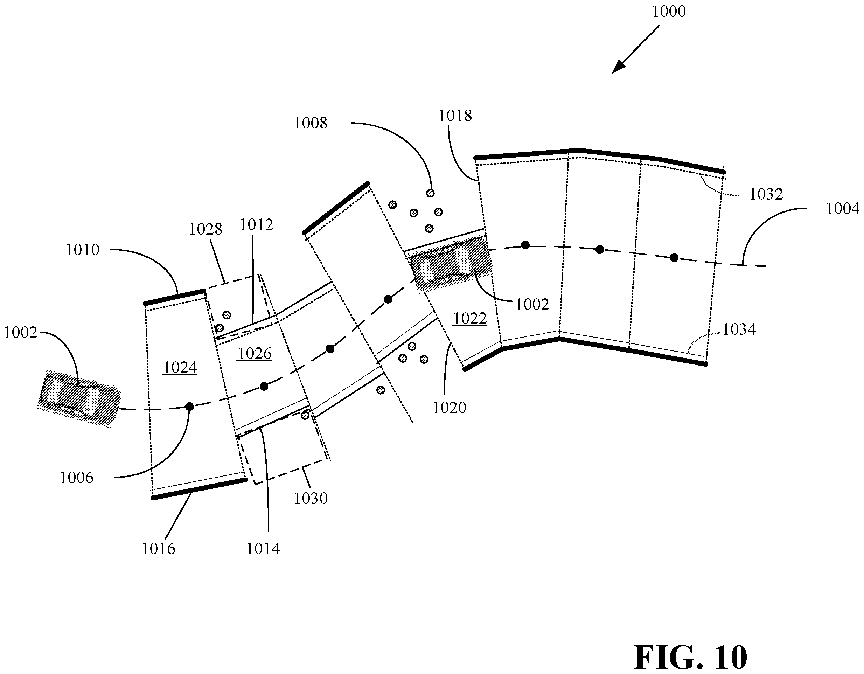

At operation 810, the process 800 identifies nearby objects to the AV. In an example, the nearby objects can be at least some of the external objects maintained by the world model module 402. In an example, the nearby objects can be all objects maintained by the world model module 402. In another example, the nearby objects can be a subset of the objects maintained by the world model module 402. For example, the nearby objects can be objects within a predetermined distance from the AV, objects within a predicted arrival time of the AV, or objects that meet other criteria for identifying a subset of the objects. For example, and referring to a view 910 of FIG. 9, for an AV 912, a static vehicle 920, a static vehicle 914, a dynamic oncoming vehicle 918, and a dynamic vehicle 916 are identified. In an implementation, the operation 810 identifies dots (i.e., boundary points) and/or groups of dots representing objects, as described with respect to FIGS. 10-12.

At operation 820, the process 800 extracts a drivable area. The drivable area can be the area where the AV 912 can be (e.g., legally and/or physically) driven. In an example, the drivable area can be extracted from the coarse driveline. For example, the drivable area can be a predefined distance from the AV along the coarse driveline (e.g., in the longitudinal direction). A drivable area 932 in a view 930 of FIG. 9 is an example of the drivable area. In an example, the drivable area 932 can be the area bounded (i.e., in the lateral direction) by a median 934 and a shoulder 936. In an example, the drivable area can be extracted from an HD map based on the current location of the AV 912. The drivable area can be bounded by the left and right boundaries of a lane (or a road, or some other region) in which the AV 912 is located. In an example, the drivable area can span the centerline of the road. That is, the opposite-direction traffic lane can be included in the drivable area. As such, in the view 930, if the median 934 were not present, then the drivable area could be a drivable area 938.

The process 800 proceeds to remove from the drivable area portions where the AV cannot be (e.g., safely) driven. The term "adjusted drivable area" is used herein to refer to the drivable area after areas have been removed from the drivable area to account for static and/or dynamic objects as described herein. If no static and/or dynamic objects interfere with the trajectory of the AV, then the adjusted drivable area is the same as the drivable area.

At operation 830, the process 800 adjusts the drivable area for static objects. That is, the process 800 removes (e.g., cuts out, etc.) from the drivable area those portions of the drivable area where static objects are located. This is so because the AV is to be controlled to navigate (e.g., drive) around the static objects. A view 940 of FIG. 9 illustrates cutting out a portion of the drivable area. To avoid the static vehicle 914, the process 800 cuts out a cutout 942 of the drivable area 932. The size of the cut out area can be determined based on an estimate of the size of the static object. The size of the cut out area can include a clearance area so that the AV does not drive too close to the static object.

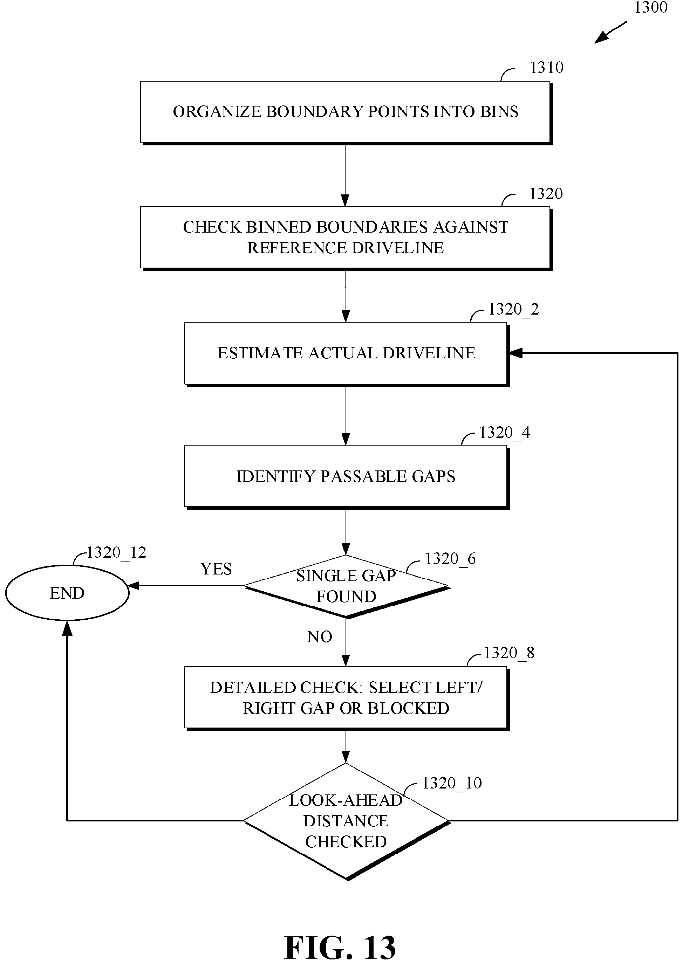

Examples of adjusting the drivable area for static objects are further described below with respect to FIGS. 10-12. An example of a process for adjusting the drivable area for static objects is described below with respect to FIG. 13.

At operation 840, the process 800 adjusts the discrete-time speed plan for static objects. For example, in the absence of obstacles or other road users, the discrete-time speed plan follows the strategic speed profile. For example, when the adjusted drivable area contains a narrow pass, accounting for static objects, instead of following (i.e., using the speed of) the strategic profile verbatim (i.e., as set in the strategic profile), the process 800 adjusts the discrete-time speed plan to reduce the speed of the AV to a comfortable speed. For example, when the adjusted drivable area, accounting for static objects, contains a static blockage, the process 800 adjusts the discrete-time speed plan such that the AV comes to a stop a prescribed distance before the static blockage.

At operation 850, the process 800 identifies (e.g., predicts, calculates, generates, receives, or otherwise identifies) a respective path for each of the nearby dynamic objects. In an example, the predictions of the respective paths (i.e., trajectories) of at least some of the dynamic objects can be maintained in a world model, such as the world model module 402 of FIG. 4. As such, the process 800 can receive (e.g., request, read, or otherwise receive) the respective paths from the world model.

For example, the process 800 predicts (e.g., receives a prediction, or otherwise predicts) that the dynamic oncoming vehicle 918 is to follow a path 922 to get around the static vehicle 920, and that the dynamic vehicle 916 is to follow a path 924 after passing the static vehicle 914. In an implementation, the operation 820 uses an instance (i.e., an execution) of the process 800 to identify the path of a dynamic object. In an example, when predicting a path for a dynamic object, the process 800 excludes the AV from the list of nearby objects of the dynamic object.

In an example, predicting a path for a dynamic object can be based on respective speeds of other dynamic objects and an estimation of the right of way amongst the dynamic objects. In an example of the estimation of the right of way, if a second vehicle is following (i.e., is behind) a first vehicle in a lane, then the first vehicle is simulated (i.e., a path is predicted for the first vehicle) in the presence of the second vehicle; but the second vehicle is simulated without the presence of the first vehicle.

As such, an instance of the trajectory planner 500 can be dedicated to the autonomous vehicle that includes the trajectory planner 500, and one or more other instances of the trajectory planner 500 can be used by the autonomous vehicle to predict the trajectories of dynamic objects that are visible to the autonomous vehicle (e.g., the dynamic objects that are maintained by the world model module 402).

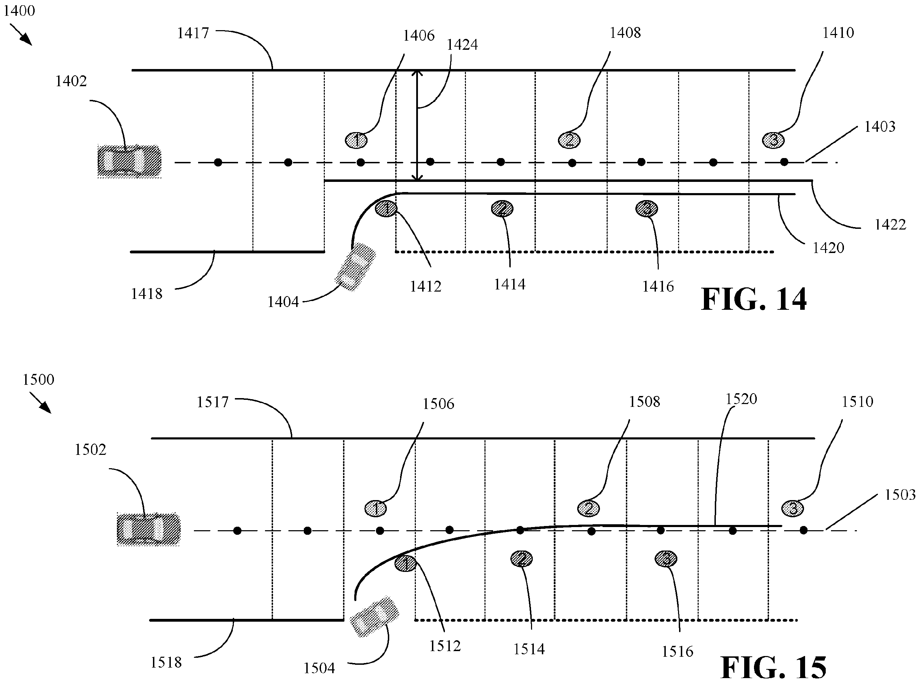

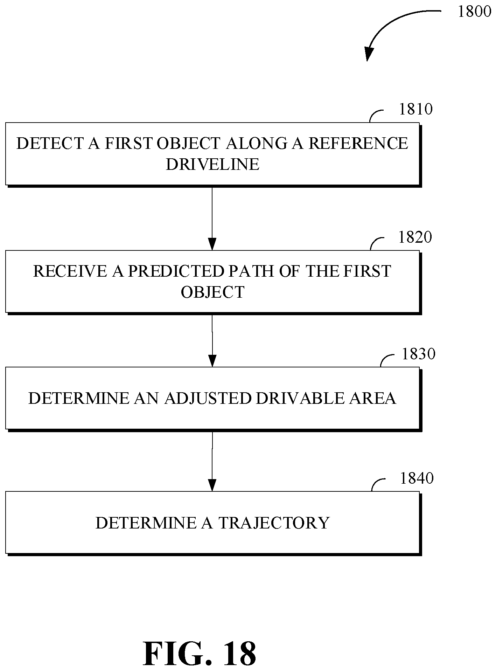

At operation 860, the process 800 adjusts the drivable area for dynamic objects. That is, the process 800 cuts out portions of the drivable area based on the respective predicted trajectories of each of the dynamic objects. The process 800 uses timing information regarding locations of each of the dynamic objects to cut out additional portions of the drivable area. The cutouts in the drivable area for dynamic objects are generated by comparing the timing of the predictions for the dynamic objects compared to the timing generated by the discrete-time speed plan, which now accounts for static objects (as described with respect to the operation 840). That is, the process 800 can predict for a dynamic object, and, based on the predicted trajectory of the dynamic object, where the dynamic object will be located at different discrete points in time relative to the locations of the AV at the same discrete points in time. Examples of adjusting the drivable area for dynamic objects are further described below with respect to FIGS. 14-16. An example of a process for adjusting the drivable area for dynamic objects is described below with respect to FIG. 18.

The locations of a dynamic object are matched to the predicted locations of the AV to determine cutout portions. As mentioned above, the predicted locations of the AV are based on the discrete-time speed plan as adjusted at the operation 840 (i.e., to account for static objects). A cutout may not correspond to a current location of a dynamic object. Rather, the cutout can be based on locations where the AV and the dynamic object are predicted to meet. If the predicted trajectory of a dynamic object does not interfere with the drivable area, then no portions of the drivable area are cut out for the dynamic object. If the predicted trajectory of a dynamic object does interfere with the drivable area, then one or more portions of the drivable area are cut out to avoid a potential collision with the dynamic object.

A view 950 of FIG. 9 illustrates an example of adjusting (i.e., the operation 860) the drivable area for dynamic objects. The process 800 predicts (such as by the operation 850) that the dynamic oncoming vehicle 918 will follow the path 922 in order to get around (e.g., avoid) the static vehicle 920. The process 800 further predicts that if the AV 912 continues along its current trajectory, then the AV 912 and the dynamic oncoming vehicle 918 would meet around a location 954. As such, the process 800 cuts out a cutout 956 from the drivable area 932.

At operation 870, the process 800 adjusts the discrete-time speed plan for dynamic objects. When the adjusted drivable area (accounting for both static and dynamic objects at this point) contains a dynamic object travelling in the same direction as the AV, the dynamic object is labelled as a longitudinal constraint and the discrete-time speed plan is adjusted such that the AV follows the blocking object at a comfortable speed and distance.

A view 960 of FIG. 9 illustrates adjusting (i.e., the operation 870) the discrete-time speed plan for dynamic objects. The process 800 determines that dynamic vehicle 916 is in the adjusted drivable area of the AV 912 and that it is not safe for the AV 912 to pass the dynamic vehicle 916, because, for example, no safe gap exists between the edge of the dynamic vehicle 916 and the boundaries of the adjusted drivable area. As such the AV 912 is to follow behind the dynamic vehicle 916. If the dynamic vehicle 916 is moving slower than the strategic speed plan, then the discrete-time speed plan is adjusted such that the AV follows the dynamic vehicle 916 at a comfortable speed and distance. The view 960 also illustrates that a trajectory 962 for the AV 912 based, for example, on the cutout 956.

In another example, assume that the dynamic vehicle 916 itself is determined to have a longitudinal constraint. For example, a second vehicle (not shown) may be in front of the dynamic vehicle 916. As such, the second vehicle can itself also be considered another longitudinal constraint for the AV 912. As such, a first discrete-time speed plan (e.g., a first deceleration plan) can be determined for the AV 912 based on the dynamic vehicle 916, and a second discrete-time speed plan (e.g., a second deceleration plan) can be determined for the AV 912. The one of the first discrete-time speed plan and the second discrete-time speed plan corresponding to the higher deceleration can be selected as the discrete-time speed plan for the AV. More generally, objects that are determined to be constraints for constraints of the AV can themselves be treated as constraints for the AV.

An adjusted drivable area 964 illustrates the adjusted drivable area that results from the operations of the process 800.

FIGS. 10-12 are examples 1000, 1100, and 1200 of adjusting a drivable area for static objects in accordance with implementations of this disclosure. The examples 1000, 1100, and 1200 illustrate determining static boundaries for a drivable area. That is, FIGS. 10-12 are examples of adjusting a drivable area for static objects as described with respect to the operation 830 of FIG. 8. That is, the examples 1000, 1100, and 1200 illustrate determining, along the coarse driveline of an AV, where the AV can be driven with reference to static objects.

In the example 1000 of FIG. 10, the coarse driveline of an AV 1002 is represented by a coarse driveline 1004. The coarse driveline 1004 is also referred to herein as a coarse driveline. The coarse driveline 1004 can be determined (e.g., calculated, generated, etc.) as described with respect to the reference-trajectory generation layer 504 of FIG. 5. The example 1000 illustrates an example of the operation 830 for determining the lateral boundaries of the drivable area of the AV 1002. That is, the example 1000 illustrates determining, for example, left and right boundaries of the drivable area of the AV 1002 to account for static objects.

As mentioned above, a drivable area (i.e., a non-adjusted, non-cutout drivable area, such as the drivable area 932 of FIG. 9) is determined. In an example, the drivable area can have a default width. The default width can be based on the current lane or the current road of the AV. The default width can be defined by the predefined width (e.g., 8 meters). As such, the drivable area can cross a centerline of the road. It is noted that the default drivable area can be limited by barriers (e.g., concrete barriers) that may be in the median. Such barriers are static objects and limit the drivable area.

The drivable area of the AV 1002 is divided into bins. Each bin has a center point, such as a center point 1006. The center points can be equally spaced. For example, the center points can be approximately two meters apart. The left and right boundary of each bin can be related to the heading of the coarse driveline 1004. A right boundary 1018 and a left boundary 1020 illustrate the boundaries of a bin 1022.

Boundary points, such as a boundary point 1008, originate from static objects. For example, the boundary points can be derived from data from a LiDAR sensor, a laser pointer, a radar, or any other sensor, such as the sensor 126 of FIG. 1. The boundary points can represent (x, y) coordinates that are occupied or are otherwise off-limits to the AV. Each of the boundary points corresponding to static objects is assigned to the bin that contains the boundary point. For example, the boundary point 1008 is assigned to the bin 1022. Neighboring boundary points (such as within a bin or across bin boundaries) may correspond to one or more static objects.

The right and left boundaries of each bin can be defined (i.e., set) based on the boundary points assigned to the bin. For example, as a bin 1024 includes no boundary points, a right boundary 1016 and a left boundary 1010 of the bin 1024 are aligned with the (non-adjusted) drivable area. On the other hand, a left boundary 1012 of a bin 1026 is not aligned with the drivable area because a cutout 1028 is excluded from the drivable area; and a right boundary 1014 of the bin 1026 is not aligned with the drivable area because a cutout 1030 is excluded from the drivable area.

The boundaries of the adjusted drivable area are represented by a segmented line 1032, which forms the left boundary of the adjusted drivable area, and a segmented line 1034, which forms the right boundary of the adjusted drivable area. For clarity of illustration, the segmented lines 1032, 1034 are shown as being offset from the real boundaries. That is, for example, whereas the segmented line 1032 overlaps the boundary 1010 and the boundary 1012, for clarity, the segmented line 1032 is shown as being slightly offset from the boundary 1010 and the boundary 1012. The segmented line 1032 is the computed left boundary of the adjusted drivable area. The segmented line 1034 is the computed right boundary of the adjusted drivable area.

The computed right and left boundaries are used to determine whether the AV 1002 can continue along the coarse driveline 1004. The AV 1002 can be advanced (virtually or computationally, not physically) to the center of each bin to determine whether the width of the bin (given the computer boundaries) is such that the AV 1002 can safely fit through the bin. For example, with respect to the bin 1022, the AV 1002 cannot safely clear the left boundary (i.e., the left calculated boundary) of the bin. As such, and as further described below, the trajectory of the AV 1002 is to be altered. For example, the trajectory of the AV 1002 may not need to be adjusted, as the AV 1002 may need to be stopped, or the trajectory of the AV 1002 can be altered in other ways.

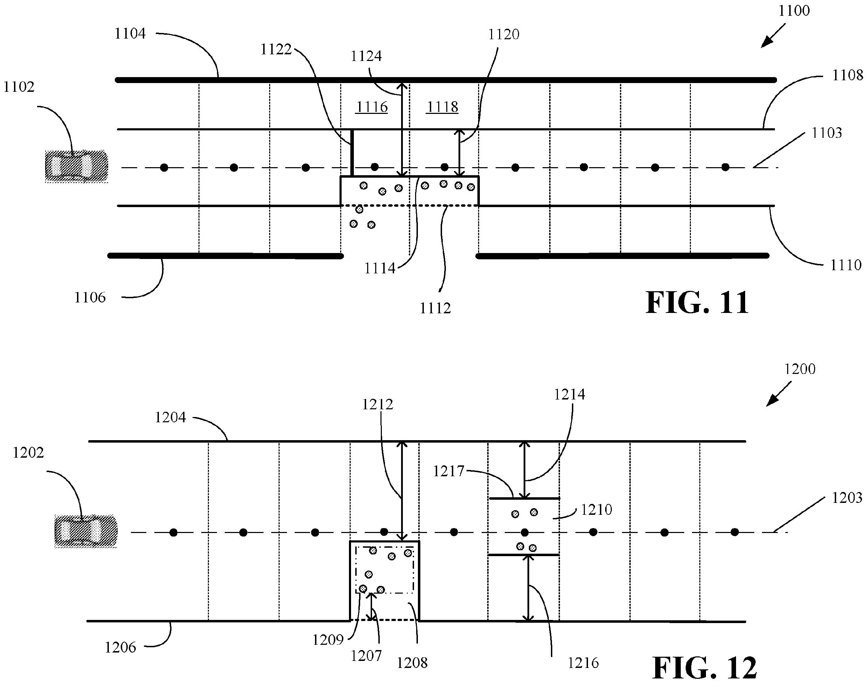

FIG. 11 illustrates an example 1100 of determining static boundaries and identifying a blockage that is accounted for when adjusting the discrete-time speed plan in accordance with implementations of this disclosure. In the example 1100, a coarse driveline 1103 is the coarse driveline of an AV 1102. The default drivable area of the AV 1102 is defined by a left boundary 1104 and a right boundary 1106. In the example 1100, a left lane boundary 1108 and a right lane boundary 1110 of the lane that includes the AV 1102 are shown. In the example 1100, the drivable area is limited to the lane (i.e., the lane bounded by the left lane boundary 1108 and the right lane boundary 1110) of the AV 1102. As such, the left and right boundaries of the lane are adjusted for static objects.

The left boundary 1104 and the right boundary 1106 can define the maximum possible drivable area (i.e., maximum boundaries). However, as it may be preferable to keep the AV 1102 within its lane, the left lane boundary 1108 and the right lane boundary 1110 define the boundaries of the drivable area. In an example, if the AV 1102 cannot be safely driven within its own lane (e.g., between the left lane boundary 1108 and the right lane boundary 1110), then it can be evaluated whether the AV 1102 can be driven outside the lane boundaries but within the maximum boundaries. Extending the drivable area can be referred to as "extended drivable area checking."

The right lane boundary 1110 includes a portion 1112. The portion 1112 is shown as a dashed line because, as further described below, this portion of the drivable area is to be adjusted.

As described with respect to FIG. 10, the drivable area of the AV 1102 is divided into bins, and boundary points corresponding to static objects are assigned to respective bins, such as bins 1116, 1118. As the boundary points of the bins 1116, 1118 appear to correspond to a large, rectangular object, the object may be classified (for example, by the world model module 402 of FIG. 4) as a "truck."

Boundaries corresponding to (i.e., defined based on) objects (static or dynamic objects) can be referred to as hard boundaries. A hard boundary is such that, if the planned trajectory were to cross the hard boundary, a collision with another object may be likely. On the other hand, lane and/or road markings can be referred to as soft boundaries and represent lawful or logical boundaries. A soft boundary is such that, if the planned trajectory were to cross the soft boundary that is not also a hard boundary, the motion of the AV may be unlawful and/or not socially acceptable, but the AV may be safe. As shown in FIG. 11, for example, the left boundary 1104 (i.e., the left drivable area boundary) defines the left hard boundary and the left lane boundary 1108 defines the left soft boundary. The right hard boundary is comprised of the right boundary 1106 (i.e., the right drivable area boundary) and the boundary 1114; the right soft boundary is defined by the right lane boundary 1110 and the boundary 1114.

A detailed check can be performed to determine whether a path exists given a distance between the right and left hard boundaries of a bin. A distance 1120 between the boundary 1114 and the left lane boundary 1108 is determined to be too narrow for the AV 1102 to drive (i.e., fit) through. As such, a location 1122 corresponding to the bin 1116 is marked as a static blockage. As such, the AV 1102 cannot pass the object(s) represented by the boundary points of the bins 1116, 1118. Accordingly, the AV 1102 is to be stopped before the static blockage corresponding to the location 1122. Accordingly, the module 530 can adjust the discrete-time speed plan such that the AV comes to a stop before the static blockage.

In another example, instead of stopping due to the static blockage, the trajectory planner determines a trajectory through a gap 1124, such that the drivable area is extended, at least for the bins 1116 and 1118 across the left lane boundary 1108. For example, if the left lane boundary 1108 is the center of the road, the trajectory planner may determine that there are no oncoming dynamic objects and, therefore, it is safe to cross the lane boundary.

In another example, in a case that there is insufficient distance for the AV to stop before the static blockage, the discrete-time speed plan would only be capable of slowing the AV down and as such a trajectory can be determined such that the AV can cross the left soft boundary in order to avoid crossing the right hard boundary and hitting the static object. Thus, by maintaining an awareness of both the hard boundaries and soft boundaries, the trajectory planner can generate a trajectory that is lawful and socially acceptable driving under most conditions with a seamless transition to object avoidance maneuvers under emergency conditions.

In an example, the boundaries of a bin can be adjusted based on the status of the objects (e.g., groups of boundary points) within the bin. For example, the boundary points within a bin can be tracked over time. If it is determined that the group of boundary points within a bin is moving slightly (i.e., less than a threshold level of movement), then a greater level of clearance can be required. That is, the AV 1102 can be driven further away from the boundary points if the boundary points are moving. On the other hand, if the boundary points are stable (i.e., not moving), then the AV 1102 can be driven closer to the boundary points. As such, a boundary of the bin (e.g., the boundary 1114) can be adjusted over time depending on the level of movement of the boundary points within the bin.

In an example, if movement of the boundary points is detected at time t, then the boundary points are considered to be moving thereafter (i.e., at later times t+x), whether the boundary points continue to move or not.

Adjusting the bin boundary over time, based on the movement of boundary points within the bin, can be referred to as filtered lateral limits. "Filtered" in this context means that the lateral limits (e.g., the bin boundaries) can be changed over time.

FIG. 12 is another example, an example 1200, of determining static boundaries in accordance with implementations of this disclosure. In the example 1200, a coarse driveline 1203 is the coarse driveline of an AV 1202. The default drivable area of the AV 1202 is defined by a left lane boundary 1204 and a right lane boundary 1206. A cutout 1208 and a cutout 1210 are cut out of the drivable area. In this example, the cutout 1210 is in the middle of the drivable area.

Whether a boundary of a cut out area extends to the boundary of the default drivable area can depend on the distance between the cut out area and the boundary of the default drivable area. For example, if a distance corresponding to the gap 1216 between the right edge of the cutout 1210 and the right lane boundary 1206 is below a threshold distance, then the cutout 1210 can be defined by the area extending from a left boundary 1217 of the cutout 1210 to the right lane boundary 1206. In an example, the threshold distance can relate to a width of the AV 1202. For example, the threshold distance can be 1.5, 2.0, etc., times the width of the AV 1202. Similarly, a gap (e.g., a gap 1207) between a cluster (e.g., a cluster 1209) of boundary points of a bin and lane boundary (e.g., the right lane boundary 1206) is also determined. In the case of the gap 1207, since the gap 1207 is determined to be smaller than the threshold distance (such that the AV 1202 cannot pass through the gap), the cutout 1208 is extended to the right lane boundary 1206.

The trajectory planner of the AV 1202 may determine that a distance 1212 is such that the AV 1202 can pass through the gap corresponding to the distance 1212. As the cutout 1210 overlaps the coarse driveline 1203, the trajectory planner of the AV 1202 performs a detailed check to determine (e.g., find) a gap to the left or to the right of the cutout 1210 such that the AV 1202 can pass through the gap. If a gap is not found as a result of the detailed check, then the AV 1202 can be considered blocked and must be stopped.

In the example 1200, a gap 1214 and a gap 1216 are both such that the AV 1202 can pass through either of the gaps 1214, 1216. In an example, one of the gaps 1214, 1216 is selected randomly. In another example, the trajectory planner selects the gap 1214 (i.e., the gap to the left of the cutout 1210) since the trajectory planner already selected a leftward direction to pass the cutout 1208.

Given two possible paths with respect to a second object (e.g., a left path and a right path about the object), and given a first path (e.g., to the right or to the left) with respect to a first object, "multi-hypothesis tracking" refers to determining a second path (e.g., trajectory) with respect to the second object.

FIG. 13 is a flowchart diagram of a process 1300 for determining static boundaries in accordance with the present disclosure. Some or all of the operations of the process 1300 can be performed at the operation 830 of the process 800.

At operation 1310, the process 1300 organizes boundary points in bins along a coarse driveline. The boundary points are organized into bins along a coarse driveline as described with respect to FIGS. 10-12.

At operation 1320, the process 1300 checks the boundaries of the bins against the coarse driveline. The boundaries of the bins are checked against the coarse driveline to determine whether gaps exist such that the AV can pass through at least one of the gaps. In an example, the operation 1320 can be performed by operations 1320_2-1320_12. The operation 1320 adjusts the right and left boundaries of the bins of the drivable area based on the binned boundary points, such as described, for example, with respect to the left boundary 1012 and the right boundary 1014 of the bin 1026 of FIG. 10.

At operation 1320_2, the process 1300 estimates an actual driveline. For example, as described with respect to the cutout 1208, the process 1300 determines an actual driveline that is to the left of the cutout 1208.

At operation 1320_4, the process 1300 identifies the passable gaps. That is the process 1300 identifies the number of passable gaps. For example, given the right and left boundaries of the bin 1116 of FIG. 11, the process 1300 determines whether the AV 1102 can pass though the gap defined by the distance 1120. If so, then one gap is identified. Similarly, the process 1300 determines whether the AV 1202 can pass through the gap defined by the distance 1212 of FIG. 12.

At operation 1320_6, if a single (i.e., one) gap is identified, the process 1300 terminates at 1320_12. That is, a trajectory is allowed through the gap. If more than one gap are identified at operation 1320_4, the process 1300 proceeds to operation 1320_8. For example, with respect to the AV 1202 and the cutout 1210, the process 1300 identifies two gaps, namely a gap to the right and a gap to the left of the cutout 1210.

At operation 1320_8, the process 1300 performs a detailed check to determine whether other gaps are available, such as described with respect to the gaps 1214, 1216 of FIG. 12. For example, if the gap 1214 is determined to be too small for the AV 1202 to pass to the left of the cutout 1210, then the process 1300 can test whether the AV 1202 can pass through the gap 1216. At operation 1320_8, the process 1300 selects either to pass left or right, and, if neither is possible, the process 1300 determines that a static blockage exists.

At operation 1320_10, if a look-ahead distance is completely checked, the process 1300 terminates at the operation 1320_12; otherwise the process 1300 returns to the operation 1320_2 to check for additional obstacles.

The look-ahead distance can vary with the speed of the AV. For example, depending on the speed of the AV, the look-ahead distance can be varied in order to reduce computation time while still guaranteeing that, if either a blockage or a lateral constraint ahead are detected, sufficient time is available to either stop or comfortably (e.g., safely) steer the AV. For example, if four seconds of look-ahead time are required, then if the AV is travelling at 12 meters per second, the appropriate look-ahead distance would be 48 meters. If the AV were travelling at 30 meters per second (e.g., when traveling on a highway), the appropriate distance would be 120 meters.

Referring again to FIG. 5, the discrete-time speed plan module 528 can generate a target speed and acceleration from the strategic speed plan determined by the reference-trajectory generation layer 504 (and more specifically, by the strategic speed plan module 524). The discrete-time speed plan module 528 can generate the target speed and acceleration from (e.g., based on) longitudinal constraints. In an example, the longitudinal constraints can include stoplines (described below), virtual stoplines (described below), static obstacles (i.e., static objects), and/or dynamic obstacles (i.e., dynamic objects). The discrete-time speed plan module 528 iteratively computes the target speed and acceleration. The target speed and acceleration are calculated for a look-ahead time (i.e., a future time horizon). In an example, the look-ahead time can be 6 seconds.

A stopline represents a line where the AV is required by law to stop before proceeding. In an example, a stopline may be marked by paint on the road. In another example, a stopline may be inferred based on intersection structures and stop sign locations. A virtual stopline can be used by the AV to represent a critical location where the AV is expected, but is not required by law, to stop to check crossing information. For example, on left turns, virtual stoplines can be used in the middle of intersections to cause the AV to stop and yield to crossing traffic.

The discrete-time speed plan module 528 computes a respective target speed for longitudinal constraints (i.e.,

static or dynamic objects that are in the longitudinal direction of the AV) and/or a respective target distance for longitudinal constraints.

The discrete-time speed plan module 528 can set (i.e., select, determine, or otherwise set) a tracking mode for at least some of the static and/or dynamic objects. For example, the tracking mode can be one of "close gap," "maintain gap," "open gap," "brake," or "follow." For example, with respect to the dynamic vehicle 916 of FIG. 9, the discrete-time speed plan module 528 may determine a tracking mode of "close gap." For example, with respect to the objects of the bin 1116 of FIG. 11, the tracking mode can be determined to be "brake." The available tracking modes can include fewer, more, or other tracking modes. The tracking mode can be used to select sets of tuning parameters used by the discrete-time speed plan module 528. The tuning parameters can include target acceleration, hysteresis parameters, and other tuning parameters.

An example is now provided to illustrate the operation of the discrete-time speed plan module 528. If no longitudinal constraints are found, then the discrete-time speed plan module 528 can determine that the AV can be operated based on the strategic speed plan (as determined by the reference-trajectory generation layer 504). On the other hand, if a longitudinal constraint is found (such as with respect to the objects of the bin 1116 of FIG. 11), where the tracking mode is determined to be "brake," the discrete-time speed plan module 528 calculates a speed profile to stop the AV. That is, a deceleration speed profile is calculated to bring the AV to a stop.

In an example, the speed profile uses the current speed of the AV and the distance to the longitudinal constraint to calculate a deceleration speed profile to stop the AV before the longitudinal constraint.

FIGS. 14-16 are examples 1400, 1500, and 1600 of determining dynamic boundaries in accordance with implementations of this disclosure, these implementations being outside the subject-matter of the claims. That is, FIGS. 14-16 are examples of adjusting a drivable area for dynamic objects as described with respect to the operation 850 of FIG. 8. That is, the examples 1400, 1500, and 1600 illustrate determining, along the coarse driveline of an AV, where the AV can be driven with reference to dynamic objects.

Each dynamic object can be classified into at least one of several available classes. In an example, the available classes include "lateral constraint," "longitudinal constraint," "oncoming, lateral constraint," and "oncoming, longitudinal constraint." Other classes can be available.

A dynamic object that is classified as a "lateral constraint" affects the AV's path but not speed. For example, the dynamic object may be moving in a direction generally orthogonal to that of the AV. That is, the dynamic object may be moving, from either the left or the right side of the AV, without impeding (i.e., obstructing) the path of the AV. As such, a trajectory planner, such as the trajectory planner 500 of FIG. 5, may need to adjust the trajectory of the AV to avoid the dynamic object. That is, the AV may need to move over (left or right) to avoid a collision with the dynamic object.

A dynamic object that is classified as a "longitudinal constraint" affects the speed but not the path of the AV. For example, the dynamic object may be moving generally in the same direction as the AV and may be in the path of the AV. That is, the longitudinal constraint object impedes (i.e., obstructs) the path of the AV at the current speed of the AV. As such, the trajectory planner of the AV may not need to adjust the trajectory of the AV but may need to adjust (such as, by the discrete-time speed plan module 528 of the trajectory planner) the speed of the AV to avoid a collision with the dynamic object. An example of a longitudinal constraint is the dynamic vehicle 916 of FIG. 9. That is, a longitudinal constraint object can be a vehicle that is in front of the AV and that is moving slower than the AV. As such, the AV is to be slowed down to avoid rear-ending the dynamic object.

An oncoming, lateral constraint object is similar to a lateral constraint object, with the difference being that the oncoming, lateral constraint object moves in the direction opposite that of the AV. The dynamic oncoming vehicle 918 of FIG. 9 is an example of an oncoming, lateral constraint object. In such a case, the AV may be moved (such as described with respect to the trajectory 962 of FIG. 9) without having to slow down.

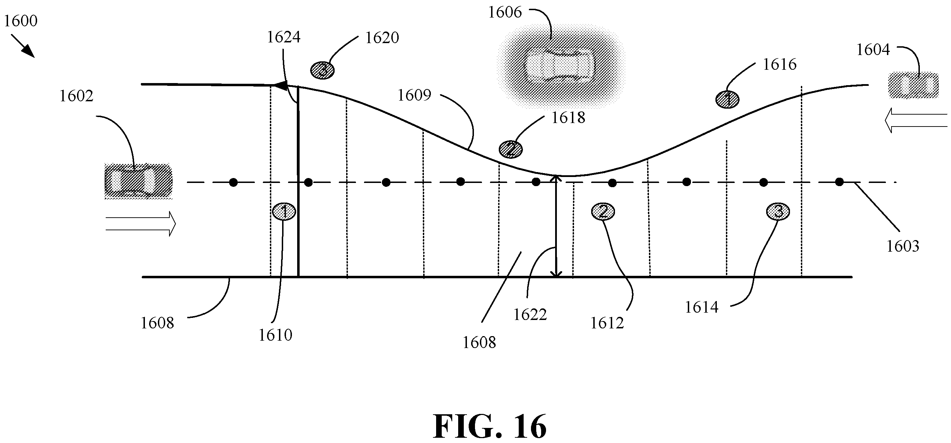

An oncoming, longitudinal constraint object is similar to a longitudinal constraint object, with the difference being that the oncoming, longitudinal constraint object moves in the direction opposite that of the AV. In such a case, and as further described with respect to FIG. 16, the AV is stopped.

As such, a module 532 of the object avoidance layer 506 of FIG. 5 constrains (i.e., applies constraints to) the discrete speed plan of the AV based on the classifications of the dynamic object. For example, an oncoming dynamic object that blocks the trajectory of the AV can be treated as an in-lane (i.e., in the same lane as the AV) static object. For example, a lead dynamic object (i.e., a dynamic object that is in front of and moving in the same direction as the AV) can be treated as a longitudinal constraint in the discrete-time speed plan. For example, a dynamic object that is near the planned driveline of the AV can be treated as a lateral constraint.

In the example 1400 of FIG. 14, an AV 1402 is moving along a coarse driveline 1403. No static objects are found. Accordingly, a left boundary 1417 and a right boundary 1418, which are the computed boundaries of the drivable area adjusting for static objects as described with respect to FIGS. 10-12, coincide with the boundaries of the drivable area.

A vehicle 1404 is predicted to be moving from the right shoulder of the road (or from the lane to the right of the lane that includes the AV 1402) into the path of the AV along a path 1420. As such, the vehicle 1404 is initially classified as a lateral constraint. The predicted path of the vehicle 1404 is a path 1420, which is near (e.g., adjacent to) the coarse driveline 1403. As such, the module 532 continues to classify the vehicle 1404 as a lateral constraint.

The module 532 can determine (e.g., predict) the locations of the AV 1402 at different discrete points in time. That is, the module 532 determines locations of arrivals, along the coarse driveline 1403, at different time points. For example, at time t (e.g., in one second), the AV 1402 is predicted to be at a location 1406; at time t+1 (e.g., in two seconds), the AV 1402 is predicted to be at a location 1408; and at time t+2 (e.g., in three seconds), the AV 1402 is predicted to be at a location 1410.

While the locations at 3 seconds into the future (i.e., a time window of 3 seconds) are shown with respect to the examples 1400, 1500, and 1600, more or fewer locations can be determined (e.g., predicted, calculated, etc.) given a predefined time window. In an example, the time window is six seconds. The frequency of predicted locations can also vary. In an example, the time window can be six seconds, and a location can be determined at every half a second. As such, 12 locations are predicted.

As described above, a second instance of the trajectory planner may be tracking (e.g., predicting the trajectory of) the vehicle 1404. As such, a module 532 of the second trajectory planner can determine (e.g., predict) the locations of the vehicle 1404. For example, at time t (e.g., in one second), the vehicle 1404 is determined to be at a location 1412; at time t+1 (e.g., in two seconds), the vehicle 1404 is determined to be at a location 1414; and at time t+2 (e.g., in three seconds), the vehicle 1404 is determined to be at a location 1416. In an example, the same time window and frequency of predictions can be the same for all instantiated trajectory planners of the AV. However, that need not be the case. The time window and frequency can depend on the type (e.g., bicycle, pedestrian, sports car, sedan, large truck, etc.) of the dynamic object. The drivable area of the AV 1402 is adjusted to remove those areas that correspond to locations of the vehicle 1404.

In the example 1400 of FIG. 14, it is determined that the vehicle 1404 and the AV 1402 are roughly at the same locations at the same times. As such, portions corresponding to the path 1422 are cut out of the drivable area of the AV 1402, such as by setting (in this example, right) boundaries of bins corresponding to the path 1422. As described with respect to the distance 1212 of FIG. 12, if a distance 1424 is such that the AV 1402 can fit through the gap defined by the distance 1424, then the driveline of the AV 1402 is adjusted through the gap (i.e., the AV 1402 is pushed to the left).

In the example 1500 of FIG. 15, an AV 1502 is moving along a coarse driveline 1503. No static objects are found. Accordingly, a left boundary 1517 and a right boundary 1518 of the drivable area are not adjusted for static objects. However, a vehicle 1504 is predicted to be moving from the right shoulder of the road (or from the lane to the right of the lane that includes the AV 1502) into the path of the AV 1502 along a path 1520.

Initially, for example, when the vehicle 1504 is first detected it may be classified as a lateral constraint. As such, the lateral constraint can be applied with respect to the vehicle 1504, as described with respect to the vehicle 1404 of FIG. 14.

As described with respect to FIG. 15, the locations of the AV 1502 at times t, t+1, and t+2 are predicted to be, respectively, locations 1506, 1508, and 1510; and the locations of the vehicle 1504 at time t, t+1, and t+2 are predicted to be, respectively, 1512, 1514, and 1516. As such, the trajectory (i.e., the path 1520) of the vehicle 1504 is predicted to overlap the coarse driveline 1503 of the AV 1502. Accordingly, the vehicle 1504 is then classified as a longitudinal constraint. As such, the classification of the vehicle 1504 is changed from "lateral constraint" to "longitudinal constraint." As such, the trajectory planner need not change the trajectory of the AV 1502 such that the AV 1502 is moved to the left (as described above with respect to FIG. 14); rather, the discrete-time speed plan module 528 can apply a longitudinal constraint to the coarse driveline 1503 of the AV 1502. That is, the discrete-time speed plan module 528 computes a discrete-time speed plan using the vehicle 1504 as a lead vehicle. A tracking mode of "follow" can be set by the discrete-time speed plan module 528 such that the AV 1502 follows behind the vehicle 1504. The discrete-time speed plan module 528 can also determine a discrete-time speed plan to, for example, decelerate the AV 1502 such that the AV 1502 does not arrive at the location 1506 before the vehicle 1504.

In the example 1600 of FIG. 16, an AV 1602 is moving eastward along a coarse driveline 1603, and a vehicle 1604 is moving westward. The vehicle 1604 is predicted to follow a path 1609 in order to avoid a parked vehicle 1606. The locations of the AV 1602, along the coarse driveline 1603, at times t, t+1, and t+2 are predicted to be, respectively, locations 1610, 1612, and 1614. The locations of the vehicle 1604, along the path 1609, at times t, t+1, and t+2 are predicted to be, respectively, 1616, 1618, and 1620.

The trajectory planner determines that the AV 1602 and the vehicle 1604 are predicted to be at roughly the same location (i.e., the location of intersection corresponding to the locations 1612, 1618) at the same time (i.e., at time t+2). As such, should the AV 1602 continue along the coarse driveline 1603, it is most likely to collide with the vehicle 1604.

Although not shown in FIG. 16, the drivable area of the example 1600 is adjusted (i.e., cut out) as described with respect to the cutout 956 of the view 950 of FIG. 9. That is, the drivable area of the AV 1602 is adjusted to remove those areas that correspond to locations of the vehicle 1604, such as by setting (in this example, left) boundaries of bins corresponding to (i.e., overlapping) the path 1609.

At the location of intersection (i.e., the locations 1612, 1618), the trajectory planner can evaluate a width of the drivable area between the point of intersection and the edge of the drivable area. That is, the trajectory planner evaluates a distance 1622 to determine whether a gap defined by the distance 1622 is large enough such that the AV 1602 can pass through. As described above, the distance 1622 is the distance between the calculated boundaries of a bin 1608 that includes the point of intersection.

In a case where the distance 1622 is determined to not be large enough (i.e., the gap is too small), the trajectory planner determines the location at which the AV 1602 can clear the vehicle 1604. In an example, for at least some of the predicted locations of the AV 1602, starting from the intersection point (e.g., the location at time t+X, where X is a positive integer number) and going backward in time (e.g., at least some of the locations at times t+X-1, t+X-2, ..., t-1, t), the trajectory planner determines whether, at that location, the AV 1602 can clear the vehicle 1604. In the example 1600, the trajectory planner determines that the AV 1602 can clear the vehicle 1604 at the location 1610.

In another example, for at least some of the predicted locations of the vehicle 1604, starting from the intersection point (e.g., the location at time t+X, where X is a positive integer number) and going forward in time (e.g., at least some of the locations at times t+X+1, t+X+2, ..., t+X+n), the trajectory planner determines whether, at that location, the AV 1602 can clear the vehicle 1604.

The trajectory planner determines that the AV 1602 can clear the vehicle 1604 when the vehicle 1604 is at the location 1620. As such, the trajectory planner (and more specifically, the module 530) sets a static blockage at location 1624. The trajectory planner (and more specifically, the discrete-time speed plan module 528) then determines a speed and/or a deceleration profile to bring the AV 1602 to a stop at the location 1624. As such, the AV 1602 is brought to a stop at the location 1624 until the vehicle 1604 arrives at the location 1624, at which time the AV 1602 can proceed along the coarse driveline 1603.

In a case where the distance 1622 is determined to be large enough, then the trajectory planner can adjust the coarse driveline 1603 such that the AV 1602 moves to the left to avoid the vehicle 1604 at the intersection location, such as shown with respect to the trajectory 962 of view 960 of FIG. 9.

As such, in an example, the object avoidance layer 506 processes the objects systematically. If an object is not a constraint, then it can be ignored by the object avoidance layer 506.

If an object is a static object and the adjusted drivable area is passable (e.g., the AV can pass through one or more gaps in the drivable area or the adjusted drivable area, as the case may be), then the module 530 can apply the static constraint (e.g., lateral constraint) to determine an adjusted drivable area, as described, for example, with respect to the distance 1212 of FIG. 12.

If an object is a static object and the drivable area (or adjusted drivable area) is not passable, then the discrete-time speed plan module 528 can adjust the discrete-time speed profile, as described, for example, with respect to the location 1122 of FIG. 11.

If an object is a dynamic object and the object is a lateral constraint, then the module 532 can adjust the drivable area (or adjusted drivable area), as described, for example, with respect to FIG. 15.

If an object is a dynamic object and the object is a longitudinal constraint, then the discrete-time speed plan module 528 can adjust the discrete-time speed profile, as described, for example, with respect to FIG. 16. The discrete-time speed plan module 528 can generate a discrete-time speed plan for a future window (e.g., a speed plan for the next 6 seconds) given the constraints.

Returning to FIG. 5, the trajectory optimization layer 508 performs an optimization operation(s), such as a constrained operation, to determine an optimal trajectory for the AV based on the constraints. The trajectory optimization layer 508 can use (i.e., as inputs to the optimization operation) the motion model (e.g., the kinematic motion model) of the AV, the coarse driveline (e.g., the coarse driveline 1004 of FIG. 10, the coarse driveline 1103 of FIG. 11, the coarse driveline 1403 of FIG. 14, etc.) and/or the center points (e.g., the center point 1006) of the bins along the coarse driveline, the discrete-time speed plan, and the adjusted drivable area (e.g., the left and the right boundaries of the adjusted drivable area) to calculate (e.g., determine, generate, etc.) an optimal trajectory for the AV. As such, the optimal trajectory takes into account the coarse driveline and the left and right boundaries, given static and dynamic objects, along the coarse driveline.

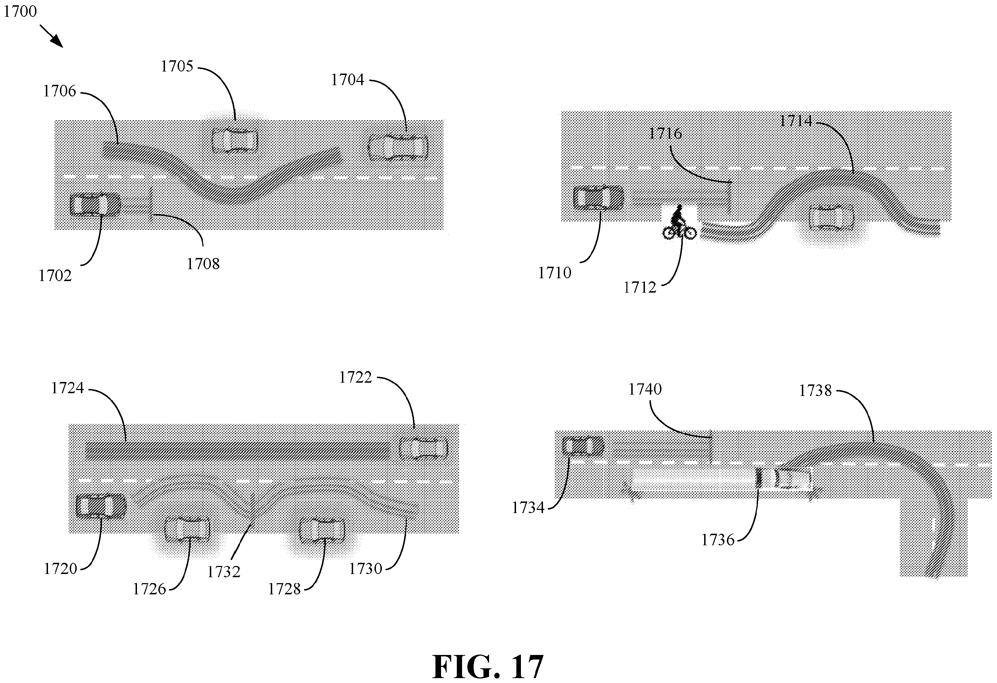

FIG. 17 illustrates additional examples 1700 of trajectory planning in accordance with implementations of this disclosure, these implementations being outside the subject-matter of the claims. In each of the examples below, one or more trajectory planners, such as the trajectory planner 500 of FIG. 5, can be executed within an autonomous vehicle. A first instance of the trajectory planner determines a trajectory for the autonomous vehicle itself. A second trajectory planner instance predicts a trajectory of at least one external dynamic object. In some examples, the first instance can determine a trajectory for the autonomous vehicle itself and can predict the trajectory of the external dynamic object. For simplicity of explanation, "the trajectory planner" is used herein to refer to the first instance and/or the second instance.

In a first example, a trajectory planner of an AV 1702 predicts that an oncoming vehicle 1704 will follow a trajectory 1706 to avoid a static object 1705. The trajectory planner further determines, as described with respect to FIG. 16, that the AV 1702 cannot pass in a gap between the trajectory of the oncoming vehicle 1704 and a right boundary of the drivable area. As such, the trajectory planner determines a speed plan that brings the AV 1702 to a stop at a static blockage 1708 until the oncoming vehicle 1704 is past the static blockage 1708.

In a second example, an AV 1710 determines (i.e., by the trajectory planner of the AV) that a dynamic object 1712 will follow a path 1714. The trajectory planner determines that the AV 1710 cannot pass the dynamic object 1712 without crossing the centerline of the road, which may be a left hard boundary of the drivable area (as described with respect to the drivable area 932 of FIG. 9). As such, the trajectory planner of the AV 1710 determines a speed plan that brings the AV 1710 to a stop at a static blockage 1716.

In a third example, an AV 1720 determines that an oncoming dynamic object 1722 will follow a trajectory 1724. The AV 1720 further determines a trajectory 1730 of the AV 1720 such that the AV 1720 is navigated, along a trajectory 1730, to between a first static object 1726 and a second static object 1728, where the AV 1720 is to wait at a static blockage 1732 for a calculated number of seconds and then proceed. The calculated number of seconds is the time sufficient for the oncoming dynamic object 1722 to pass the location of the static blockage 1732, such as described with respect to the location 1624 of FIG. 16.

In a fourth example, an AV 1734 determines that a large dynamic object 1736 is turning right. The trajectory planner of the AV 1734, using a motion model of the large dynamic object 1736, determines that the large dynamic object 1736 requires a large turning radius and, as such, that the large dynamic object 1736 will follow a trajectory 1738. Accordingly, a speed plan is determined (e.g., calculated, generated, etc.) for the AV 1734 such that the AV 1734 is brought to a stop at a static blockage 1740 until the path of the AV 1734 is clear of the large dynamic object 1736.

To summarize, a trajectory planner (e.g., a driveline data layer of the trajectory planner) according to this disclosure can determine (e.g., generate, calculate, select, etc.) a reference (i.e., coarse) driveline. The trajectory planner can fuse several input data together to determine the coarse driveline. As such, the coarse driveline can be referred to as multi-sourced (i.e., from multiple types of input data). The input data can include HD map data, teleoperation data, recorded paths data, preceding vehicle data, parking lot data, and local perception data. The trajectory planner can use fewer, more, or other inputs.

The trajectory planner (e.g., a coarse-driveline concatenation layer of the trajectory planner) can generate (e.g., determine, calculate, etc.) a strategic speed plan that includes specific speed values along the coarse driveline. The trajectory planner can use at least one of road curvature, road mu, vehicle speed and/or acceleration limits, minimum cruise times, neighborhood types, as well as more, fewer, or other inputs to generate the strategic speed plan.

The trajectory planner (e.g., the coarse-driveline concatenation layer of the trajectory planner) determines an adjusted drivable area for the AV based on at least one or more of hard boundaries (which are set based on static and/or dynamic objects), soft boundaries (e.g., lane markings), filtered lateral limits, multi-hypothesis tracking, extendable drivable area checking, and dynamic object classification (e.g., classifying an object as an oncoming vehicle, a lead vehicle, or a lateral constraint).

The trajectory planner (e.g., a discrete-time speed plan module of the trajectory planner) determines (e.g., calculates) a discrete-time speed plan using, for example, natural acceleration profiles (e.g., a motion model of the AV), lead vehicle acceleration profiles, and determinations of limiting longitudinal constraints.

The trajectory planner (e.g., an optimized desired trajectory layer of the trajectory planner) generates (e.g., calculates, determines, etc.) an optimized trajectory of the AV using, for example, a constrained optimization operation. In an example, the optimization operation can be based on, or can include, a quadratic penalty function. In an example, the optimization operation can be based on, or can include, a logarithmic barrier function. For example, the quadratic penalty function can be used with soft constraints. For example, the logarithmic barrier function can be used with hard constraints.

FIG. 18 is a flowchart diagram of a process 1800 for object avoidance in accordance with the present disclosure but outside the subject-matter of the claims. The process 1800 can be executed by a trajectory planner, such as the trajectory planner 500 of FIG. 5.

At operation 1810, the process 1800 detects a first object along a coarse driveline of a drivable area of the AV. In an example, detecting the first object can mean detecting boundary points, such as the boundary point 1008 of FIG. 10, corresponding to an object. In an example, detecting an object can mean receiving (for example, by interrogating) the object from a world model, such as described with respect to the world model module 402 of FIG. 4. The coarse driveline can be as described, for example, with respect to the coarse driveline 1004 of FIG. 10, the coarse driveline 1103 of FIG. 11, the coarse driveline 1203 of FIG. 12, and so on. The drivable area can be as described with respect to the drivable area 932 of FIG. 9.

At operation 1820, the process 1800 receives a predicted path of the first object. In an example, the process 1800 determines the predicted path of the first object based on a classification of the first object and a motion model of the first object. In another example, the process 1800 receives the predicted path of the first object from a trajectory planner that predicts a path for the first object. The predicted path can be as described with respect to the trajectory 336, the trajectory 346, the trajectory 354, and the trajectory 364 of FIG. 3; the path 1420 of FIG. 14; the path 1520 of FIG. 15; and the path 1609 of FIG. 16.

At operation 1830, the process 1800 determines, based on the predicted path of the first object, an adjusted drivable area. In an example, and as described above, portions can be cut out of the drivable area to generate the adjusted drivable area. In another example, such as in a case where the first object is neither a lateral nor a longitudinal constraint, as described above, the adjusted drivable area can be the same as the drivable area.

At operation 1840, the process 1800 determines a trajectory of the AV through the adjusted drivable area. The trajectory can be determined as described with respect to the trajectory optimization layer 508 of FIG. 5.

In an example, determining, based on the predicted path of the first object, the adjusted drivable area can include dividing at least a portion of the coarse driveline into bins, assigning the first object to one bin of the bins, and determining the adjusted drivable area based on the one bin. The bins can be, for example, as described with respect to FIG. 10. Determining the adjusted drivable area based on the one bin can include determining (e.g., calculating) boundaries for at least the one bin, such as described above.

In an example, determining, based on the predicted path of the first object, the adjusted drivable area can include determining respective object locations of the first object at discrete time intervals, determining respective AV locations of the AV at the discrete time intervals, and determining the adjusted drivable area based on the respective object locations and the respective AV locations. The respective object locations of the first object, the AV locations, and the determining the adjusted drivable area can be as described with respect to FIGS. 14-16.

In an example, the process 1800 can include classifying the first object. In another example, the process 1800 can receive the classifying of the first object, such as from the world model module 402. In a case where the first object is classified as an oncoming longitudinal constraint, determining the trajectory of the AV through the adjusted drivable area can include stopping the AV until a second time subsequent to a first time that an object location of the first object meets an AV location of the AV, such as described with respect to FIG. 16.

In a case where the first object is classified as a longitudinal constraint, determining the trajectory of the AV through the adjusted drivable area can include slowing the AV to drive behind the first object, such as described with respect to FIG. 15.

In an example, the process 1800 can also include classifying the first object as a lateral constraint, a longitudinal constraint, an oncoming lateral constraint, or an oncoming longitudinal constraint.

In an example, determining the trajectory of the AV through the adjusted drivable area can include determining that the first object is a static blockage and stopping the AV, such as described with respect to FIG. 16.

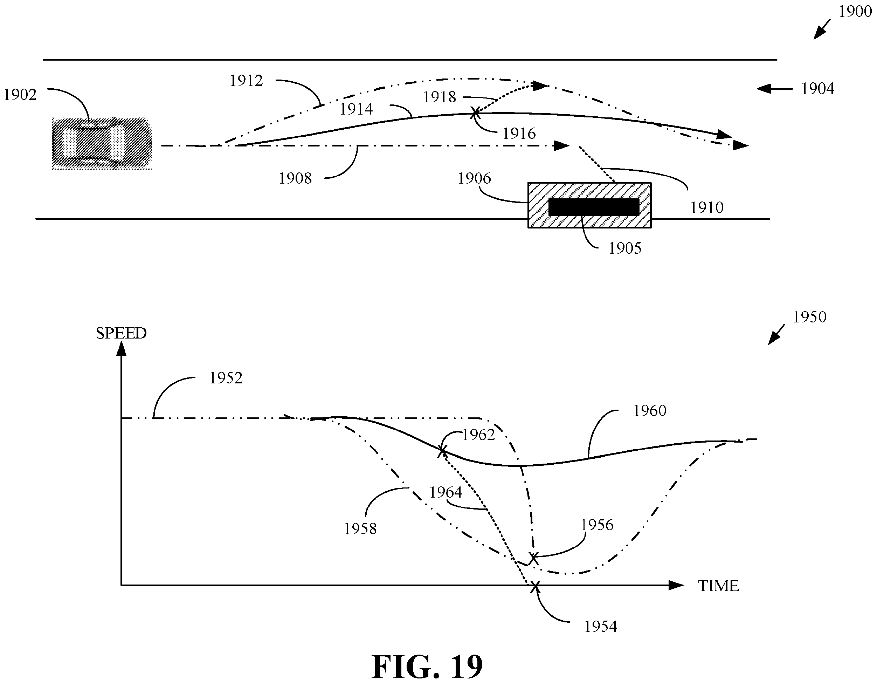

FIG. 19 are illustrative examples of path planning according to implementations of this disclosure but outside the subject-matter of the claims. An example 1900 illustrates lateral contingency planning. An example 1950 illustrates speed (i.e., longitudinal) contingency planning.

In the example 1900, an AV 1902 is in a lane 1904. An object 1905 is on the side of the lane 1904. As uncertainty may be associated with the sensor data and/or the perceived world objects, a bounding box 1906 that expands the actual/real size of the object 1905 can be associated with the object 1905. While a box (i.e., a bounding box) of uncertainly is described herein, the shape of uncertainty can be any other shape. In an example, the shape can be a bubble.

The size of the bounding box of uncertainty may be a function of one or more of range uncertainty, angle (i.e., pose, orientation, etc.) uncertainty, or velocity uncertainly results. For example, with respect to range uncertainly (i.e., uncertainty with respect to how far the object 1905 is from the AV 1902) the AV (more specifically, a world modeling module of the AV) can assign a longer bounding box of uncertainty to an object that is perceived to be farther than a closer object. For example, with respect to angle uncertainly (i.e., uncertainty with respect to the orientation/pose of the object 1905), can result in assigning different widths to the bounding box of uncertainty. Additionally, and as described above, there may be uncertainly with respect to the intention of the object 1905 and/or speed of the object 1905. For example, it may not be clear whether the object 1905 will remain parked or suddenly move into the lane 1904.

Based on current perceived conditions, the AV 1902 (more specifically, a trajectory planner of the AV 1902) can plan a nominal path 1908 for the AV 1902. The nominal path 1908 can be the trajectory determined by process 1800, as described with respect to operation 1840. With the nominal path 1908, the AV 1902 can basically go straight forward. In the absence of contextual information about the object (e.g., that a door might open), the nominal path 1908, in many cases, would be a natural method of passing the lateral constraint. For example, drivers routinely closely pass by other similar constraints such as bushes and barriers.

The nominal path 1908 does not take into account potential hazards. If the object 1905 is classified as a vehicle, then it may be possible that a door 1910 of the object 1905 may open at any point in time. The door 1910 is illustrated as a dashed line to indicate that the door 1910 is not yet open but that it might open. It is also possible that the door 1910 may open at a point in time where the AV 1902 is too close to the object 1905. In such a situation, either the AV 1902 is too close and cannot be controlled to stop before colliding with the door 1910; or the AV 1902 may need to perform a drastic emergency maneuver to avoid the door 1910. The drastic emergency maneuver may be a hard breaking maneuver or a sharp turn away from the door 1910, or a combination thereof. Such drastic emergency maneuver may, at the least, be undesirable (and likely predicted) by an occupant of the AV.

To pre-plan for such a hazard, a naive path 1912 may be planned for the AV 1902. The naive path 1912 is such that the AV 1902 moves significantly laterally to avoid the door 1910 whether in fact the door 1910 opens or not. Controlling the AV 1902 according to the naive path 1912 may also be undesirable by an occupant of the AV 1902.

Instead of the nominal path 1908 or the naive path 1912, a contingency trajectory 1914 can be planned for the AV 1902. The contingency trajectory 1914 can result in a slight lateral deviation from the nominal path 1908 that is not as drastic of a deviation as that of the naive path 1912. Yet the contingency trajectory 1914 can be such that if the door 1910 does indeed open, the AV can still be controlled to perform a reasonable emergency maneuver. For example, if the door 1910 opens (or is detected to be open) when the AV 1902 reaches a location 1916, then the AV 1902 can be controlled to perform a reasonable emergency maneuver to follow a path 1918.

To summarize, the door 1910 indicates the maximum extent to which the car door would open; the nominal path 1908 indicates a path that disregards observations and/or predictions with low associated likelihoods; the naive path 1912 indicates a naive path that avoids the door; the contingency trajectory 1914 is a path for the door potentially opening; and the path 1918 is the path (i.e., the emergency maneuver) to be taken if the door opens within the limits of emergency maneuverability of the AV. The naive path 1912 can be considered an awkward path if the door does not open.

In some situations, it may be desirable to control the AV 1902 according to the naive path 1912. For example, if the likelihood of the hazard (i.e., the door 1910 opening) is high, then the naive path 1912 may be more preferable than the contingency trajectory 1914. For example, if the object 1905 was classified as a dynamic object (i.e., a moving vehicle) that has become a static object (i.e., a stopped vehicle at the side of the road), then there is a very high likelihood that the door 1910 will open. Additionally, if a driver is perceived inside the object 1905, then the likelihood is even greater (e.g., close to 100%) that the door 1910 will open. As such, by adopting the naive path 1912, so that the AV 1902 is gradually moved laterally immediately, if the door 1910 did open, no emergency maneuver (reasonable or otherwise) will be required if/when the door opens.

The example 1950 illustrates speed (i.e., longitudinal) contingency planning. The example 1950 assumes that an AV may be driving according a nominal speed plan 1952. The AV may be driving on a turning road and that there is an object 1954 that the sensors of the AV can not perceive because the object 1954 is occluded.

The AV can proceed according to the nominal speed plan 1952 thereby disregarding the possibility that the object 1954 may be present. If the AV were to proceed along the nominal speed plan 1952, then, when eventually the object 1954 is perceived, it may not be possible to stop the AV in time. As shown by a speed 1956 when the AV reaches the object 1954, the speed 1956 is not zero. To account for the possibility that an object may be around the turn, a naive speed plan 1958 may be determined (e.g., planned, calculated, etc.) for the AV. The naive speed plan 1958 significantly reduces the speed of the AV whether there indeed is or isn't the object 1954 around the turn.

A better speed plan (i.e., the contingency speed plan 1960) is such that the AV is capable of stopping if the object 1954 is ultimately perceived. If the AV is controlled according to the contingency speed plan 1960, then if the object 1954 is perceived when the AV reaches location 1962, an emergency speed plan 1964 (i.e., an emergency maneuver) can be performed so as to bring the speed of the AV to zero (or to a following speed) before the AV arrives at the location of the object 1954. As such, the contingency speed plan 1960 makes it possible for the AV to, for example, stop in time if the object 1954 is detected.

To summarize, the nominal speed plan 1952 is a speed plan that disregards low likelihood observations and/or predictions; the naive speed plan 1958 is a naive speed plan for possible blockage; the contingency speed plan 1960 is a speed plan in preparation for a blockage; and emergency speed plan 1964 is the speed plan if the blockage (e.g., emergency) materializes.

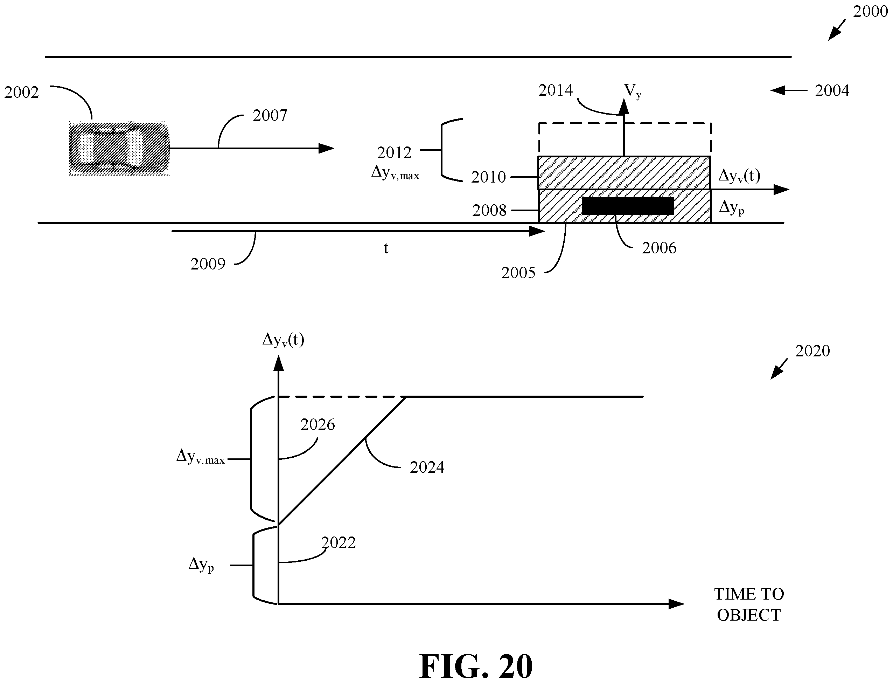

FIG. 20 is an example 2000 of a definition of a hazard zone according to implementations of this disclosure. The example 2000 presents a generalized approach to defining a hazard zone (or simply, a hazard). However, other definitions are possible. Once the hazard is defined (e.g., assigned, determined, calculated, assessed, etc.) as explained below with respect to FIG. 20, the specific hazard (or the type of hazard) itself can become irrelevant to computing (e.g., determining, selecting, calculating, etc.) a contingency plan. The contingency plan can be a contingency trajectory or path, a contingency speed profile, or a combination thereof. Once a contingency plan is computed, an autonomous vehicle can be operated (i.e., controlled) according to the contingency trajectory. Once the hazard is passed, the AV can be operated according to the nominal trajectory.

The example 2000 illustrates an AV 2002 that is traveling on a road 2004. An object 2006 is identified on the side of the road 2004. The object 2006 may be, for example, a parked vehicle, a pedestrian, or some other object. The AV 2002 is moving toward the object 2006, as indicated by a trajectory 2007. A bounding box 2005 is associated with the object 2006 due to uncertainty, as described with respect to the bounding box 1906 of FIG. 19. A lateral pose uncertainty 2008 (denoted $\Delta y_p$) defines an initial determined (e.g., perceived, identified, set, etc.) later size of the object 2006. A time 2009 (denoted t) indicates the time of arrival of the AV 2002 at the hazard (i.e., the bounding box 2005).

A maximum lateral incursion 2012 (denoted $\Delta y_{v,max}$) identifies the maximum lateral incursion into the road 2004 due to the object 2006 possibly moving laterally. The object 2006 possibly moving can mean that the object 2006 itself is moving or a part of the object 2006 is moving. In an example, and as mentioned above, the object 2006 can be classified as a parked car. As such, a door of the parked vehicle can open, as described with respect to FIG. 19. As the maximum size of a car door is approximately 1 meter, the maximum lateral incursion 2012, can be set to $\Delta y_{v,max} = 1$ meter.

A velocity 2014 (denoted $V_y$) indicates the velocity at which the hazard enters the road 2004. For example, in the case that the object is identified as a parked vehicle, the velocity 2014 can be set to a nominal speed at which a car door may open.

In an example, and as mentioned above, the object 2006 can be classified as a pedestrian who is determined to be 50 meters ahead of the AV 2002 along the trajectory 2007. The pedestrian may be determined to be crossing the road 2004. The pedestrian may be determined to have a maximum intrusion of 1 meter per second. As such, the velocity 2014 can be set to $V_y$ = 1 meters/second.

Given the above, a possible incursion 2010 (denoted $\Delta y(t)$) can be calculated using formula (1) as

$$\Delta y(t) = \Delta y_p + min(V_y{*}t, \Delta y_{v,max}) \qquad (1)$$

That is, the possible incursion 2010 of the object 2006 into the road 2004 is given by $\Delta y_p$ (i.e., the current width of the bounding, as determined at the time that the possible incursion 2010 is calculated) plus the minimum of $V_y{*}t$ (i.e., how much can the object, or a portion thereof, move into the road 2004 between now and the time that the AV 2002 arrives at the hazard, given the speed at which the object is/can move into the road 2004) and $\Delta y_{v,max}$ (i.e., the maximum lateral incursion 2012).

The initial incursion $\Delta y_p$ can change over time. For example, as the AV 2002 approaches the object 2006, the sensor uncertainty is reduced and the size of the bounding box of uncertainty can also be reduced.

The possible incursion 2010 changes over time as the AV 2002 approaches the hazard. As the AV 2002 approaches the object, the time of arrival of the AV 2002 at the object 2006, t, approaches 0 (i.e., $t \rightarrow 0$); and the hazard zone collapses to (i.e., is reduced to) the pose or the bounding box of uncertainty associated with the hazard. That is, as the AV 2002 approaches the object 2006, the size of the bounding box is reduced as the uncertainty is reduced. That is, the bounding box of uncertainty collapses as the perception (i.e., sensor) range decreases. Additionally, the amount (e.g., distance) of lateral movement of the object onto the road 2004 is also reduced.

Returning to the example above where the object 2006 is classified as a pedestrian who is moving across the road 2004 at a speed of $V_y$ = 1 meters/second. Given the current speed of the AV 2002, it may be determined that the AV 2002 will arrive at the object 2006 in five seconds. As such, the pedestrian is estimated to be capable of traveling up to 5 meters into the road by the time the AV 2002 arrives at the pedestrian. That is, the pedestrian can get, essentially or substantially, across the whole of the road 2004. However, as the AV 2002 gets closer and closer to the object 2006 (i.e., the pedestrian), the situation may evolve itself because the pedestrian may not actually get that far onto the road.

A graph 2020 of FIG. 20 illustrates how the value of the possible incursion 2010 ($\Delta y_v(t)$) evolves over time. At an initial time, the possible incursion 2010 is equal to the lateral pose uncertainty 2008 (as indicated by an initial value 2022). As the time to arrive at the object shortens, the object (i.e., the hazard) can move more into the road (as indicated by a slope 2024) up to the maximum lateral incursion 2012 (as indicated by a maximum increase 2026).

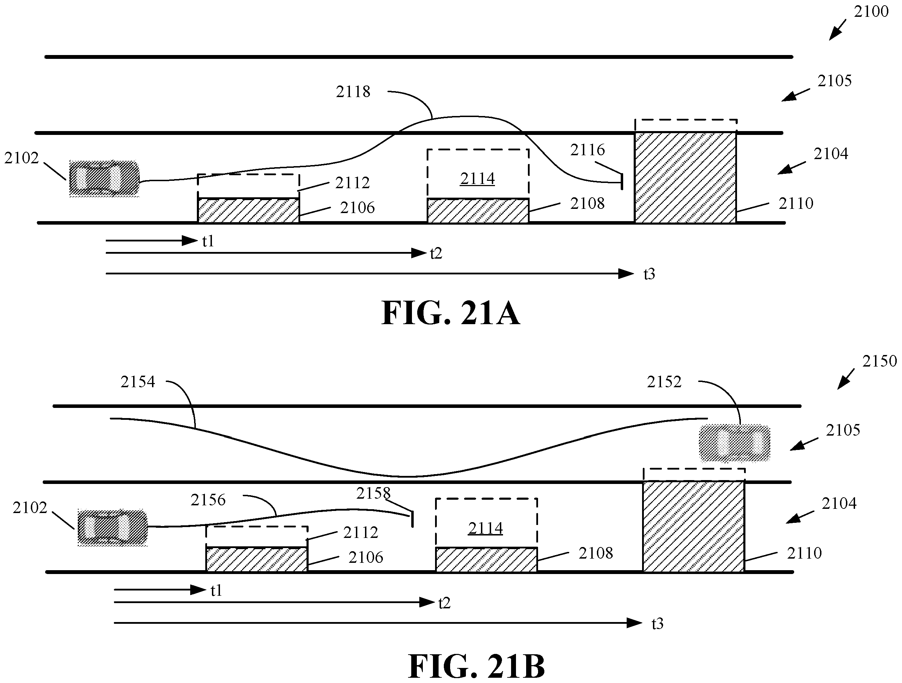

FIGS. 21A-21E are illustrations of examples of contingency planning according to implementations of this disclosure but outside the subject-matter of the claims. A scene 2100 of FIG. 21A illustrates that an AV 2102 is traveling in a lane 2104 of a two-lane road. A lane 2105 is the opposite-traffic lane. The scene 2100 illustrates that three hazards are perceived by the AV 2102; namely a first hazard 2106, a second hazard 2108, and a third hazard 2110. The first hazard 2106 is t1 time units (e.g., seconds) away from the AV 2102. The second hazard 2108 is t2 time units away from the AV 2102. The third hazard 2110 is t3 time units away from the AV 2102.

As the first hazard 2106 is very close to the AV 2102, the first hazard 2106 can incur by only a small lateral distance (as indicated by a maximum lateral incursion 2112) onto the lane 2104. As such, a contingency trajectory 2118 moves the AV 2102 only slightly laterally. The second hazard 2108 can incur further into the lane 2104, as indicated by maximum lateral incursion 2114. As the second hazard 2108 does not block the path of the AV 2102, the contingency trajectory 2118 can be such that the AV 2102 can also go around the second hazard 2108. It is noted that, in this example, the contingency trajectory 2118 is such that the AV 2102 crosses onto the lane 2105 to go around the second hazard 2108. However, with respect to the third hazard 2110, if the third hazard 2110 begins to cross the lane 2104 at an initial time as the AV 2102 is approaching third hazard 2110, it is likely that the third hazard 2110 is going to be in the middle of the lane 2104 by the time t3. The third hazard 2110 may become a longitudinal constraint, as described above. As such, the contingency trajectory 2118 can include a contingency speed profile that slows down the AV 2102 and prepares it to stop (with an emergency maneuver) at a location 2116.

As such, and consistent with the description of FIG. 20, for each of the first hazard 2106, second hazard 2108, and third hazard 2110, respective lateral pose uncertainty $\Delta y_p$, a time t, velocity $V_y$, and maximum lateral incursion $\Delta y_{v,max}$ can be used to calculate, using the formula (1) a maximum extent of lateral avoidance when the AV 2102 arrives at that object. A first lateral contingency can be calculated for the first hazard 2106 and a second lateral contingency can be calculated for the second hazard 2108. However, with respect to the third hazard 2110, since the path of the AV 2102 may be blocked by the time that the AV 2102 arrives at the third hazard 2110, a longitudinal (i.e., speed) contingency is calculated.

The speed contingency can be such that the AV 2102 is slowed to the velocity of the hazard in the longitudinal direction, $V_L$. That is, the AV 2102 is slowed down sufficiently to be able to follow the hazard. In the case that the hazard is not moving in the longitudinal direction (i.e., $V_L$ = 0), then the AV is stopped at the hazard.

A scene 2150 of FIG. 21B is similar to the scene 2100 with the exception that a vehicle 2152 is traveling in the lane 2105. As noted above, in the scene 2100, the contingency trajectory 2118 is such that the AV 2102 crosses onto the lane 2105 to go around the second hazard 2108. However, the scene 2150 is similar to the situation 350 of FIG. 3. As such, a hard limit 2154 may be set on the drivable area of the AV 2102, such as described above with respect to calculating adjusted drivable areas. The second hazard 2108 is then a longitudinal constraint. Consequently, a contingency trajectory 2156 moves the AV 2102 only slightly around the first hazard 2106, as in the scene 2100. However, the contingency trajectory 2156 includes a speed contingency such that the AV 2102 can be stopped, if necessary, at a location 2158. As such, in the scene 2150, the second hazard 2108 becomes a speed contingency and a speed profile is set such that the AV 2102 can be slowed to the longitudinal velocity, $V_L$, of the blocking hazard.

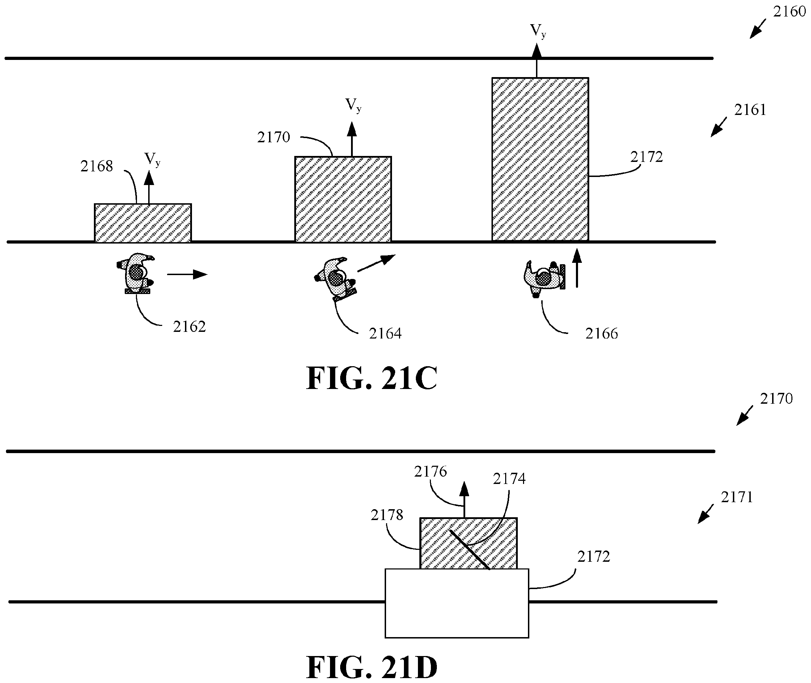

A scene 2160 of FIG. 21C illustrates that three pedestrians are identified by an AV (not shown) near a road 2161. A first pedestrian 2162 is perceived to be walking along or near the road 2161. As such, a maximum lateral incursion $\Delta y_{v,max}$ and an incursion velocity $V_y$ associated with the first pedestrian 2162 may be low (e.g., small values). As such, while the first pedestrian 2162 is a hazard, the hazard is not likely to come onto to road. A second pedestrian 2164 is perceived noisily near the road. As such a maximum lateral incursion $\Delta y_{v,max}$ and an incursion velocity $V_y$ associated with the second pedestrian 2164 may have medium values. A third pedestrian 2166 is perceived to be walking toward the road 2161. As such a maximum lateral incursion $\Delta y_{v,max}$ and an incursion velocity $V_y$ associated with the third pedestrian 2166 may have high values.

A scene 2170 of FIG. 21D illustrates a hazard associated with a car 2172. More specifically, the hazard is associated with the opening of a car door 2174. The car door 2174 has a maximum intrusion described/illustrated by a bounding box. The hazard has a maximum lateral incursion 2178 (i.e., $\Delta y_{v,max}$) and a velocity 2176 (i.e., $V_y$), which can both be low values.

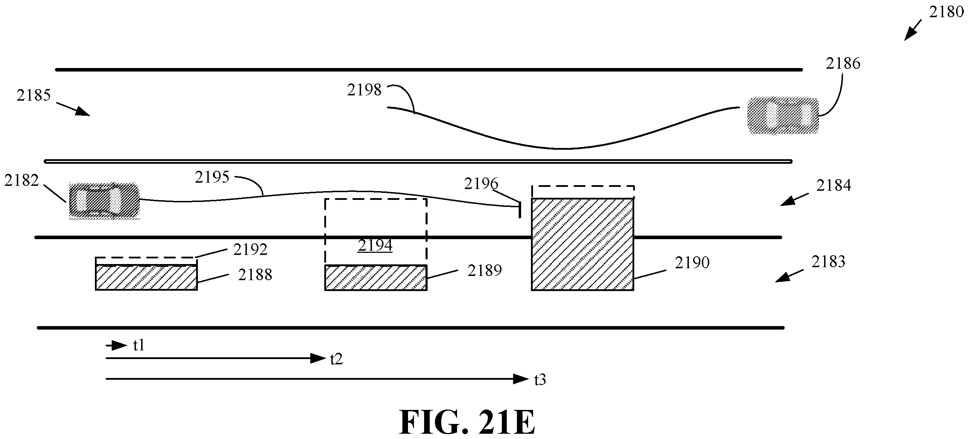

A scene 2180 of FIG. 21E illustrates that an AV 2182 is traveling on a road that includes a left lane 2184, a right lane 2183, and an opposite-traffic lane 2185. The AV 2182 is traveling in the left lane 2184. Three vehicles 2188, 2189, and 2190 are perceived by the AV to be traveling in the right lane 2183 and are, respectively, 11, t2, and t3 time units away from the AV 2182. The vehicles 2188, 2189, and 2190 may be stopped or slowly moving, as compared to the speed of the AV 2182. An oncoming vehicle 2186 is perceived in the opposite-traffic lane 2185.

In the scene 2180, while there is no current indication to that effect (for example, no left turn signals are on), there is a chance that any one of the vehicles 2188, 2189, and 2190 can move into the left lane 2184. As the vehicle 2188 is very close to the AV 2182, the vehicle 2188 cannot move sufficiently, if at all, into the lane 2184. The vehicle 2188 may not move laterally by more than a distance 2192. As such, no lateral contingency is necessary. If the vehicle 2188 does move into the lane 2184, the AV 2182 can perform an emergency maneuver to avoid the vehicle 2188 without the need for a lateral contingency. With respect to the vehicle 2189, a maximum intrusion 2194 is possible. As such, a contingency trajectory 2195 can be such that the AV 2182 is moved laterally sufficiently such that if the hazard materializes, then the AV 2182 would be capable of performing an emergency maneuver (e.g., swerve further) to avoid the hazard. As for the vehicle 2190, it can come completely into the right lane 2183, and because of a hard limit 2198 on the drivable area of the AV 2182 (due to the oncoming vehicle 2186), the vehicle 2190 may become a longitudinal constraint. As such the contingency plan for the AV 2182 can include a contingency speed profile so that the AV 2182 can be capable of slowing to the longitudinal velocity $V_L$ of the vehicle 2190 at a location 2196.

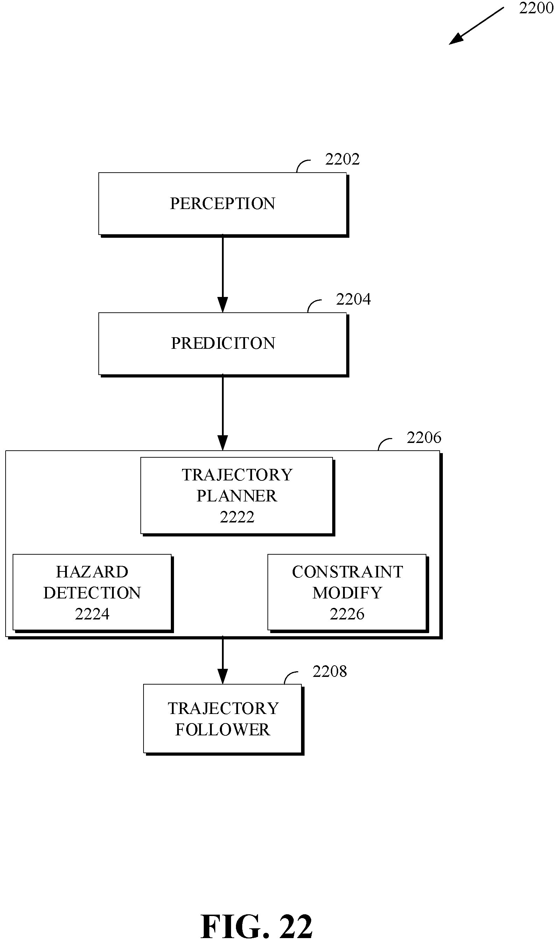

FIG. 22 is a diagram illustrating modules of a system 2200 for contingency planning according to implementation of this disclosure. The system 2200 can be included is an AV, such as the vehicle 100 of FIG. 1 or any other autonomous vehicle described herein, as executable instructions that can be stored in a memory (such as the memory 122 of FIG. 1) and executed by a processor (such as the processor 120 of FIG. 1). At least one of the modules can be implemented as a hardware module (such as, for example, an application-specific integrated circuit, or the like).

The system 2200 can include a perception module 2202, a prediction module 2204, a planning module 2206, and a trajectory follower module 2208. The perception module 2202 can receive sensor data and maintain world objects based on the sensor data. The prediction module 2204 can predict future behaviors of the perceived objects. As such, a world model module, such as the world model module 402 of FIG. 4 can include the perception module 2202 and the prediction module 2204.

The planning module 2206 can include a trajectory planner 2222, a hazard detection module 2224, and a constraint modification module 2226.

The trajectory planner 2222 can be as described with respect to the trajectory planner 408 of FIG. 4 or the trajectory planner 500 of FIG. 5. In an example, the planning module 2206 can generate a nominal trajectory (path). The nominal trajectory can be a desired/smooth trajectory that is generated based on currently perceived lateral and longitudinal constraints, as described above. In an example, the trajectory planner uses a model predictive control (MPC) method to generate the nominal trajectory.

The trajectory planner 2222 can also be used to generate a contingency trajectory (also referred to herein as a contingency path or a contingency plan) based on hazards detected by the hazard detection module 2224. The trajectory planner 2222 can calculate the contingency trajectory according to a different set of constraints that those used for the nominal trajectory. For example, a drivable area that is used to generate the nominal trajectory may be further restricted by the detected hazards. For example, the drivable area may be restricted more or less over time based on the detected intrusion. For example, maneuverability parameters (related to an emergency maneuver that the AV may have to perform if a hazard materialized) can be used as constraints in the generating of the contingency trajectory.

The hazard detection module 2224 can detect hazards based on perceived objects. A hazard associated with a perceived object can be detected based on one or more hypotheses that are maintained for the object. A hypothesis can be based on HD map data, social or driving behaviors, or any other criteria.

The constraint modification module 2226 modifies the constraints that are used by the trajectory planner 2222 in the generating of the contingency trajectory. For example, the constraint modification module 2226 can modify the constraints based on the likelihood of a hazard, the emergency capabilities of the AV, or some other conditions. The emergency capabilities of the AV refer to, for example, the maximum rate of deceleration (or acceleration) and/or steering of the AV given the mass or load of the AV under the current road topology and conditions. Emergency capabilities may also be set according to passenger preferences. For example, a passenger requiring smooth behavior may cause more restrictive constraints that reduce any emergency behavior significantly. In an example, the AV can include a user interface, via which, the passenger can communicate the passenger's preferences. In an example, the user interface can be available on a portable (e.g., handheld) device of the passenger; such as a mobile application that can communicate with the AV (or modules therein).

The trajectory follower module 2208 can be responsible for computing actuator commands such that the AV can accurately follow the contingency plan. In some examples, the trajectory follower module 2208 can also be responsible for computing emergency actuator commands using raw perception directly such that the AV avoids objects detected at the last second while keeping the AV within the hard drivable limits computed by the predictive trajectory planner. In a typical setup, a predictive algorithm of the trajectory follower module 2208 may be configured to produce plans at 10hz; on the other hand, a reactive trajectory follower of the trajectory follower module 2208 may be configured to produce plans at 100hz.

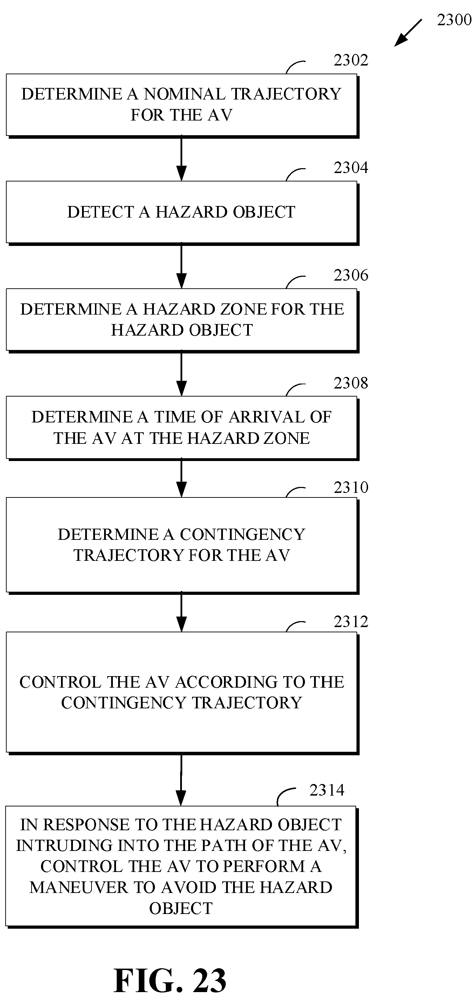

FIG. 23 is a flowchart diagram of a process 2300 for contingency planning for an autonomous vehicle (AV) according to implementations of this disclosure but outside the subject-matter of the claims. Autonomous driving as used herein, should be understood to encompass a vehicle that includes an advanced driver assist system (ADAS). An ADAS can automate, adapt and/or enhance vehicle systems for safety and better driving such as to circumvent and/or correct driver errors. At least some steps of the process 2600 can be executed by a trajectory planner, such as the trajectory planner 408 of FIG. 4, the trajectory planner 500 of FIG. 5, or the planning module 2206 of FIG. 22. The process 2600 can be stored as executable instructions in a memory, such as the memory 122 of FIG. 1. The executable instructions can be executed by a processor, such as the processor 120 of FIG. 1. The process 2600 can be executed by an apparatus (e.g., an autonomous vehicle), such as the vehicle 100 of FIG. 1, or any other autonomous vehicle described herein.

An incursion is calculated for the object. The incursion can be calculated as described with respect to formula (1). As described above, the incursion has a maximum intrusion and an incursion (intrusion) velocity. For example, a can door does not instantaneously appear in the path of the AV. As the door is open, it is open with a certain speed. Based on the calculated incursion, a contingency plan is determined. The contingency plan can be as described with respect to the contingency trajectory 1914 of FIG. 19, the contingency speed plan 1960 of FIG. 19, the contingency trajectory 2118 of FIG. 21A, the contingency trajectory 2156 of FIG. 21B, or any other contingency trajectory/plan described above. The AV is then operated (i.e., controlled) according to the contingency plan.

At a high level, the process 2300 can be summarized as, while the AV is traveling in a lane, a road user (e.g., an object) is identified based on sensor data. One or more road users can be identified. Position and/or velocity information can be identified with/for the object based on a state maintained for the object. The state can be as described with respect to discrete state information and/or the continuous state information described above. An uncertainty can be associated with the object. As described above, the uncertainty can be due to sensor noise, intention uncertainty, or other uncertainty. An uncertainty zone (for example, as described with respect to the bounding box 1906 of FIG. 19) can be associated with the object. A contingency plan (trajectory), which can include at least one of a lateral contingency or a longitudinal contingency is calculated for the AV.

At 2302, the process 2300 determines (e.g., calculates, selects, plans, etc.) a nominal trajectory for the AV. The nominal trajectory is a desired/smooth trajectory which is calculated based on currently perceived objects. In an example, a model predictive control (MPC) method can be used to determine the nominal trajectory.

At 2304, the process 2300 detects a hazard object. While the hazard object does not currently intrude into the path of the vehicle, the hazard object is likely to intrude at some future point in time. That the hazard object may intrude at some future point in time can be determined based on maintaining different possible hypotheses (intentions) for future behaviors of the object. Some hypotheses can be based on road configurations, which can be determined based on HD map data. For example, the HD map data may indicate that there is an upcoming fork in the road, that a right lane is merging into the lane of the AV, and the like. Some hypotheses can be based on social behaviors and road behaviors. For example, when a moving car then stops on the side of the road, it is likely that a person will come out of the road. For example, pedestrians, even if they are moving illegally, should be given the right of way.

At 2306, the process 2300 determines (e.g., calculates, etc.) a hazard zone for the hazard object. The hazard zone can be determined using the formula (1). As such, determining the hazard zone can include determining the hazard zone based on a maximum lateral incursion into the path of the AV of the hazard object and a velocity at which the hazard object enters the path of the AV. At 2308, the process 2300 determines a time of arrival of the AV at the hazard zone. At 2310, the process 2300 determines a contingency trajectory for the AV. The contingency trajectory can include at least one of a lateral contingency or a longitudinal contingency. The contingency trajectory can be determined using the time of arrival of the AV at the hazard zone.

At 2312, the process 2300 controls the AV according to the contingency trajectory. At 2314, the process 2300 controls the AV to perform a maneuver to avoid the hazard object, in response to the hazard object actually intruding into the path of the AV. In an example, a reactive trajectory control module, such as the reactive trajectory control module 410 of FIG. 4, can detect that the hazard has materialized, calculate a safe deviation from the predictive plan, and cause the AV to perform the maneuver (i.e., an emergency maneuver).

In an example, the process 2300 can further include, in response to determining that the contingency trajectory is not blocked, operating the AV according to the contingency trajectory; and in response to determining that the contingency trajectory is blocked, determining a longitudinal contingency for controlling the AV.

In an example, the lateral contingency can be determined using maneuverability parameters of the AV. The maneuverability parameters of the AV can include at least one of a mass of the AV or a load of the AV. Such maneuverability parameters can be used as constraints in an MPC method for determining a contingency plan. In an example, the lateral contingency can be determined further using additional constraints such as at least one of road topology or road conditions.

In some examples, the contingency (e.g., the lateral contingency or the longitudinal contingency) can be further determined based on a likelihood of the hazard object actually intruding into the path of the AV. That is, the amount (e.g., extent) of the contingency can be based on the likelihood of the hazard actually realizing. The likelihood of the hazard actually realizing can be used to mitigate the effect of contingency planning on the ride quality of the AV. can mitigate the effect of contingency planning on AV ride quality.

Mitigating the effect of contingency planning can mean actively choosing the extent of the contingency maneuver. For example, in the lateral contingency case, if a previously moving car just parked, then the likelihood is very high that the driver will open the door. As such, the lateral contingency can be such that the AV can be moved sufficiently in advance so that an emergency maneuver is not required at all (or a small emergency maneuver is required) if the hazard materializes later on. Such lateral contingency is not likely to be acceptable for every detected parked car.

To reiterate, to mitigate the effect of contingency planning on ride quality, if there is a high likelihood of hazard realization, even if the hazard does not eventually materialize, then a longitudinal contingency (if one is required at all) can be a large speed deviation from a nominal speed; and a lateral contingency (if one is required at all) can be a large deviation from a nominal path. On the other hand, if there is a low likelihood of hazard realization, even before the hazard materializes, then a longitudinal contingency (if one is required at all) can be small speed deviation from the nominal speed; and a lateral contingency (if one is required at all) can be a small deviation from the nominal path.

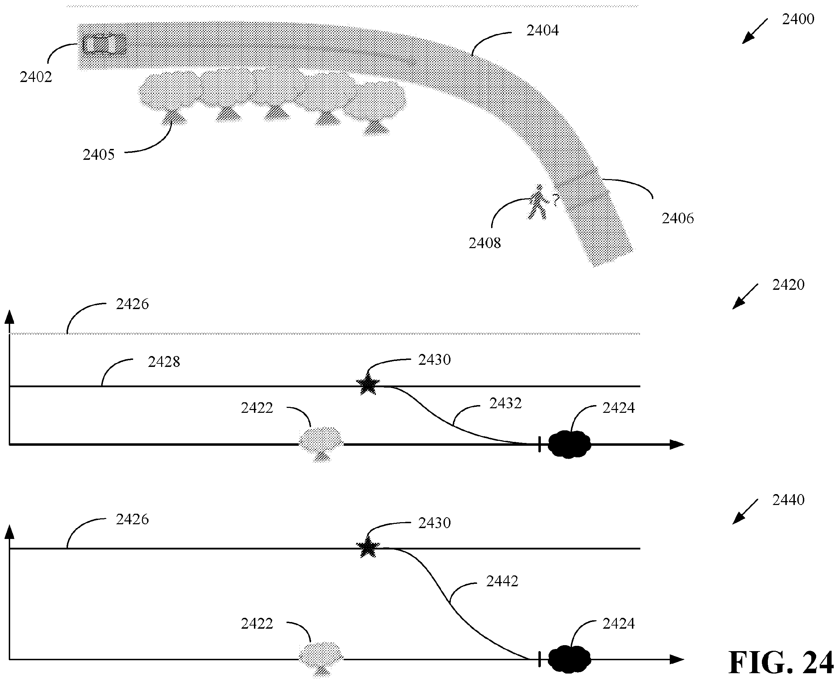

FIG. 24 is an example of a scene 2400 that includes occluded objects. The scene 2400 illustrates that an AV 2402 is traveling on a road 2404 that curves. The road 2404 includes a hazard 2406 (or equivalently, a location that might include a hazard). The hazard 2406 can be identified using HD map data, such as the HD map data 510 of FIG. 10. The hazard 2406 can be, for example, a crosswalk, a stop sign, a traffic signal, or some type of hazard that would necessitate that the AV 2402 perform a maneuver to avoid colliding with, or with an object at, the hazard 2406. In the scene 2400, the hazard 2406 is shown as being a crosswalk.

The sensors of the AV 2402 cannot see (i.e., perceive) whether a person 2408 is at the crosswalk because the view of the sensors of the AV 2402 is obstructed by trees 2405. As such, the AV cannot early detect the presence of the person 2408.

In a naive approach 2420, as the trajectory planner of the AV 2402 determines that early detection is not possible (e.g., due to the occlusion), the trajectory planner can slow the AV 2402 down ahead of time so that a (late) detection can be accommodated by a normal deceleration. That is, instead of operating the AV 2402 at a speed limit 2426, the AV 2402 can be operated at a lower speed 2428 so that, when the AV 2402 is beyond the occlusion (e.g., the trees 2405) at a time 2422, and detects the person 2408 at a time 2430, the trajectory planner can, for example, decelerate (at a normal rate) the AV according to a speed profile 2432 so that the AV 2402 can stop at a time 2424 before the hazard.

However, speed plans with only normal decelerations may feel conservative to an occupant of the AV 2402 and/or other road users (such as other vehicles following the AV 2402). In order to speed up the AV, the trajectory planner can plan for hard decelerations for unlikely blockages. In an aggressive approach 2440, the AV 2402 can be operated at the speed limit 2426. However, if the person 2408 is detected at time 2430, an aggressive deceleration speed plan 2442 can bring the AV 2402 to a stop before colliding with the hazard at a time 2424. An aggressive deceleration speed plan may also be undesirable to occupants of the AV and/or other road users.

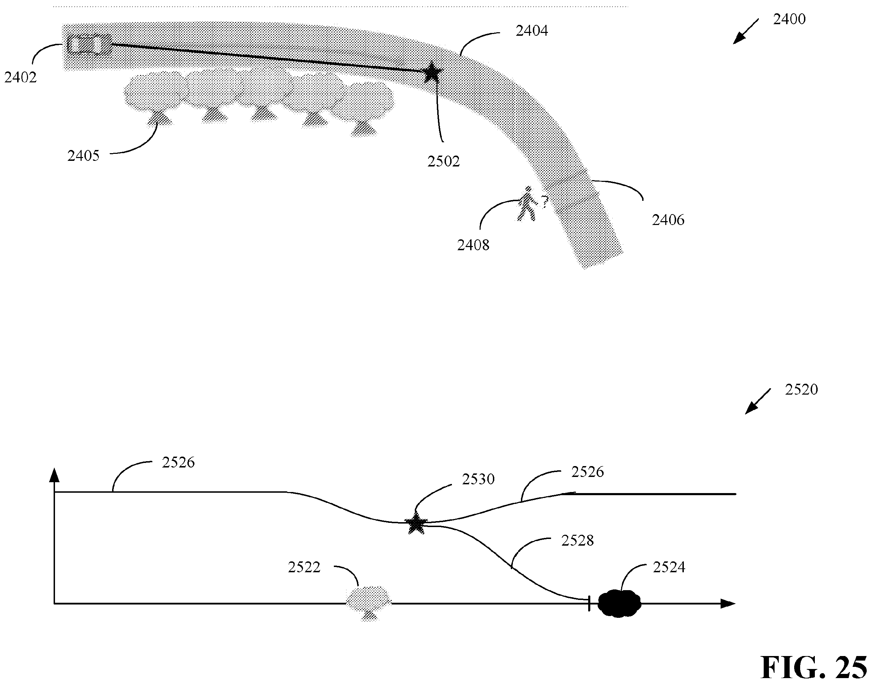

FIG. 25 is an illustration of contingency planning for potentially occluded objects according to implementations of this disclosure. The scene 2400 of FIG. 24 and its elements are included in FIG. 25 for convenience. A contingency approach 2520 illustrates a contingency plan 2526. The contingency plan 2526 plans (e.g., accounts) for the possibility that a hazard might materialize in an occluded portion of the road. The contingency plan 2526 is such that the AV 2402 is slowed down only enough so that if the hazard materializes (e.g., the person 2408 is finally detected at the crosswalk or some other blockage is detected after the AV 2402 passes the occlusion 2522) at a time 2530, an emergency deceleration maneuver 2528 can be performed so that the AV 2402 does not collide with the hazard. In an example, the hazard may be traffic that is not moving at the speed limit. As such, the emergency deceleration maneuver 2528 can be such that the AV 2402 can be slowed to the velocity of the hazard in the longitudinal direction, $V_L$ to avoid the object at time 2524.

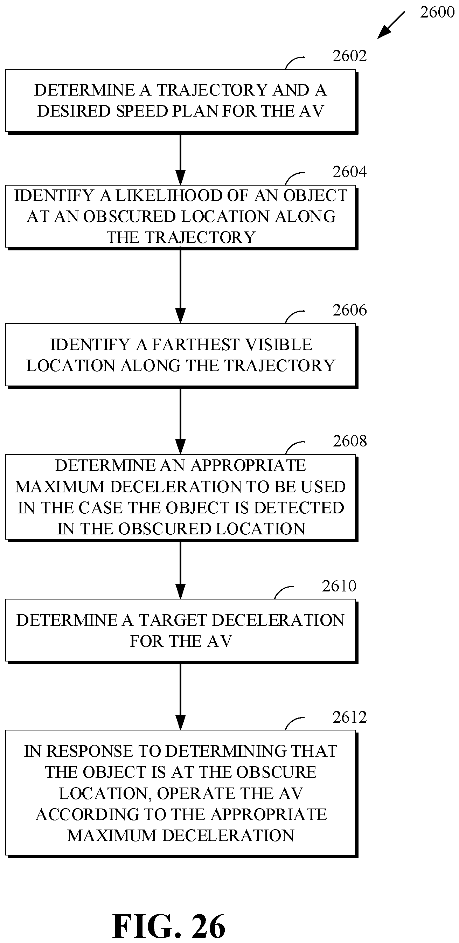

FIG. 26 is a flowchart diagram of a process 2600 for contingency planning for an autonomous vehicle (AV) according to implementations of this disclosure and according to the claimed invention. Again, autonomous driving as used herein, should be understood to encompass a vehicle that includes an advanced driver assist system (ADAS). At least some steps of the process 2600 can be executed by a trajectory planner, such as the trajectory planner 408 of FIG. 4, the trajectory planner 500 of FIG. 5, or the planning module 2206 of FIG. 22. The process 2600 can be stored as executable instructions in a memory, such as the memory 122 of FIG. 1. The executable instructions can be executed by a processor, such as the processor 120 of FIG. 1. The process 2600 can be executed by an apparatus (e.g., an autonomous vehicle), such as the vehicle 100 of FIG. 1.

The process 2600 can generate a contingency speed plan for the AV based on a likelihood that an object is at an obscured location along the trajectory of the AV. The contingency speed plan can be as described with respect to the contingency plan 2526 of FIG. 25. That is, the contingency speed plan is such that the AV can be operated so as to avoid a collision with the occluded object, if indeed the object is at the occluded location. As compared to a naive speed plan (as described with respect to the naive approach 2420 of FIG. 24), which determines a smooth deceleration plan, an emergency deceleration maneuver may still be required to avoid a collision with the object. However, the emergency deceleration maneuver is not as drastic as one that may be required under an aggressive speed plan, such as the one described with respect to the aggressive approach 2440 of FIG. 24. It is noted that an aggressive approach may not actually result the AV avoiding a collision with the object, if the object were present at the occluded location.

At 2602, the process 2600 determines (e.g., calculated, etc.) a trajectory and a desired speed plan for the AV, as described with respect to the trajectory planner 2222 of FIG. 22.

At 2604, the process 2600 identifies a likelihood of an object at an obscured location along the trajectory. In an example, the obscured location along the trajectory can be identified based on map data. The map data can be the map data 510 of FIG. 5. In an example, the obscured location can be a crosswalk. In an example, the obscured location can be identified based on identifying, using the map data, a traffic sign (e.g., a stop light, a stop sign, a yield sign, etc.) at the obscured location. In an example, the obscured location can be determined based on historical traffic information at the obscured location. For example, based on historical traffic information, it can be determined that a traffic backup may exist at the obscured location.

The likelihood of a blockage (i.e., that an object is at the obscured location) can depend on the current time of day (i.e., the time of the day that the AV is expected to arrive at the obscured location). For example, if the obscured location includes a school crossing and the current time of day is 8:00 AM on a weekday, then the likelihood is (very) high that children may be crossing; on the other hand, the likelihood is very close to zero on a weekend or a holiday. For example, if the obscured location includes a traffic sign, and the time of day is between 4: 00-6:00 PM (i.e., rush hour), then the likelihood is very high that a traffic backup may exist at the obscured location; on the other hand, the likelihood of a traffic backup is much lower at 10:00 AM. The likelihood can be an ordinal value (e.g., low, medium, high) or a sliding scale value (e.g., from 0 to 100) and can be calculated based on several factors, such as the time of day, whether a crosswalk exists, whether a traffic sign exits, more factors, fewer factors, of a combination thereof.

At 2606, the process 2600 identifies a farthest visible location along the trajectory. The farthest visible location can be used to infer the first location along the current lane that is occluded from AV sensors. The farthest visible location is a location along the trajectory such that, if an object were at the farthest visible location, the AV would be capable of detecting the object. The ability to detect the object in a location can be computed based on detection of the drivable area, sensor limitations (e.g., sensor range, sensor resolution, etc.), occlusions (e.g., trees, bushes, other road users, etc.), weather conditions (e.g., snow, fog, rain, etc.), other factors that limit the detection range, or a combination thereof. Referring to FIG. 25, the farthest visible location can be a location 2502.

At 2608, the process 2600 determines (e.g., calculates, etc.) an appropriate maximum deceleration. The appropriate maximum deceleration is to be used in the case the object is detected at the obscured location.

At 2610, the process 2600 determines (e.g., calculates, selects, etc.) a target deceleration for the AV. The target deceleration is such that operating the AV according to the target deceleration from the farthest visible location to the obscured location prevents the AV from colliding with the object. That is, the target deceleration for the AV is such that operating the AV according to the target deceleration guarantees that if the object were detected at the obscured location, the AV would be capable of stopping in time (or following) using the appropriate maximum deceleration. In an example, preventing the AV from colliding with the object can mean bringing the AV to a stop before the object. In another example, preventing the AV from colliding with the object can mean setting the speed to the AV to a following speed (i.e., to the longitudinal speed $V_L$ of the object).

In an example, the target deceleration for the AV can be determined based at least in part on one of the likelihood of the object being at the obscured location, a nominal deceleration rate, or a maximum deceleration rate of the AV.

For example, if the likelihood is close to 0% (such as in the case of determining whether there is an obscured traffic backup on a Sunday at 2:00 AM), then the target deceleration can be the same or close to the target deceleration according to an aggressive speed plan (as described with respect to the aggressive approach 2440 of FIG. 24). For example, if the likelihood is close to 100% (such as in the case of determining whether there is an obscured traffic backup on a Thursday at 4:30 PM), then the target deceleration can be the same or close to the target deceleration according to a naive speed plan (as described with respect to the naive approach 2420 of FIG. 24).

In an example, the maximum deceleration rate of the AV can be determined based on at least one of parameters of the AV, a road topography, or road conditions.

At 2612, the process 2600 operates the AV according to the target deceleration of the AV, in response to determining that the object is at the obscured location.

In an example, the process 2600 can include, in response to determining (such as when the obscured location becomes visible) that the object is not at the obscured location, operating the AV according to the desired speed profile. The process 2600 can also include operating the AV according to a maximum speed plan from a current location to the farthest visible location so that the AV can be operated according to the target deceleration between the farthest visible location to the obscured location. The maximum speed can be based calculated based on a reaction time of the AV and the target deceleration. The reaction time is a time that compensates for the distance travelled between when an object enters the view of the AV sensors and when the AV begins to decelerate due to updated deceleration values.

Another aspect of the implementations according to this disclosure is a process for estimating a potential occluded hazard and the distance to travel to the hazard. The process can include estimating where an occluded object could be, the occluded object could be an obscured location; calculating a distance along the road to the obscured location; estimating a likelihood of the object being at the obscured location; computing a maximum deceleration of the AV to be used in the case that the object is in fact in the obscured location; computing a target deceleration to be followed prior to confirming the existence of the occluded object; computing the resulting contingency speed plan that guarantees that if the object were detected, the AV would be capable of following the maximum deceleration to stop in time; and operating the AV according to the maximum speed.

Estimating the allowed stopping distance can include computing the farthest visible location on a path of an AV; and computing a distance along the path to the farthest visible location.

Estimating the likelihood of the object at the obscured location can be based on determining whether there is a crosswalk at the obscured location, determining a proximity of the AV to a traffic sign (at the obscured location), and/or the time of day.

Computing the maximum deceleration can be based on parameters affecting the maneuverability and/or the ability of the AV to stop or be slowed down. The parameters affecting the maneuverability of the AV can include parameters of the AV (e.g., mass, load, etc.), the road topography (whether there are slopes, inclines, etc.), and the road conditions (e.g., gravel, snow, rain, etc.).

Computing the target deceleration can be based on the likelihood of the object, a nominal acceleration rate of the AV, and/or the maximum deceleration limit. Computing the maximum speed can be based on a reaction time of the AV and/or the target deceleration.

As used herein, the terminology "driver" or "operator" may be used interchangeably. As used herein, the terminology "brake" or "decelerate" may be used interchangeably. As used herein, the terminology "computer" or "computing device" includes any unit, or combination of units, capable of performing any method, or any portion or portions thereof, disclosed herein.

As used herein, the terminology "instructions" may include directions or expressions for performing any method, or any portion or portions thereof, disclosed herein, and may be realized in hardware, software, or any combination thereof. For example, instructions may be implemented as information, such as a computer program, stored in memory that may be executed by a processor to perform any of the respective methods, algorithms, aspects, or combinations thereof, as described herein. In some implementations, instructions, or a portion thereof, may be implemented as a special-purpose processor or circuitry that may include specialized hardware for carrying out any of the methods, algorithms, aspects, or combinations thereof, as described herein. In some implementations, portions of the instructions may be distributed across multiple processors on a single device, or on multiple devices, which may communicate directly or across a network, such as a local area network, a wide area network, the Internet, or a combination thereof.

As used herein, the terminology "example," "embodiment," "implementation," "aspect," "feature," or "element" indicate serving as an example, instance, or illustration. Unless expressly indicated otherwise, any example, embodiment, implementation, aspect, feature, or element is independent of each other example, embodiment, implementation, aspect, feature, or element and may be used in combination with any other example, embodiment, implementation, aspect, feature, or element.

As used herein, the terminology "determine" and "identify," or any variations thereof, includes selecting, ascertaining, computing, looking up, receiving, determining, establishing, obtaining, or otherwise identifying or determining in any manner whatsoever using one or more of the devices shown and described herein.

As used herein, the terminology "or" is intended to mean an inclusive "or" rather than an exclusive "or." That is, unless specified otherwise or clearly indicated otherwise by the context, "X includes A or B" is intended to indicate any of the natural inclusive permutations thereof. If X includes A; X includes B; or X includes both A and B, then "X includes A or B" is satisfied under any of the foregoing instances. In addition, the articles "a" and "an" as used in this application and the appended claims should generally be construed to mean "one or more" unless specified otherwise or clear from the context to be directed to a singular form.

Further, for simplicity of explanation, although the figures and descriptions herein may include sequences or series of operations or stages, elements of the methods disclosed herein may occur in various orders or concurrently. Additionally, elements of the methods disclosed herein may occur with other elements not explicitly presented and described herein. Furthermore, not all elements of the methods described herein may be required to implement a method in accordance with this disclosure. Although aspects, features, and elements are described herein in particular combinations, each aspect, feature, or element may be used independently or in various combinations with or without other aspects, features, and/or elements.

While the disclosed technology has been described in connection with certain embodiments, it is to be understood that the disclosed technology according to the invention is not to be limited to the disclosed embodiments but, on the contrary, is intended to cover various modifications and equivalent arrangements included within the scope of the appended claims.

**Claims**

1. A method for contingency planning for an autonomous vehicle, or AV, (302, 611, 912, 1002, 1102, 1202, 1402, 1502, 1602, 1702, 1710, 1720, 1734, 1902, 2002, 2102, 2182, 2402) comprising:

   determining a trajectory and a desired speed plan for the AV; and
   identifying a likelihood of an object at an obscured location along the trajectory;

   the method being **characterized by**:

   identifying a farthest visible location along the trajectory, wherein the farthest visible location is a location (2502) along the trajectory such that the AV would be capable of detecting the object at said location;
   determining an appropriate maximum deceleration to be used in a case that the object is detected at the obscured location;
   determining a target deceleration for the AV, wherein operating the AV according to the target deceleration guarantees that if the object were detected at the obscured location, the AV would be capable of stopping in time using the appropriate maximum deceleration; and
   in response to determining that the object is at the obscure location, operating the AV according to an appropriate deceleration of the AV that is less than or equal to the appropriate maximum deceleration.

2. The method of claim 1, further comprising:
   operating the AV according to a contingency speed plan from a current location to the farthest visible location so that the AV can be guaranteed to be capable of stopping in case the object is detected at the obscured location.

3. The method of claim 1, further comprising:
   in response to determining that the object is not at the obscure location, operating the AV according to the desired speed plan.

4. The method of claim 1, wherein the likelihood of the object at the obscured location along the trajectory is identified using map data or identified based on a current time of day.

5. The method of claim 4, wherein the likelihood of the object at the obscured location along the trajectory is identified based on identifying, using the map data, a crosswalk at the obscured location or a traffic sign at the obscured location.

6. The method of claim 1, wherein the target deceleration for the AV is computed based at least in part on one of the likelihood of the object being at the obscured location, a nominal deceleration rate, or a maximum deceleration rate of the AV

7. The method of claim 6, wherein the maximum deceleration rate of the AV is determined based on at least one of parameters of the AV, a road topography, or road conditions.

8. A system for contingency planning for an autonomous vehicle, or AV, (302, 611, 912, 1002, 1102, 1202, 1402, 1502, 1602, 1702, 1710, 1720, 1734, 1902, 2002, 2102, 2182, 2402) comprising:

   a memory (122); and
   a processor (120), the memory (122) including instructions executable by the processor (120) to:

   determine a trajectory and a desired speed plan for the AV;
   identify a likelihood of an object at an obscured location along the trajectory;

   **characterized in that** the memory (122) includes further instructions executable by the processor (120) to:

   identify a farthest visible location along the trajectory, wherein the farthest visible location is a location (2502) along the trajectory such that the AV would be capable of detecting the object at said location;
   determine an appropriate maximum deceleration to be used in a case that the object is detected at the obscured location;
   determine a target deceleration for the AV, wherein operating the AV according to the target deceleration guarantees that if the object were detected at the obscured location, the AV would be capable of stopping in time using the appropriate maximum deceleration; and
   in response to determining that the object is at the obscure location, operate the AV according to an appropriate deceleration of the AV that is less than or equal to the appropriate maximum deceleration.

9. The system of claim 8, wherein the memory (122) includes further instructions executable by the processor (120) to: operate the AV according to a contingency speed plan from a current location to the farthest visible location so that the AV can be guaranteed to be capable of stopping in case the object is detected at the obscured location.

10. The system of claim 8, wherein the memory (122) includes further instructions executable by the processor (120) to: in response to determining that the object is not at the obscure location, operate the AV according to the desired speed plan.

11. The system of claim 8, wherein the likelihood of the object at the obscured location along the trajectory is identified using map data or identified based on a current time of day.

12. The system of claim 11, wherein the likelihood of the object at the obscured location along the trajectory is identified based on identifying, using the map data, a crosswalk at the obscured location or a traffic sign at the obscured location.

13. The system of claim 8, wherein the target deceleration for the AV is computed based at least in part on one of the likelihood of the object being at the obscured location, a nominal deceleration rate, or a maximum deceleration rate of the AV

14. The system of claim 13, wherein the maximum deceleration rate of the AV is determined based on at least one of parameters of the AV, a road topography, or road conditions.

**Patentansprüche**

1. Verfahren zur Notfallplanung für ein autonomes Fahrzeug, oder AV (302, 611, 912, 1002, 1102, 1202, 1402, 1502, 1602, 1702, 1710, 1720, 1734, 1902, 2002, 2102, 2182, 2402), die folgenden Schritte aufweisend:

   Bestimmen einer Trajektorie und eines gewünschten Geschwindigkeitsplans für das AV; und
   Identifizieren einer Wahrscheinlichkeit eines Objekts an einem verdeckten Standort entlang der Trajektorie;

   wobei das Verfahren **gekennzeichnet ist durch**:

Identifizieren eines am weitesten sichtbaren Standorts entlang der Trajektorie, wobei der am weitesten sichtbare Standort ein Standort (2502) entlang der Trajektorie ist, so dass das AV in der Lage wäre, das Objekt an diesem Standort zu detektieren;

Bestimmen einer geeigneten maximalen Verzögerung, die in einem Fall verwendet werden soll, in dem das Objekt an dem verdeckten Standort detektiert wird;

Bestimmen einer Zielverzögerung für das AV, wobei das Betreiben des AV gemäß der Zielverzögerung garantiert, dass das AV, wenn das Objekt an dem verdeckten Standort detektiert würde, in der Lage wäre, unter Verwendung der geeigneten maximalen Verzögerung rechtzeitig anzuhalten; und

als Reaktion auf die Bestimmung, dass sich das Objekt an dem verdeckten Standort befindet, Betreiben des AV gemäß einer geeigneten Verzögerung des AV, die kleiner oder gleich der geeigneten maximalen Verzögerung ist.

2. Das Verfahren nach Anspruch 1, ferner aufweisend:
Betreiben des AV gemäß einem Notfallgeschwindigkeitsplan von einem aktuellen Standort zu dem am weitesten sichtbaren Standort, so dass garantiert werden kann, dass das AV anhalten kann, falls das Objekt an dem verdeckten Standort detektiert wird.

3. Das Verfahren nach Anspruch 1, ferner aufweisend:
als Reaktion auf die Bestimmung, dass sich das Objekt nicht an dem verdeckten Standort befindet, Betreiben des AV gemäß dem gewünschten Geschwindigkeitsplan.

4. Das Verfahren nach Anspruch 1, wobei die Wahrscheinlichkeit, dass sich das Objekt an dem verdeckten Standort entlang der Trajektorie befindet, unter Verwendung von Kartendaten oder basierend auf einer aktuellen Tageszeit identifiziert wird.

5. Das Verfahren nach Anspruch 4, wobei die Wahrscheinlichkeit, dass sich das Objekt an dem verdeckten Standort entlang der Trajektorie befindet, basierend auf der Identifizierung eines Zebrastreifens an dem verdeckten Standort oder eines Verkehrszeichens an dem verdeckten Standort unter Verwendung der Kartendaten identifiziert wird.

6. Das Verfahren nach Anspruch 1, wobei die Zielverzögerung für das AV zumindest teilweise basierend auf einer der Wahrscheinlichkeiten, dass sich das Objekt an dem verdeckten Standort befindet, einer nominalen Verzögerungsrate oder einer maximalen Verzögerungsrate des AV berechnet wird.

7. Das Verfahren nach Anspruch 6, wobei die maximale Verzögerungsrate des AV basierend auf mindestens einem der Parameter des AV, einer Straßentopographie oder Straßenbedingungen bestimmt wird.

8. System zur Notfallplanung für ein autonomes Fahrzeug, oder AV, (302, 611, 912, 1002, 1102, 1202, 1402, 1502, 1 602, 1702, 1710, 1720, 1734, 1902, 2002, 2102, 2182, 2402) aufweisend:

einen Speicher (122); und
einen Prozessor (120), wobei der Speicher (122) Anweisungen aufweist, die durch den Prozessor (120) ausführbar sind, um:

Bestimmen einer Trajektorie und eines gewünschten Geschwindigkeitsplans für das AV;
Identifizieren einer Wahrscheinlichkeit eines Objekts an einem verdeckten Standort entlang der Trajektorie;

**dadurch gekennzeichnet, dass** der Speicher (122) ferner Anweisungen aufweist, die durch den Prozessor (120) ausführbar sind, um:

Identifizieren eines am weitesten sichtbaren Standorts entlang der Trajektorie, wobei der am weitesten sichtbare Standort ein Standort (2502) entlang der Trajektorie ist, so dass das AV in der Lage wäre, das Objekt an dem Standort zu detektieren;

Bestimmen einer geeigneten maximalen Verzögerung, die in einem Fall verwendet werden soll, in dem das Objekt an dem verdeckten Standort detektiert wird;

Bestimmen einer Zielverzögerung für das AV, wobei das Betreiben des AV gemäß der Zielverzögerung garantiert, dass das AV, wenn das Objekt an dem verdeckten Standort detektiert würde, in der Lage wäre, unter Verwendung der geeigneten maximalen Verzögerung rechtzeitig anzuhalten; und

als Reaktion auf die Bestimmung, dass sich das Objekt an dem verdeckten Standort befindet, Betreiben des AV gemäß einer geeigneten Verzögerung des AV, die kleiner oder gleich der geeigneten maximalen Verzögerung ist.

**9.** Das System nach Anspruch 8, wobei der Speicher (122) ferner Anweisungen aufweist, die durch den Prozessor (120) ausführbar sind, zum:
Betreiben des AV gemäß einem Notfallgeschwindigkeitsplan von einem aktuellen Standort zu dem am weitesten sichtbaren Standort, so dass garantiert werden kann, dass der AV anhalten kann, falls das Objekt an dem verdeckten Standort detektiert wird.

**10.** Das System nach Anspruch 8, wobei der Speicher (122) ferner Anweisungen aufweist, die durch den Prozessor (120) ausführbar sind, zum:
als Reaktion auf die Bestimmung, dass sich das Objekt nicht an dem verdeckten Standort befindet, Betreiben des AV gemäß dem gewünschten Geschwindigkeitsplan.

**11.** Das System nach Anspruch 8, wobei die Wahrscheinlichkeit, dass sich das Objekt an dem verdeckten Standort entlang der Trajektorie befindet, unter Verwendung von Kartendaten oder basierend auf einer aktuellen Tageszeit identifiziert wird.

**12.** Das System nach Anspruch 11, wobei die Wahrscheinlichkeit, dass sich das Objekt an dem verdeckten Standort entlang der Trajektorie befindet, basierend auf der Identifizierung eines Zebrastreifens an dem verdeckten Standort oder eines Verkehrszeichens an dem verdeckten Standort unter Verwendung der Kartendaten identifiziert wird.

**13.** Das System nach Anspruch 8, wobei die Zielverzögerung für das AV zumindest teilweise basierend auf einer der Wahrscheinlichkeiten, dass sich das Objekt an dem verdeckten Standort befindet, einer nominalen Verzögerungsrate oder einer maximalen Verzögerungsrate des AV berechnet wird.

**14.** System nach Anspruch 13, wobei die maximale Verzögerungsrate des AV basierend auf mindestens einem der Parameter des AV, einer Straßentopographie oder Straßenbedingungen bestimmt wird.

**Revendications**

**1.** Procédé de planification de mesures d'urgence pour un véhicule autonome, ou AV, (302, 611, 912, 1002, 1102, 1202, 1402, 1502, 1602, 1702, 1710, 1720, 1734, 1902, 2002, 2102, 2182, 2402) comprenant :

la détermination d'une trajectoire et d'un plan de vitesse souhaité pour l'AV ; et
l'identification d'une probabilité d'un objet à un emplacement occulté le long de la trajectoire ;

le procédé étant **caractérisé par** :

l'identification d'un emplacement visible le plus éloigné le long de la trajectoire, dans lequel l'emplacement visible le plus éloigné est un emplacement (2502) le long de la trajectoire de sorte que l'AV serait capable de détecter l'objet audit emplacement ;
la détermination d'une décélération maximale appropriée à utiliser dans un cas où l'objet est détecté à l'emplacement occulté ;
la détermination d'une décélération cible pour l'AV, dans lequel le fonctionnement de l'AV selon la décélération cible garantit que si l'objet était détecté à l'emplacement occulté, l'AV serait capable de s'arrêter à temps en utilisant la décélération maximale appropriée ; et
en réponse à la détermination que l'objet est à l'emplacement occulté, le fonctionnement de l'AV selon une décélération appropriée de l'AV qui est inférieure ou égale à la décélération maximale appropriée.

**2.** Procédé selon la revendication 1, comprenant en outre :
le fonctionnement de l'AV selon un plan de vitesse de mesures d'urgence à partir d'un emplacement actuel jusqu'à l'emplacement visible le plus éloigné, de sorte qu'il soit garanti que l'AV puisse être capable de s'arrêter si l'objet est détecté à l'emplacement occulté.

**3.** Procédé selon la revendication 1, comprenant en outre :
en réponse à la détermination que l'objet n'est pas à l'emplacement occulté, le fonctionnement de l'AV selon plan de vitesse souhaité.

**4.** Procédé selon la revendication 1, dans lequel la probabilité de l'objet à l'emplacement occulté le long de la trajectoire est identifiée à l'aide de données cartographiques ou identifiée sur la base de l'heure actuelle du jour.

5. Procédé selon la revendication 4, dans lequel la probabilité de l'objet à l'emplacement occulté le long de la trajectoire est identifiée sur la base de l'identification, à l'aide des données cartographiques, d'un passage piéton à l'emplacement occulté ou d'un panneau de signalisation à l'emplacement occulté.

6. Procédé selon la revendication 1, dans lequel la décélération cible pour l'AV est calculée sur la base, au moins en partie, d'un élément parmi la probabilité que l'objet soit à l'emplacement occulté, un taux de décélération nominal, ou un taux de décélération maximal de l'AV.

7. Procédé selon la revendication 6, dans lequel le taux de décélération maximal de l'AV est déterminé sur la base d'au moins un élément parmi des paramètres de l'AV, une topographie de la route ou des conditions de la route.

8. Système de planification de mesures d'urgence pour un véhicule autonome, ou AV, (302, 611, 912, 1002, 1102, 1202, 1402, 1502, 1602, 1702, 1710, 1720, 1734, 1902, 2002, 2102, 2182, 2402) comprenant :

une mémoire (122) ; et
un processeur (120), la mémoire (122) incluant des instructions exécutables par le processeur (120) pour :

déterminer une trajectoire et un plan de vitesse souhaité pour l'AV ;
identifier une probabilité d'un objet à un emplacement occulté le long de la trajectoire ;

**caractérisé en ce que** la mémoire (122) inclut des instructions supplémentaires exécutables par le processeur (120) pour :

identifier un emplacement visible le plus éloigné le long de la trajectoire, dans lequel l'emplacement visible le plus éloigné est un emplacement (2502) le long de la trajectoire de sorte que l'AV serait capable de détecter l'objet audit emplacement ;
déterminer une décélération maximale appropriée à utiliser dans un cas où l'objet est détecté à l'emplacement occulté ;
déterminer une décélération cible pour l'AV, dans lequel le fonctionnement de l'AV selon la décélération cible garantit que si l'objet était détecté à l'emplacement occulté, l'AV serait capable de s'arrêter à temps en utilisant la décélération maximale appropriée ; et
en réponse à la détermination que l'objet est à l'emplacement occulté, faire fonctionner l'AV selon une décélération appropriée de l'AV qui est inférieure ou égale à la décélération maximale appropriée.

9. Système selon la revendication 8, dans lequel la mémoire (122) inclut des instructions supplémentaires exécutables par le processeur (120) pour :
faire fonctionner l'AV selon un plan de vitesse de mesures d'urgence à partir d'un emplacement actuel jusqu'à l'emplacement visible le plus éloigné, de sorte qu'il soit garanti que l'AV puisse être capable de s'arrêter si l'objet est détecté à l'emplacement occulté.

10. Système selon la revendication 8, dans lequel la mémoire (122) inclut des instructions supplémentaires exécutables par le processeur (120) pour :
en réponse à la détermination que l'objet n'est pas à l'emplacement occulté, faire fonctionner l'AV selon le plan de vitesse souhaité.

11. Système selon la revendication 8, dans lequel la probabilité de l'objet à l'emplacement occulté le long de la trajectoire est identifiée à l'aide de données cartographiques ou identifiée sur la base de l'heure actuelle du jour.

12. Système selon la revendication 11, dans lequel la probabilité de l'objet à l'emplacement occulté le long de la trajectoire est identifiée sur la base de l'identification, à l'aide des données cartographiques, d'un passage piéton à l'emplacement occulté ou d'un panneau de signalisation à l'emplacement occulté.

13. Système selon la revendication 8, dans lequel la décélération cible pour l'AV est calculée sur la base, au moins en partie, d'un élément parmi la probabilité que l'objet soit à l'emplacement occulté, un taux de décélération nominal ou un taux de décélération maximal de l'AV.

**14.** Système selon la revendication 13, dans lequel le taux de décélération maximal de l'AV est déterminé sur la base d'au moins un élément parmi des paramètres de l'AV, une topographie de la route ou des conditions de la route.

**FIG. 1**

**FIG. 2**

EP 4 004 770 B1

**FIG. 3**

EP 4 004 770 B1

**FIG. 4**

FIG. 5

**FIG. 6**

EP 4 004 770 B1

FIG. 7

800

```
                    ┌─────────────────────────────────┐ ⌐ 810
                    │   IDENTIFY NEARBY OBJECTS       │
                    └─────────────────────────────────┘
                                    │
                                    ▼
                    ┌─────────────────────────────────┐ ⌐ 820
                    │    EXTRACT DRIVABLE AREA        │
                    └─────────────────────────────────┘
                                    │
                                    ▼
                    ┌─────────────────────────────────┐ ⌐ 830
                    │ ADJUST DRIVABLE AREA FOR STATIC OBJECTS │
                    └─────────────────────────────────┘
                                    │
                                    ▼
                    ┌─────────────────────────────────┐ ⌐ 840
                    │ ADJUST DISCRETE-TIME SPEED PLAN FOR │
                    │         STATIC OBJECTS           │
                    └─────────────────────────────────┘
                                    │
                                    ▼
                    ┌─────────────────────────────────┐ ⌐ 850
                    │ IDENTIFY PATHS OF NEARBY DYNAMIC │
                    │           OBJECTS                │
                    └─────────────────────────────────┘
                                    │
                                    ▼
                    ┌─────────────────────────────────┐ ⌐ 860
                    │  ADJUST DRIVABLE AREA FOR DYNAMIC │
                    │           OBJECTS                │
                    └─────────────────────────────────┘
                                    │
                                    ▼
                    ┌─────────────────────────────────┐ ⌐ 870
                    │ ADJUST DISCRETE-TIME SPEED PLAN FOR │
                    │        DYNAMIC OBJECTS           │
                    └─────────────────────────────────┘
```

# FIG. 8

**FIG. 9**

EP 4 004 770 B1

FIG. 10

FIG. 11

FIG. 12

1300

1310

ORGANIZE BOUNDARY POINTS INTO BINS

1320

CHECK BINNED BOUNDARIES AGAINST REFERENCE DRIVELINE

1320_2

ESTIMATE ACTUAL DRIVELINE

1320_4

IDENTIFY PASSABLE GAPS

1320_12

END

YES

1320_6

SINGLE GAP FOUND

NO

1320_8

DETAILED CHECK: SELECT LEFT/ RIGHT GAP OR BLOCKED

1320_10

LOOK-AHEAD DISTANCE CHECKED

FIG. 13

FIG. 14

FIG. 15

50

**FIG. 16**

**FIG. 17**

EP 4 004 770 B1

1800

1810

┌─────────────────────────────────────────┐
│ DETECT A FIRST OBJECT ALONG A REFERENCE  │
│              DRIVELINE                    │
└─────────────────────────────────────────┘

1820

┌─────────────────────────────────────────┐
│   RECEIVE A PREDICTED PATH OF THE FIRST  │
│                OBJECT                     │
└─────────────────────────────────────────┘

1830

┌─────────────────────────────────────────┐
│     DETERMINE AN ADJUSTED DRIVABLE AREA   │
└─────────────────────────────────────────┘

1840

┌─────────────────────────────────────────┐
│          DETERMINE A TRAJECTORY           │
└─────────────────────────────────────────┘

# FIG. 18

FIG. 19

EP 4 004 770 B1

FIG. 20

EP 4 004 770 B1

FIG. 21A

FIG. 21B

FIG. 21C

FIG. 21D

**FIG. 21E**

EP 4 004 770 B1

EP 4 004 770 B1

2200

2202

PERCEPTION

2204

PREDICITON

2206

TRAJECTORY
PLANNER
2222

HAZARD
DETECTION
2224

CONSTRAINT
MODIFY
2226

2208

TRAJECTORY
FOLLOWER

# FIG. 22

59

2300

2302

DETERMINE A NOMINAL TRAJECTORY
FOR THE AV

2304

DETECT A HAZARD OBJECT

2306

DETERMINE A HAZARD ZONE FOR THE
HAZARD OBJECT

2308

DETERMINE A TIME OF ARRIVAL OF
THE AV AT THE HAZARD ZONE

2310

DETERMINE A CONTINGENCY
TRAJECTORY FOR THE AV

2312

CONTROL THE AV ACCORDING TO THE
CONTINGENCY TRAJECTORY

2314

IN RESPONSE TO THE HAZARD OBJECT
INTRUDING INTO THE PATH OF THE AV,
CONTROL THE AV TO PERFORM A
MANEUVER TO AVOID THE HAZARD
OBJECT

# FIG. 23

2400

2404

2406

2408

2402

2405

2420

2426

2428

2430

2432

2422

2424

2440

2426

2430

2442

2422

2424

**FIG. 24**

FIG. 25

2600

2602

DETERMINE A TRAJECTORY AND A
DESIRED SPEED PLAN FOR THE AV

2604

IDENTIFY A LIKELIHOOD OF AN OBJECT
AT AN OBSCURED LOCATION ALONG
THE TRAJECTORY

2606

IDENTIFY A FARTHEST VISIBLE
LOCATION ALONG THE TRAJECTORY

2608

DETERMINE AN APPROPRIATE
MAXIMUM DECELERATION TO BE USED
IN THE CASE THE OBJECT IS DETECTED
IN THE OBSCURED LOCATION

2610

DETERMINE A TARGET DECELERATION
FOR THE AV

2612

IN RESPONSE TO DETERMINING THAT
THE OBJECT IS AT THE OBSCURE
LOCATION, OPERATE THE AV
ACCORDING TO THE APPROPRIATE
MAXIMUM DECELERATION

**FIG. 26**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170336795 A1
- WO 2018225575 A1
- EP 3091370 A
- US 62633414